# EUROPEAN PATENT APPLICATION

(11) **EP 4 424 745 A1**
(43) Date of publication of application: **04.09.2024**
(21) Application number: 22887199.2
(22) Date of filing: 28.10.2022
(51) Int. Cl.: C08G 65/336, B32B 9/00, C09D 183/08, C09K 3/18

(54) **COMPOUND, COMPOSITION, SURFACE TREATMENT AGENT, COATING LIQUID, ARTICLE, AND METHOD FOR MANUFACTURING ARTICLE**

(30) Priority: 29.10.2021 JP 2021178306
(71) Applicant: AGC INC., Chiyoda-ku, Tokyo 1008405 (JP)
(72) Inventor: TOMIYORI Yusuke, Tokyo 100-8405 (JP); NAGAI Yusuke, Tokyo 100-8405 (JP); IWASE Takuya, Tokyo 100-8405 (JP); WATANABE Koki, Tokyo 100-8405 (JP); ONO Hikaru, Tokyo 100-8405 (JP)
(74) Representative: Müller-Boré & Partner Patentanwälte PartG mbB
(86) International application number: PCT/JP2022/040513
(87) International publication number: WO 2023/074874

(57) **Abstract**

A compound, a composition, a surface treatment agent, and a coating liquid capable of forming a surface layer excellent in wear resistance, an article having a surface layer excellent in wear resistance, and a method for producing the article are provided. The compound has a fluoropolyether chain and a group represented by the following formula (g1).

*-R^{g1}-T^{g1} ··· (g1)

where R^{g1} is an alkylene group in which an atom having a connecting bond * may be an etheric oxygen atom and that may contain an etheric oxygen atom between carbon-carbon atoms, R^{g1} containing a carbon chain with at least 9 carbon atoms linked together, T^{g1} is - SiR^{a1}_{z1}R^{a2}_{3-z1}, and other symbols are as described in the specification.

## Description

### Technical Field

The present invention relates to a compound, a composition, a surface treatment agent, a coating liquid, an article, and a method for producing an article.

### Background Art

A fluorinated ether compound having a perfluoropolyether chain and a hydrolyzable silyl group is capable of forming on a surface of a substrate a surface layer having high lubricity, water/oil repellency, etc., and is thereby suitably used for a surface treatment agent. A surface treatment agent containing the fluorinated ether compound is used in an application where it is desired to maintain, for a long period of time, a performance (abrasion resistance) whereby water/oil repellency is less likely to be lowered even if the surface layer is rubbed repeatedly with fingers, and a performance (fingerprint stain removability) whereby a fingerprint adhering to the surface layer can be readily removed by wiping, for example, as a surface treatment agent for a member constituting a plane of a touch panel to be touched with fingers, a spectacle lens, a display of a wearable terminal, etc.

For example, Patent Literature 1 proposes a surface treatment agent containing a specific fluorinated silane compound, the surface treatment agent being used to form a highly-durable surface treatment layer which has water-repellency, oil-repellency, and the like.

### Citation List

### Patent Literature

[Patent Literature 1] International Patent Publication No. WO 2021/010105

### Summary of Invention

### Technical Problem

An object of the present invention is to provide a compound, a composition, a surface treatment agent, and a coating liquid capable of forming a surface layer excellent in wear resistance, an article including a surface layer with excellent wear resistance, and a method for manufacturing this article.

### Solution to Problem

The present invention provides a compound, a composition, a surface treatment agent, a coating liquid, an article, and a method for producing the article having structures shown in the following [1] to [12].

[1] A compound having a fluoropolyether chain and a group represented by the following formula (g1).

   *-R^{g1}-T^{g1} ... (g1)

   where
   R^{g1} is an alkylene group in which an atom having a connecting bond * may be an etheric oxygen atom and that may contain an etheric oxygen atom between carbon-carbon atoms, R^{g1} containing a carbon chain with at least 9 carbon atoms linked together,
   T^{g1} is -SiR^{a1}_{z1}R^{a2}_{3-z1},
   R^{a1} is a hydroxyl group or a hydrolyzable group, and when there are a plurality of R^{a1}'s, the plurality of R^{a1}'s may be the same as or different from each other,
   R^{a2} is a nonhydrolyzable group, and when there are a plurality of R^{a2}'s, the plurality of R^{a2}'s may be the same as or different from each other,
   z1 is an integer from 1 to 3, and
   * is a connecting bond bonded to the fluoropolyether chain directly or bonded to it via a linking group.
[2] The compound according to [1], in which the R^{g1} is a group represented by the following formula (g2).

   *-(O)ₐ₁-R^{g9}-** ... (g2)

   where
   R^{g9} is an alkylene group having at least 9 carbon atoms,
   a1 is 0 or 1,
   * is a connecting bond bonded to the fluoropolyether chain directly or bonded to it via a linking group, and
   ** is a connecting bond bonded to T^{g1} in the formula (g1).
[3] The compound according to [2], in which the R^{g9} is an alkylene group having at least 11 carbon atoms.
[4] The compound according to [2] or [3], in which the R^{g9} is an alkylene group having at most 19 carbon atoms.
[5] The compound according to any one of [2]-[4], in which the alkylene group in the R^{g9} is a linear alkylene group.
[6] A compound according to any one of claims [1] to [5] represented by the following formula (A1), the following formula (A2), or the following formula (A3).

   [R^{f1}-(OR^{f11})_{y1}-O-R¹]ⱼ-L¹-(R¹¹-T¹¹)ₓ₁ ... (A1)

   (T³¹-R³¹)ₓ₃-L³-R³-(OR^{f12})_{y2}-O-R²-L²-(R²¹-T²¹)ₓ₂ ... (A2)

   Q¹[-(OR^{f13})_{y3}-O-R⁴-L⁴-(R⁴¹-T⁴¹)ₓ₄]ᵣ₁ ... (A3)

   where
   R^{f1} is a fluoroalkyl group having 1 to 20 carbon atoms, and when there are a plurality of R^{f1}'s, the plurality of R^{f1}'s may be the same as or different from each other,
   R^{f11} is a fluoroalkylene group having 1 to 6 carbon atoms, and when there are a plurality of R^{f11}'s, the plurality of R^{f11}'s may be the same as or different from each other,
   R¹ is an alkylene group or a fluoroalkylene group, and when there are a plurality of R¹'s, the plurality of R¹'s may be the same as or different from each other,
   L¹ is a single bond or a j+x1 valent group that may contain N, O, S, or Si and may contain a branch point, and atoms bonded to R¹ and R¹¹ are each independently an N, O, S, or Si atom, a carbon atom constituting a branch point, or a carbon atom having a hydroxyl group or an oxo group (=O),
   R¹¹ is an alkylene group in which an atom bonded to L¹ may be an etheric oxygen atom and that may contain an etheric oxygen atom between carbon-carbon atoms, and when there are a plurality of R¹¹'s, the plurality of R¹¹'s may be the same as or different from each other, where at least one of the plurality of R¹¹'s has a carbon chain with at least 9 carbon atoms linked together,
   T¹¹ is -SiR^{a11}_{z11}R^{a12}_{3-z11}, and when there are a plurality of T¹¹'s, the plurality of T¹¹'s may be the same as or different from each other,
   R^{a11} is a hydroxyl group or a hydrolyzable group, and when there are a plurality of R^{a11}'s, the plurality of R^{a11}'s may be the same as or different from each other,
   R^{a12} is a nonhydrolyzable group, and when there are a plurality of R^{a12}'s, the plurality of R^{a12}'s may be the same as or different from each other,
   j is an integer of at least 1,
   z11 is an integer from 1 to 3,
   x1 is an integer of at least 1,
   y1 is an integer of at least 1, and when there are a plurality of y1's, the plurality of y1's may be the same as or different from each other,
   R^{f12} is a fluoroalkylene group having 1 to 6 carbon atoms, and when there are a plurality of R^{f12}'s, the plurality of R^{f12}'s may be the same as or different from each other,
   R² and R³ are each independently an alkylene group or a fluoroalkylene group,
   L² is a single bond or a 1+x2 valent group that may contain N, O, S, or Si and may contain a branch point, and atoms bonded to R² and R²¹ are each independently an N, O, S, or Si atom, a carbon atom constituting a branch point, or a carbon atom having a hydroxyl group or an oxo group (=O),
   L³ is a single bond or a 1+x3 valent group that may contain N, O, S, or Si and may contain a branch point, and atoms bonded to R³ and R³¹ are each independently an N, O, S, or Si atom, a carbon atom constituting a branch point, or a carbon atom having a hydroxyl group or an oxo group (=O),
   R²¹ is an alkylene group in which an atom adjacent to L² may be an etheric oxygen atom and that may contain an etheric oxygen atom between carbon-carbon atoms, and when there are a plurality of R²¹'s, the plurality of R²¹'s may be the same as or different from each other,
   R³¹ is an alkylene group in which an atom adjacent to L³ may be an etheric oxygen atom and that may contain an etheric oxygen atom between carbon-carbon atoms, and when there are a plurality of R³¹'s, the plurality of R³¹'s may be the same as or different from each other, where at least one of the plurality of R²¹'s or R³¹'s has a carbon chain with at least 9 carbon atoms linked together,
   T²¹ and T³¹ are each independently -SiR^{a21}_{z21}R^{a22}_{3-z21}, and when there are a plurality of T²¹'s or T³¹'s, the plurality of T²¹'s and T³¹'s may each independently be the same as or different from each other,
   R^{a21} is a hydroxyl group or a hydrolyzable group, and when there are a plurality of R^{a21}'s, the plurality of R^{a21}'s may be the same as or different from each other,
   R^{a22} is a nonhydrolyzable group, and when there are a plurality of R^{a22}'s, the plurality of R^{a22}'s may be the same as or different from each other,
   z21 is an integer from 1 to 3,
   x2 and x3 are each independently an integer of at least 1,
   y2 is an integer of at least 1,
   Q¹ is an r1 valent group having a branch point,
   R^{f13} is a fluoroalkylene group having 1 to 6 carbon atoms, and when there are a plurality of R^{f13}'s, the plurality of R^{f13}'s may be the same as or different from each other,
   R⁴ are each independently an alkylene group or a fluoroalkylene group, and when there are a plurality of R⁴'s, the plurality of R⁴'s may be the same as or different from each other,
   L⁴ is a single bond or a 1+x4 valent group which may contain N, O, S, or Si and may contain a branch point, atoms bonded to R⁴ and R⁴¹ are each independently an N, O, S, or Si atom, a carbon atom constituting a branch point, or a carbon atom having a hydroxyl group or an oxo group (=O), and when there a plurality of L⁴'s, the plurality of L⁴'s may be the same as or different from each other,
   R⁴¹ is an alkylene group in which an atom adjacent to L⁴ may be an etheric oxygen atom and that may contain an etheric oxygen atom between carbon-carbon atoms, and when there are a plurality of R⁴¹'s, the plurality of R¹¹'s may may be the same as or different from each other, where at least one of the plurality of R⁴¹'s contains a carbon chain with at least 9 carbon atoms linked together,
   T⁴¹ is -SiR^{a41}_{z41}R^{a42}_{3-z41}, and when there are a plurality of T⁴¹'s, the plurality of T⁴¹'s may be the same as or different from each other,
   R^{a41} is a hydroxyl group or a hydrolyzable group, and when there are a plurality of R^{a41}'s, the plurality of R^{a41}'s may be the same as or different from each other,
   R^{a42} is a nonhydrolyzable group, and when there are a plurality of R^{a42}'s, the plurality of R^{a42}'s may be the same as or different from each other,
   z41 is an integer from 1 to 3,
   x41 is an integer of at least 1, and when there are a plurality of x41's, the plurality of x41's may be the same as or different from each other,
   y3 is an integer of at least 1, and when there are a plurality of y3's, the plurality of y3's may be the same as or different from each other, and
   r1 is 3 or 4.
[7] A composition containing the compound according to any one of [1] to [6] and another fluorinated compound.
[8] A surface treatment agent comprising the compound according to any one of [1] to [6], or the composition according to [7].
[9] A coating liquid comprising the compound according to any one of [1] to [6] or the composition according to [7], and a liquid medium.
[10] An article including a surface layer formed of the compound according to any one of [1] to [6], the composition according to [7], or the surface treatment agent according to [8] on a surface of the substrate.
[11] A method for producing an article for forming a surface layer by a dry coating method or a wet coating method using the compound according to any one of [1] to [6], the composition according to [7], the surface treatment agent according to [8], or the coating liquid according to [9].
[12] A compound including a fluoropolyether chain and a group represented by the following formula (g2).

   *-R^{g2}-CH=CH₂ ... (g2)

   where
   R^{g2} is an alkylene group in which an atom having a connecting bond * may be an etheric oxygen atom and that may contain an etheric oxygen atom between carbon-carbon atoms, R^{g2} containing, either alone or in combination with -CH=CH₂, a carbon chain with at least 9 carbon atoms linked together, and
   * is a connecting bond bonded to the fluoropolyether chain directly or bonded to it via a linking group.

### Advantageous Effects of Invention

According to the present invention, it is possible to provide a compound, a composition, a surface treatment agent, and a coating liquid capable of forming a surface layer excellent in wear resistance, an article having a surface layer excellent in wear resistance, and a method for producing the article.

### Brief Description of Drawings

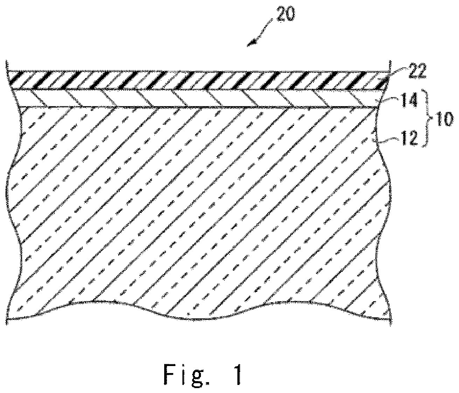

Fig. 1 is a schematic cross-sectional view showing one example of an article according to the present invention.

### Description of Embodiments

In this specification, a group represented by the formula (g1) may be referred to as a group (g1). Further, a compound represented by the formula (A1) may be referred to as a compound (A1). The same applies to compounds represented by other formulae and the like.

A fluoroalkyl group is a generic term for a combination of a perfluoroalkyl group and a partial fluoroalkyl group. The perfluoroalkyl group means a group in which all hydrogen atoms of the alkyl group are substituted with fluorine atoms. Further, the partial fluoroalkyl group is an alkyl group in which one or more hydrogen atoms are substituted with a fluorine atom and which has one or more hydrogen atoms. That is, the fluoroalkyl group is an alkyl group having one or more fluorine atoms.

The "reactive silyl group" is a generic term for a hydrolyzable silyl group and a silanol group (Si-OH), and the "hydrolyzable silyl group" means a group capable of forming a silanol group by a hydrolysis reaction.

The "organic group" means a hydrocarbon group that may contain a substituent and may contain a hetero atom or other bond in a carbon chain.

The "hydrocarbon group" means a group consisting of a carbon atom and a hydrogen atom, and is a group consisting of an aliphatic hydrocarbon group (such as a linear alkylene group, a branched alkylene group, or a cycloalkylene group), an aromatic hydrocarbon group (such as a phenylene group), and a group consisting of combinations thereof.

A "surface layer" means a layer formed on a surface of a substrate.

The "molecular weight" of the fluoropolyether chain is a number average molecular weight calculated from the number (average value) of oxyfluoroalkylene units on the basis of terminal groups, by means of ¹H-NMR and ¹⁹F-NMR.

The symbol "-" indicating a numerical range means that the numerical values stated before and after "-" are included as a lower limit value and an upper limit value.

### [Compound]

The compound of the present invention (hereinafter it will also be referred to as the present compound) contains a fluoropolyether chain and a group represented by the following formula (g1).

*-R^{g1}-T^{g1} ... (g1)

where, in the formula,
R^{g1} is an alkylene group in which an atom having a connecting bond * may be an etheric oxygen atom and that may contain an etheric oxygen atom between carbon-carbon atoms, R^{g1} containing a carbon chain with at least 9 carbon atoms linked together,
T^{g1} is -SiR^{a1}_{z1R}^{a2}_{3-z1},
R^{a1} is a hydroxyl group or a hydrolyzable group, and when there are a plurality of R^{a1}'s, the plurality of R^{a1}'s may be the same as or different from each other,
R^{a2} is a nonhydrolyzable group, and when there are a plurality of R^{a2}'s, the plurality of R^{a2}'s may be the same as or different from each other,
z1 is an integer from 1 to 3, and
* is a connecting bond bonded to the fluoropolyether chain directly or bonded to it via a linking group.

Since the present compound has a fluoropolyether chain, the surface layer obtained using the present compound is excellent in water/oil repellency and fingerprint stain removability.

The present compound has a reactive silyl group. Since this reactive silyl group is strongly chemically bonded to a substrate, the resulting surface layer is excellent in durability such as abrasion resistance.

In the present compound, the aforementioned group (g1) has a carbon chain with at least 9 carbon atoms linked together. Since the carbon chain is contained in a part that is relatively close to the reactive silyl group, it is estimated that intermolecular interaction between carbon chains is likely to occur, molecules are likely to be aligned when the surface layer is formed, and the present compounds are arranged more densely in the surface layer. It is estimated that the wear resistance will especially be improved.

The fluoropolyether chain is a group having two or more oxyfluoroalkylene units. The oxyfluoroalkylene units may include OR^{f11} that will be described later. The fluoropolyether chain may, for example, be [R^{f1}-(OR^{f11})_{yl}-O-R¹] that will be described later.

The fluoropolyether chain may contain hydrogen atoms. The proportion of the fluorine atoms represented by the following formula (I) of the fluoropolyether chain is, in that the surface layer is more excellent in abrasion resistance and fingerprint stain removability, preferably at least 60%, more preferably at least 80%, and further preferably substantially 100%, that is, a perfluoropolyether chain. When the proportion of the fluorine atoms is at least 60%, the amount of fluorine in the fluoropolyether chain increases, which will cause lubricity and fingerprint stain removability to be further improved. proportion of fluorine atoms (%) = (number of fluorine atoms)/{(number of fluorine atoms) + (number of hydrogen atoms)} × 100

The molecular weight per fluoropolyether chain is, in that the surface layer will be excellent in both fingerprint stain removability and sliding resistance, preferably from 2,000 to 20,000, more preferably from 2,500 to 15,000, and particularly preferably from 3,000 to 10,000. When the molecular weight of the fluoropolyether chain is at least 2,000, the fluoropolyether chain will be more excellent in flexibility, the amount of fluorine in molecules increases, and finger sliding properties and fingerprint stain removability are further improved. On the other hand, when the molecular weight of the fluoropolyether chain is at most 20,000, the abrasion resistance of the surface layer will become more excellent.

R^{g1} is an alkylene group in which an atom having a connecting bond * may be an etheric oxygen atom and that may contain an etheric oxygen atom between carbon-carbon atoms, R^{g1} containing a carbon chain with at least 9 carbon atoms linked together.

The alkylene group in R^{g1} may be linear or may have a branch and/or a cyclic structure. The alkylene group in R^{g1} is, in that the present compounds are likely to be densely arranged when they form a surface layer, preferably an alkylene group having a methylene group as a linear or branched structure, and more preferably a linear alkylene group.

Having a carbon chain with at least 9 carbon atoms linked together means including an alkylene group having at least 9 carbon atoms in R^{g1}. When the alkylene group has a branch and/or a cyclic structure, carbon atoms having the branch and/or cyclic structure are also included. Specifically, for example, -CH₂CH₂CH(-CH₂CH₃)-CH₂CH₂CH₂CH₂- has a carbon chain with 9 carbon atoms linked together, including carbon atoms in the branches. The number of carbon atoms constituting the carbon chain is preferably at least 11 in view of wear resistance of the surface layer. Further, although the upper limit of the number of carbon atoms is not particularly limited, it is preferably at most 19 so that more excellent water/oil repellency and fingerprint stain removability will be obtained.

In the alkylene group in R^{g1}, an atom adjacent to * may be an etheric oxygen atom and the alkylene group in R^{g1} may contain an etheric oxygen atom between carbon-carbon atoms. Specifically, R^{g1} can be represented by the following formula (g4).

*-(O)ₐ₁-(R^{g4}O)ₐ₂-R^{g4}-* * ··· (g4)

where, in the formula,
R^{g4} is an alkylene group having carbon numbers of at least 1, the plurality of R^{g4}'s may be the same as or different from each other, where at least one of the plurality of R^{g4}'s is an alkylene group having at least 9 carbon atoms,
a1 is 0 or 1,
a2 is an integer of at least 0,
* is a connecting bond bonded to the fluoropolyether chain directly or bonded to it via a linking group,
** is a connecting bond bonded to T^{g1} in the formula (g1).

When a1 is 0, an atom having a connecting bond * is a carbon atom. When a1 is 1, an atom having a connecting bond * is an oxygen atom. In the present compound, a1 may be either 0 or 1, and may be selected as appropriate in view of preparation or the like.

a2 is the number of repetition of R^{g4}O. a2 is, in view of durability as a surface layer and the like, preferably from 0 to 6, more preferably from 0 to 3, and further preferably from 0 to 1.

At least one of R^{g4}'s is an alkylene group having at least 9 carbon atoms. In view of water/oil repellency, when there are a plurality of R^{g4}'s, only one of them is preferably an alkylene group having at least 9 carbon atoms. Further, in this case, the other R^{g4}'s are each preferably an alkylene group having 1 to 6 carbon atoms, more preferably an alkylene group having 1 to 3 carbon atoms, and further preferably an alkylene group having 1 to 2 carbon atoms.

R^{g1} is further preferably a group represented by the following formula (g2) in that the surface layer is excellent in water/oil repellency, fingerprint stain removability, and durability such as abrasion resistance. With an alkylene group having at least 9 carbon atoms adjacent to the hydrolyzable silyl group, the wear resistance of the surface layer is further improved.

*-(O)ₐ₁-R^{g9}-** ... (g2)

where, in the formula,
R^{g9} is an alkylene group having at least 9 carbon atoms, and
a1, *, and ** are similar to those in the formula (g4).

The alkylene group in R^{g9} may be linear or may have a branch and/or a cyclic structure. The alkylene group in R^{g9} is preferably a linear alkylene group in that the present compounds are likely to be densely arranged when they form the surface layer. Further, the number of carbon atoms in the alkylene group in R^{g9} may be any number of at least 9, and is preferably at least 11 in view of the wear resistance of the surface layer. Further, although the upper limit is not particularly limited, the number of carbon atoms is preferably at most 19 so that more excellent water/oil repellency and fingerprint stain removability will be obtained.

T^{g1} is a group represented by -SiR^{a1}_{z1}R^{a2}_{3-z1}.
where, in the formula,
R^{a1} is a hydroxyl group or a hydrolyzable group, and when there are a plurality of R^{a1}'s, the plurality of R^{a1}'s may be the same as or different from each other,
R^{a2} is a nonhydrolyzable group, and when there are a plurality of R^{a2}'s, the plurality of R^{a2}'s may be the same as or different from each other, and
z1 is an integer from 1 to 3.

When R^{a1} is a hydroxyl group, R^{a1} constitutes a silanol (Si-OH) group along with an Si atom. Further, the hydrolyzable group undergoes hydrolysis to form a hydroxyl group (i.e., a silanol group). Such silanol groups are intermolecularly reacted to form a Si-O-Si bond. The silanol groups further undergo dehydration condensation with a hydroxyl group (substrate-OH) on the surface of the substrate to form a chemical bond (substrate-O-Si). Since the present compound contains at least one T^{g1}, the present compound is excellent in the wear resistance after the surface layer is formed.

Examples of the hydrolyzable group of R^{a1} include an alkoxy group, an aryloxy group, a halogen atom, an acyl group, an acyloxy group, or an isocyanate group (-NCO). The alkoxy group is preferably a C1-4 alkoxy group. The acyl group is preferably a C1-6 acyl group. The acyloxy group is preferably a C1-6 acyloxy group.

R^{a1} is, in view of ease of production of the present compound, preferably a C1-4 alkoxy group or a halogen atom. The alkoxy group in R^{a1} is, in that the present compound will be more excellent in storage stability and outgassing at the time of reaction is small, preferably a C1-4 alkoxy group, and in a case where the present compound is required to have long-term storage stability, particularly preferably an ethoxy group, and in a case where the hydrolysis reaction time is to be short, particularly preferably a methoxy group. The halogen atom is preferably a chlorine atom.

Examples of the nonhydrolyzable group of R^{a2} include a hydrogen atom or a monovalent hydrocarbon group. The hydrocarbon group may be an alkyl group, a cycloalkyl group, an alkenyl group, or an allyl group, and this hydrocarbon group may be substituted with fluorine. In view of ease of production and the like, the hydrocarbon group is preferably an alkyl group. Further, in view of ease of production and the like, the number of carbon atoms of the hydrocarbon group is preferably from 1 to 6, more preferably from 1 to 3, and further preferably from 1 to 2.

z1 may be any integer from 1 to 3, preferably 2 or 3 in view of adhesion with the substrate, and more preferably 3.

Specific examples of T^{g1} include -Si(OCH₃)₃, -SiCH₃(OCH₃)₂, - Si(OCH₂CH₃)₃, -SiCl₃, -Si(OCOCH₃)₃, -Si(NCO)₃, and -Si(OCH₂CF₃)₃. In view of ease of handling at the time of production, T^{g1} is particularly preferably -Si(OCH₃)₃.

When there are a plurality of T^{g1}'s in one molecule, the plurality of T^{g1}'s may be the same as or different.

In the present compound, the fluoropolyether chain is bonded to the group (g1) directly or bonded to it via a linking group. Examples of this linking group include a divalent or higher group, and more specifically, a group described later with regard to L¹ and the like.

The number of fluoropolyether chains in one molecule of the present compound may be 1 or may be at least 2. In view of ease of preparation and the like, the number of fluoropolyether chains in one molecule is preferably from 1 to 20, more preferably from 1 to 10, and further preferably from 1 to 4.

Further, the number of groups (g1) in one molecule of the present compound may be 1 or may be at least 2. The number of groups (g1) is, in that the resulting compound will be excellent in both wear resistance and water/oil repellency, preferably from 1 to 32, more preferably from 1 to 18, and further preferably from 2 to 12.

When there are a plurality of fluoropolyether chains, the plurality of fluoropolyether chains may be the same as or different. Further, when there are a plurality of groups (g1), these groups (g1) may be the same as or different. In view of wear resistance, each of these groups (g1) is preferably a group represented by the formula (g2), and more preferably, the number of carbon atoms in the alkylene group in R^{g9} is all the same.

The present compound may be any compound so long as it satisfies the above structures. In view of ease of preparation, ease of handling of the compound, and the like, the present compound is preferably a compound represented by the following formula (A1), the following formula (A2), or the following formula (A3).

[R^{f1}-(OR^{f11})_{y1}-O-R¹]ⱼ-L¹-(R¹¹-T¹¹)ₓ₁ ... (A1)

(T³¹-R³¹)ₓ₃-L³-R³-(OR^{f12})_{y2}-O-R²-L²-(R²¹-T²¹)ₓ₂ ... (A2)

Q¹[-(OR^{f13})_{y3}-O-R⁴-L⁴-(R⁴¹-T⁴¹)ₓ₄]ᵣ₁ ... (A3)

where, in the formula,
R^{f1} is a fluoroalkyl group having 1 to 20 carbon atoms, and when there are a plurality of R^{f1}'s, the plurality of R^{f1}'s may be the same as or different from each other,
R^{f11} is a fluoroalkylene group having 1 to 6 carbon atoms, and when there are a plurality of R^{f11}'s, the plurality of R^{f11}'s may be the same as or different from each other,
R¹ is an alkylene group or a fluoroalkylene group, and when there are a plurality of R¹'s, the plurality of R¹'s may be the same as or different from each other,
L¹ is a single bond or a j+x1 valent group that may contain N, O, S, or Si and may contain a branch point, and atoms bonded to R¹ and R¹¹ are each independently an N, O, S, or Si atom, a carbon atom constituting a branch point, or a carbon atom having a hydroxyl group or an oxo group (=O),
R¹¹ is an alkylene group in which an atom bonded to L¹ may be an etheric oxygen atom and that may contain an etheric oxygen atom between carbon-carbon atoms, and when there are a plurality of R¹¹'s, the plurality of R¹¹'s may be the same as or different from each other, where at least one of the plurality of R¹¹'s has a carbon chain with at least 9 carbon atoms linked together,
T¹¹ is -SiR^{a11}_{z11}R^{a12}_{3-z11}, and when there are a plurality of T¹¹'s, the plurality of T¹¹'s may be the same as or different from each other,
R^{a11} is a hydroxyl group or a hydrolyzable group, and when there are a plurality of R^{a11}'s, the plurality of R^{a11}'s may be the same as or different from each other,
R^{a12} is a nonhydrolyzable group, and when there are a plurality of R^{a12}'s, the plurality of R^{a12}'s may be the same as or different from each other,
j is an integer of at least 1,
z11 is an integer from 1 to 3,
x1 is an integer of at least 1,
y1 is an integer of at least 1, and when there are a plurality of y1's, the plurality of y1's may be the same as or different from each other,
R^{f12} is a fluoroalkylene group having 1 to 6 carbon atoms, and when there are a plurality of R^{f12}'s, the plurality of R^{f12}'s may be the same as or different from each other,
R² and R³ are each independently an alkylene group or a fluoroalkylene group,
L² is a single bond or a 1+x2 valent group that may contain N, O, S, or Si and may contain a branch point, and atoms bonded to R² and R²¹ are each independently an N, O, S, or Si atom, a carbon atom constituting a branch point, or a carbon atom having a hydroxyl group or an oxo group (=O),
L³ is a single bond or a 1+x3 valent group that may contain N, O, S, or Si and may contain a branch point, and atoms bonded to R³ and R³¹ are each independently an N, O, S, or Si atom, a carbon atom constituting a branch point, or a carbon atom having a hydroxyl group or an oxo group (=O),
R²¹ is an alkylene group in which an atom adjacent to L² may be an etheric oxygen atom and that may contain an etheric oxygen atom between carbon-carbon atoms, and when there are a plurality of R²¹'s, the plurality of R²¹'s may be the same as or different from each other,
R³¹ is an alkylene group in which an atom adjacent to L³ may be an etheric oxygen atom and that may contain an etheric oxygen atom between carbon-carbon atoms, and when there are a plurality of R³¹'s, the plurality of R³¹'s may be the same as or different from each other, where at least one of the plurality of R²¹'s or R³¹'s has a carbon chain with at least 9 carbon atoms linked together,
T²¹ and T³¹ are each independently -SiR^{a21}_{z21}R^{a22}_{3-z21}, and when there are a plurality of T²¹'s or T³¹'s, the plurality of T²¹'s and T³¹'s may each independently be the same as or different from each other,
R^{a21} is a hydroxyl group or a hydrolyzable group, and when there are a plurality of R^{a21}'s, the plurality of R^{a21}'s may be the same as or different from each other,
R^{a22} is a nonhydrolyzable group, and when there are a plurality of R^{a22}'s, the plurality of R^{a22}'s may be the same as or different from each other,
z21 is an integer from 1 to 3,
x2 and x3 are each independently an integer of at least 1,
y2 is an integer of at least 1,
Q¹ is an r1 valent group having a branch point,
R^{f13} is a fluoroalkylene group having 1 to 6 carbon atoms, and when there are a plurality of R^{f13}'s, the plurality of R^{f13}'s may be the same as or different from each other,
R⁴ are each independently an alkylene group or a fluoroalkylene group, and when there are a plurality of R⁴'s, the plurality of R⁴'s may be the same as or different from each other,
L⁴ is a single bond or a 1+x4 valent group which may contain N, O, S, or Si and may contain a branch point, atoms bonded to R⁴ and R⁴¹ are each independently an N, O, S, or Si atom, a carbon atom constituting a branch point, or a carbon atom having a hydroxyl group or an oxo group (=O), and when there a plurality of L⁴'s, the plurality of L⁴'s may be the same as or different from each other,
R⁴¹ is an alkylene group in which an atom adjacent to L⁴ may be an etheric oxygen atom and that may contain an etheric oxygen atom between carbon-carbon atoms, and when there are a plurality of R⁴¹'s, the plurality of R¹¹'s may may be the same as or different from each other, where at least one of the plurality of R⁴¹'s contains a carbon chain with at least 9 carbon atoms linked together,
T⁴¹ is -SiR^{a41}_{z41}R^{a42}_{3-z41}, and when there are a plurality of T⁴¹'s, the plurality of T⁴¹'s may be the same as or different from each other,
R^{a41} is a hydroxyl group or a hydrolyzable group, and when there are a plurality of R^{a41}'s, the plurality of R^{a41}'s may be the same as or different from each other,
R^{a42} is a nonhydrolyzable group, and when there are a plurality of R^{a42}'s, the plurality of R^{a42}'s may be the same as or different from each other,
z41 is an integer from 1 to 3,
x41 is an integer of at least 1, and when there are a plurality of x41's, the plurality of x41's may be the same as or different from each other,
y3 is an integer of at least 1, and when there are a plurality of y3's, the plurality of y3's may be the same as or different from each other, and
r1 is 3 or 4.

While structures of each compound will be described below, symbols with similar structures are described as such and can be used interchangeably.

### <Compound (A1)>

The compound (A1) has a structure represented by the following formula (A1).

[R^{f1}-(OR^{f11})_{y1}-O-R¹]ⱼ-L¹-(R¹¹-T¹¹)ₓ₁ ... (A1)

where, in the formula, the symbols in the formula (A1) have already been described above.

R^{f1} is a fluoroalkyl group having 1 to 20 carbon atoms. This fluoroalkyl group may be linear or may have a branch and/or a cyclic structure. The fluoroalkyl group is preferably a linear fluoroalkyl group in view of wear resistance, and the number of carbon atoms in the fluoroalkyl group is preferably from 1 to 6 in view of ease of preparation and the like.

R^{f11} is a fluoroalkylene group having 1 to 6 carbon atoms, and when there are a plurality of R^{f11}'s, the plurality of R^{f11}'s may be the same as or different from each other. (OR^{f11})_{y1} represents a fluoropolyether chain, and y1 may be any integer of at least 1, preferably from 1 to 200.

(OR^{f11})_{y1} preferably has a structure represented by the following formula (G11).

-[(OG^{f1})ₘ₁(OG^{f2})ₘ₂(OG^{f3})ₘ₃(OG^{f4})ₘ₄(OG^{f5})ₘ₅(OG^{f6})ₘ₆]- Formula (G11)

where, in the formula,
G^{f1} is a fluoroalkylene group having 1 carbon atom,
G^{f2} is a fluoroalkylene group having 2 carbon atoms,
G^{f3} is a fluoroalkylene group having 3 carbon atoms,
G^{f4} is a fluoroalkylene group having 4 carbon atoms,
G^{f5} is a fluoroalkylene group having 5 carbon atoms,
G^{f6} is a fluoroalkylene group having 6 carbon atoms,
m1, m2, m3, m4, m5, and m6 each independently represent 0 or an integer of at least 1, and
m1+m2+m3+m4+m5+m6 is preferably an integer from 1 to 200.

The bonding order of (OG^{f1}) to (OG^{f6}) in the formula (G11) may be arranged randomly. In the above formula (G11), m1 to m6 respectively represent the number of (OG^{f1}) to (OG^{f6}), not the arrangement of them. For example, (OG^{f5})ₘ₅ represents that the number of (OG^{f5}) is m5, not the block arrangement structure of (OG^{f5})ₘ₅. Likewise, the order of description of (OG^{f1}) to (OG^{f6}) does not represent the bonding order of the respective units.

Further, the fluoroalkylene group having 3 to 6 carbon atoms may be a linear fluoroalkylene group or a fluoroalkylene group having a branched or cyclic structure.

Specific examples of G^{f1} include -CF₂- and -CHF-.

Specific examples of G^{f2} include -CF₂CF₂-, -CHFCF₂-, - CHFCHF-, -CH₂CF₂-, and -CH₂CHF-.

Specific examples of G^{f3} include -CF₂CF₂CF₂-, -CF₂CHFCF₂-, - CF₂CH₂CF₂-, -CHFCF₂CF₂-, -CHFCHFCF₂-, -CHFCHFCHF-, - CHFCH₂CF₂-, -CH₂CF₂CF₂-, -CH₂CHFCF₂-, -CH₂CH₂CF₂-, - CH₂CF₂CHF-, -CH₂CHFCHF-, -CH₂CH₂CHF-, -CF(CF₃)-CF₂-, - CF(CHF₂)-CF₂-, -CF(CH₂F)-CF₂-, -CF(CH₃)-CF₂-, -CF(CF₃)-CHF-, - CF(CHF₂)-CHF-, -CF(CH₂F)-CHF-, -CF(CH₃)-CHF-, -CF(CF₃)-CH₂-, - CF(CHF₂)-CH₂-, -CF(CH₂F)-CH₂-, -CF(CH₃)-CH₂-, -CH(CF₃)-CF₂-, - CH(CHF₂)-CF₂-, -CH(CH₂F)-CF₂-, -CH(CH₃)-CF₂-, -CH(CF₃)-CHF-, - CH(CHF₂)-CHF-, -CH(CH₂F)-CHF-, -CH(CH₃)-CHF-, -CH(CF₃)-CH₂-, - CH(CHF₂)-CH₂-, and -CH(CH₂F)-CH₂-.

Specific examples of G^{f4} include -CF₂CF₂CF₂CF₂-, - CHFCF₂CF₂CF₂-, -CH₂CF₂CF₂CF₂-, -CF₂CHFCF₂CF₂-, - CHFCHFCF₂CF₂-, -CH₂CHFCF₂CF₂-, -CF₂CH₂CF₂CF₂-, - CHFCH₂CF₂CF₂-, -CH₂CH₂CF₂CF₂-, -CHFCF₂CHFCF₂-, - CH₂CF₂CHFCF₂-, -CF₂CHFCHFCF₂-, -CHFCHFCHFCF₂-, - CH₂CHFCHFCF₂-, -CF₂CH₂CHFCF₂-, -CHFCH₂CHFCF₂-, - CH₂CH₂CHFCF₂-, -CF₂CH₂CH₂CF₂-, -CHFCH₂CH₂CF₂-, - CH₂CH₂CH₂CF₂-, -CHFCH₂CH₂CHF-, -CH₂CH₂CH₂CHF-, and - cycloC₄F₆-.

Specific examples of G^{f5} include -CF₂CF₂CF₂CF₂CF₂-, - CHFCF₂CF₂CF₂CF₂-, -CH₂CHFCF₂CF₂CF₂-, -CF₂CHFCF₂CF₂CF₂-, - CHFCHFCF₂CF₂CF₂-, -CF₂CH₂CF₂CF₂CF₂-, -CHFCH₂CF₂CF₂CF₂-, - CH₂CH₂CF₂CF₂CF₂-, -CF₂CF₂CHFCF₂CF₂-, -CHFCF₂CHFCF₂CF₂-, - CH₂CF₂CHFCF₂CF₂-, -CH₂CF₂CF₂CF₂CH₂-, and -cycloC₅F₈-.

Specific examples of G^{f6} include -CF₂CF₂CF₂CF₂CF₂CF₂-, - CF₂CF₂CHFCHFCF₂CF₂-, -CHFCF₂CF₂CF₂CF₂CF₂-, - CHFCHFCHFCHFCHFCHF-, -CHFCF₂CF₂CF₂CF₂CH₂-, - CH₂CF₂CF₂CF₂CF₂CH₂-, and -cycloC₆F₁₀-.
-cycloC₄F₆- means a perfluorocyclobutanediyl group, and specific examples thereof include a perfluorocyclobutan-1,2-diyl group. -cycloCsFs- means a perfluorocyclopentanediyl group, and specific examples thereof include a perfluorocyclopentane-1,3-diyl group. -cycloC₆F₁₀- means a perfluorocyclohexanediyl group, and specific examples thereof include a perfluorocyclohexane-1,4-diyl group.

Among them, (OR^{f11})_{y1} preferably has a structure represented by the following formulae (G2) to (G4) in view of further excellent water/oil repellency, abrasion resistance, and fingerprint stain removability.

(OG^{fl})ₘ₁-(OG^{f2})ₘ₂ Formula (G2)

(OG^{f2})ₘ₂-(OG^{f4})ₘ₄ Formula (G3)

(OG^{f3})ₘ₃ Formula (G4)

where, the symbols of the formulae (G2) to (G4) are similar to those in the aforementioned formula (G11).

In the formulae (G2) and (G3), the bonding order of (OG^{f1}) and (OG^{f2}), and the bonding order of (OG^{f2}) and (OG^{f4}) may be arranged randomly. For example, in the formula (G2), (OG^{f1}) and (OG^{f2}) may be arranged alternately, and (OG^{f1}) and (OG^{f2}) may be each arranged in a block, or may be arranged randomly. The same holds true for the formula (G3).

In the formula (G2), m1 is preferably from 1 to 30, and more preferably from 1 to 20. Further, m2 is preferably from 1 to 30, and more preferably from 1 to 20.

In the formula (G3), m2 is preferably from 1 to 30, and more preferably from 1 to 20. Further, m4 is preferably from 1 to 30, and more preferably from 1 to 20.

In the formula (G4), m3 is preferably from 1 to 30, and more preferably from 1 to 20.

The proportion of fluorine atoms in the fluoropolyether chain (OR^{f11})_{y1} [{number of fluorine atoms / (number of fluorine atoms + number of hydrogen atoms)} × 100 (%)] is, in view of excellent water/oil repellency and fingerprint stain removability, preferably at least 60%, more preferably at least 70%, and further preferably at least 80%.

Further, the molecular weight of the fluoropolyether chain (OR^{f11})_{y1} part is preferably from 2,000 to 20,000, more preferably from 2,500 to 15,000, and particularly preferably from 3,000 to 10,000 in view of wear resistance.

R¹ is an alkylene group or a fluoroalkylene group. The alkylene group and the fluoroalkylene group in R¹ may be linear, or may have a branch and/or a cyclic structure. The alkylene group and the fluoroalkylene group in R¹ is preferably a linear or branched alkylene group or fluoroalkylene group in view of ease of preparation and the like, and more preferably, a linear alkylene group or fluoroalkylene group, or an alkylene group or a fluoroalkylene group having a methylene group or a fluoromethylene group as a branch. The number of atoms in R¹ is preferably from 1 to 6, and more preferably from 1 to 3. R¹ is bonded to R¹¹ when L¹ is a single bond. In this case, it is assumed that a carbon atom bonded to R¹¹ in R¹ is bonded to one or more fluorine atoms or fluoroalkyl groups.

The symbol j represents the number of fluoropolyether chains in one molecule. The symbol k may be any integer of at least 1, preferably from 1 to 20, more preferably from 1 to 10, and particularly preferably from 1 to 4.

R¹¹-T¹¹ is a group that corresponds to the aforementioned group (g1), and when there are a plurality of R¹¹-T¹¹'s in a molecule, at least one of R¹¹-T¹¹'s is represented by the aforementioned group (g1).

R¹¹ corresponding to R^{g1} in the group (g1) is similar to R^{g1} in the aforementioned group (g1), and the preferred embodiments are also the same. Here, "having a connecting bond *" can be replaced by "bonded to L¹". When L¹ is a single bond, R¹¹ is directly bonded to R1.

The alkylene group in R¹¹, which is different from R^{g1}, is an alkylene group in which an atom bonded to L¹ may be an etheric oxygen atom and that may contain an etheric oxygen atom between carbon-carbon atoms, the alkylene group in R¹¹ not containing a carbon chain with at least 9 carbon atoms linked together. This R¹¹ is preferably a group represented by the following formula (g5).

*-(O)ₐ₃-(R^{g5}O)ₐ₄-R^{g5}-** ··· (g5)

where, in the formula,
R^{g5} is an alkylene group having 1 to 8 carbon atoms, and the plurality of R^{g5} may be the same as or different from each other,
a3 is 0 or 1,
a4 is an integer of at least 0,
* is a connecting bond bonded to L¹, and
** is a connecting bond bonded to T¹¹.

When a3 is 0, an atom having a connecting bond * is a carbon atom, and when a3 is 1, an atom having a connecting bond * is an oxygen atom. In the present compound, a3 may be either 0 or 1, and may be selected as appropriate in view of preparation or the like.

a4 is the number of repetition of R^{g5}O, and is, in view of durability and the like of the surface layer, preferably from 0 to 6, more preferably from 0 to 3, and further preferably from 0 to 1.

It is sufficient that the alkylene group of R^{g4} be a linear or branched alkylene group having 1 to 8 carbon atoms, preferably an alkylene group having 1 to 6 carbon atoms, and more preferably an alkylene group having 1 to 3 carbon atoms. Further, this alkylene group is preferably a linear alkylene group.

R¹¹, which is different from R^{g1}, is, in that the surface layer is excellent in water/oil repellency and fingerprint stain removability and is excellent in durability such as abrasion resistance, further preferably a group represented by the following formula (g3).

*-(O)ₐ₃-R^{g3}-** ... (g3)

where, in the formula,
R^{g3} is an alkylene group having 1 to 8 carbon atoms, and
a3, * and ** are similar to those in the formula (g5).

T¹¹, and R^{a11}, R^{a12}, and z11 constituting T¹¹ are respectively similar to T^{g1}, R^{a1}, R^{a2}, and z1, and the preferred embodiments are also the same.

x1 represents the number of R¹¹-T¹¹'s in one molecule, and may be any integer of at least 1, preferably from 1 to 32, more preferably from 1 to 18, and further preferably from 2 to 12.

L¹ is a single bond or a j+x1 valent group that may contain N, O, S, or Si and may contain a branch point, and atoms bonded to R¹ and R¹¹ are each independently an N, O, S, or Si atom, a carbon atom constituting a branch point, or a carbon atom having a hydroxyl group or an oxo group (=0). Note that the atoms bonded to R¹ and R¹¹ may be the same or may be different from each other.

When L¹ is a single bond, R¹ and R¹¹ in the formula (A1) are directly bonded to each other and the compound (A1) is represented by the following formula (A1').

R^{f1}-(OR^{f11})_{y1}-O-R¹-R¹¹-T¹¹ ... (A1')

where the symbols in the formula (A1') are similar to those in the formula (A1).

When L¹ is a trivalent or higher group, L¹ has at least one branch point (hereinafter referred to as a "branch point P¹") selected from the group consisting of C, N, Si, a cyclic structure, and a (j+x1) valent organopolysiloxane residue.

When N is the branch point P¹, the branch point P¹ is represented, for example, by *-N(-**)₂ or (*-)₂N-**. Here, * is a connecting bond on the R¹ side and ** is a connecting bond on the R¹¹ side.

When C is the branch point P¹, the branch point P¹ is represented, for example, by *-C(-**)₃, (*-)₂C(-**)₂, (*-)₃C-**, *-CR²⁹(-**)₂, or (*-)₂CR²⁹-**. Here, * is a connecting bond on the R¹ side, ** is a connecting bond on the R¹¹ side, R²⁹ is a monovalent group such as, for example, a hydrogen atom, a hydroxyl group, an alkyl group, an alkoxy group or the like.

When Si is the branch point P¹, the branch point P¹ is represented, for example, by *-Si(-**)₃, (*-)₂Si(-**)₂, (*-)₃Si-**, *-SiR²⁹(-**)₂, or (*-)₂SiR²⁹-**. Here, * is a connecting bond on the R¹ side, ** is a connecting bond on the R¹¹ side, R²⁹ is a monovalent group such as, for example, a hydrogen atom, a hydroxyl group, an alkyl group, an alkoxy group or the like.

To facilitate the preparation of the present compound and provide a surface layer having further enhanced abrasion resistance, light resistance, and chemical resistance, the cyclic structure constituting the branch point P¹ is preferably one selected from the group consisting of 3- to 8-membered aliphatic rings, 3- to 8-membered aromatic rings, 3- to 8-membered heterorings, and condensation rings consisting of two or more of these rings, and is particularly preferably the cyclic structures shown in the formulae below. The cyclic structure may have a substituent such as a halogen atom, an alkyl group (which may have an ethereal oxygen atom between carbon-carbon atoms), a cycloalkyl group, an alkenyl group, an allyl group, an alkoxy group, or an oxo group (=O).

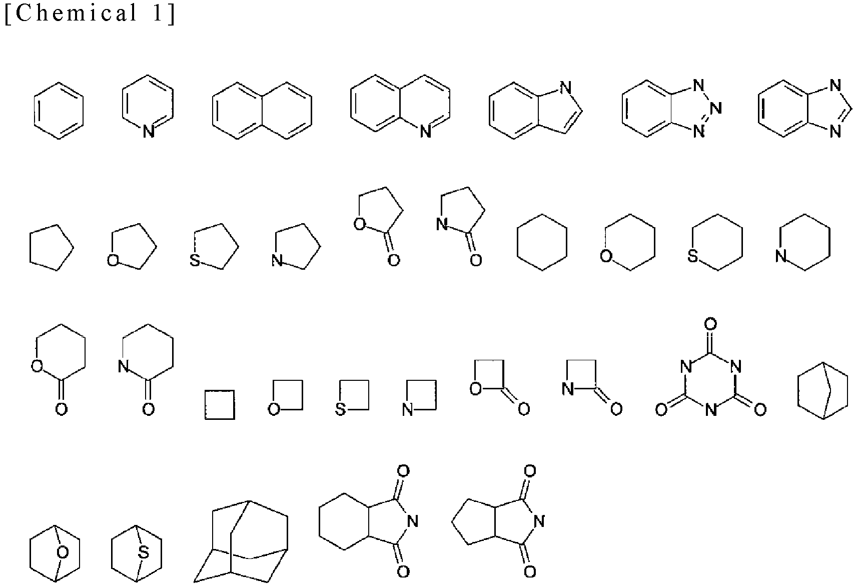

Specific examples of the organopolysiloxane residue constituting the branch point P¹ include the following groups. Here, R²⁵ in the formulae below is a hydrogen atom, an alkyl group, an alkoxy group, or a phenyl group. The alkyl group and the alkoxy group of R²⁵ preferably have 1 to 10 carbon atoms, more preferably one carbon atom.

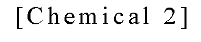

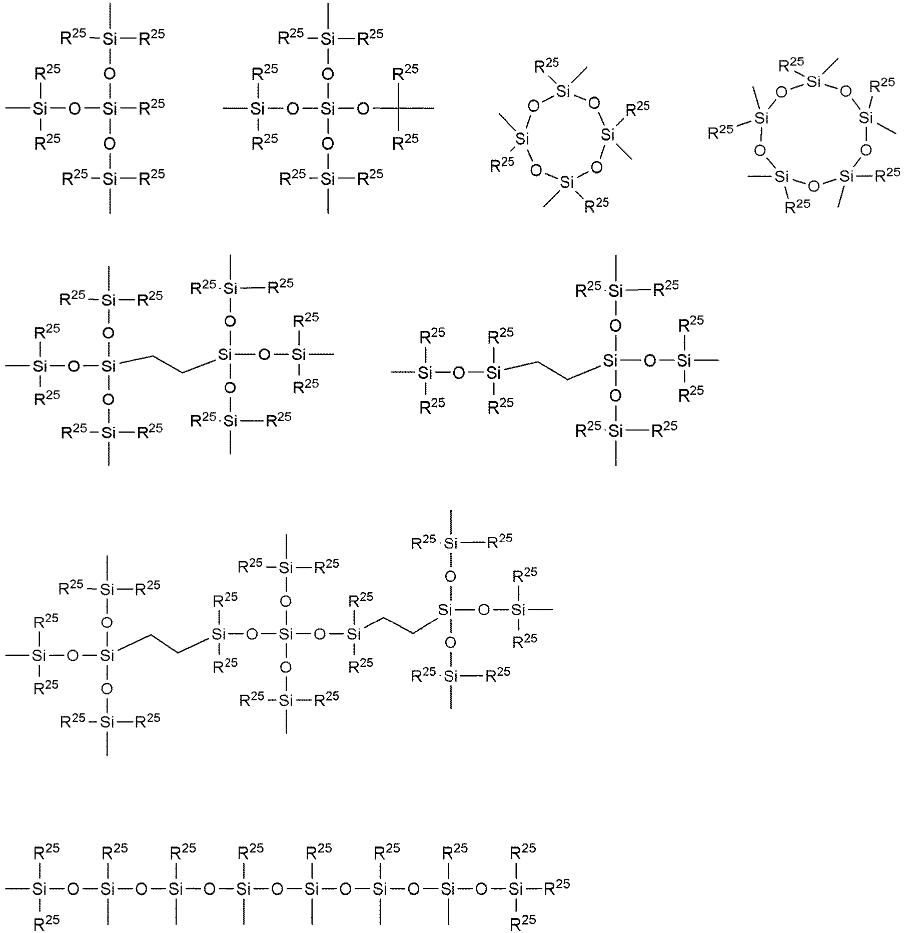

The divalent or higher L¹ may contain at least one bond (hereinafter referred to as a "bond B¹") selected from the group consisting of -C(O)N(R²⁶)-, -N(R²⁶)C(O)-, -C(O)O-, -OC(O)-, -C(O)-, - O-, -N(R²⁶)-, -S-, -OC(O)O-, -NHC(O)O-, -OC(O)NH-, - NHC(O)N(R²⁶)-, -SO₂N(R²⁶)-, -N(R²6)SO₂-, -Si(R²⁶)₂-, -OSi(R²⁶)₂-, - Si(CH₃)₂-Ph-Si(CH₃)₂-, and a divalent organopolysiloxane residue.

Here, R²⁶ is a hydrogen atom, an alkyl group having 1 to 6 carbon atoms, or a phenyl group, and Ph is a phenylene group. From the viewpoint of ease of production of the present compound, the number of carbon atoms in the alkyl group of R²⁶ is preferably from 1 to 6, more preferably from 1 to 3, particularly preferably from 1 to 2.

Specific examples of the divalent organopolysiloxane residue include the groups shown in the following formulae. In the following formulae, R²⁷ is a hydrogen atom, an alkyl group, an alkoxy group, or a phenyl group. The number of carbon atoms in the alkyl group and the alkoxy group of R²⁷ is preferably from 1 to 10, and more preferably 1.

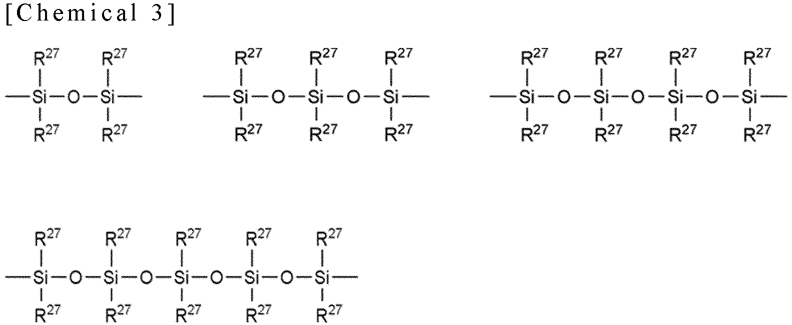

The bond B¹ is, in view of ease of production of the present compound, preferably at least one bond selected from the group consisting of -C(O)NR²⁶-, -N(R²⁶)C(O)-, -C(O)-, and -NR²⁶-, and, in view of more excellent light resistance and chemical resistance of the surface layer, more preferably -C(O)NR²⁶-, -N(R²⁶)C(O)- or -C(O)-.

In the divalent L¹, atoms bonded to R¹ and R¹¹ are each independently an N, O, S, or Si atom or a carbon atom having an oxo group (=0). That is, atoms adjacent to R¹ and R¹¹ are each constituent element of the bond B¹. Specific examples of the divalent L¹ include a single bond, at least one bond B¹ (e.g., *-B¹-**, *-B¹-R²⁸-B¹-**), etc. Here, R²⁸ is a single bond or a divalent organic group, * is a connecting bond on the R¹ side, and ** is a connecting bond on the R¹¹ side.

In the trivalent or higher L¹, atoms bonded to R¹ and R¹¹ are each independently an N, O, S, or Si atom, a carbon atom constituting a branch point, or a carbon atom having a hydroxyl group or an oxo group (=0). That is, atoms adjacent to R¹ and R¹¹ are each constituent element of the bond B¹ or branch point P¹. Specific examples of the trivalent or higher L¹ include at least one branch point P¹ (e.g., {(*-)ⱼP¹(-**)ₓ₁}, {(*-)ⱼP¹-R²⁸-P¹(-**)ₓ₁} or the like), a combination of at least one branch point P¹ with at least one bond B¹ (e.g., {*-B¹-R²⁸-P¹(-**)ₓ₁}, {*-B¹-R^{2g}-P¹(-R^{2g}-B¹-**)ₓ₁}), etc. Here, R²⁸ is a single bond or a divalent organic group, * is a connecting bond on the R¹ side, and ** is a connecting bond on the R¹¹ side.

Examples of the divalent organic group in the above R²⁸ include, for example, a hydrocarbon group such as a divalent aliphatic hydrocarbon group (such as an alkylene group or a cycloalkylene group), or a divalent aromatic hydrocarbon group (such as a phenylene group). The divalent organic group in the above R²⁸ may have the bond B¹ between carbon-carbon atoms of the hydrocarbon group. The number of carbon atoms in the divalent organic group is preferably from 1 to 10, more preferably from 1 to 6, and particularly preferably from 1 to 4.

The L¹ is, in view of ease of production of the present compound, preferably a group represented by any one of the following formulae (L1) to (L7). 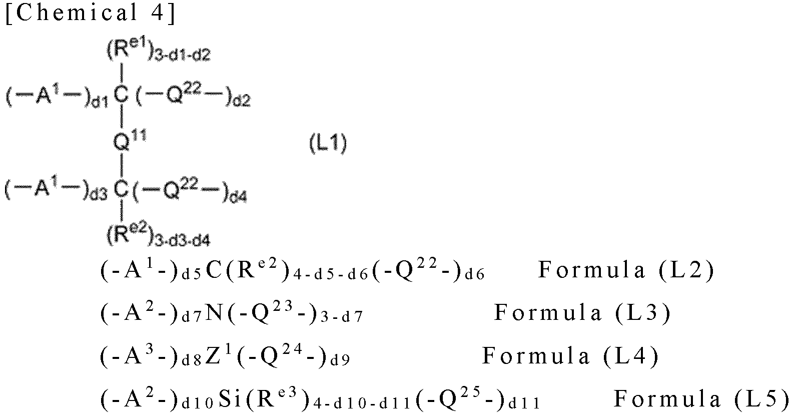 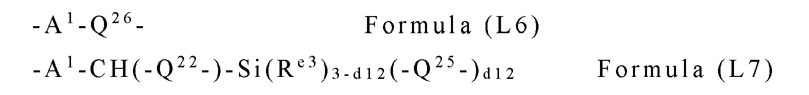 in the formulae (L1) to (L7), the A¹, A² or A³ side is connected to R¹ in the formula (A1), and the Q²², Q²³, Q²⁴, Q²⁵ or Q²⁶ side is connected to R¹¹.

Here, A¹ is a single bond, -B³-, -B³-R³⁰-, or -B³-R³⁰-B²-, R³⁰ is an alkylene group, or an alkylene group having at least 2 carbon atoms and having between carbon-carbon atoms -C(O)NR^{e6}-, -C(O)-, -CO(O)-, -NR^{e6}-, or -O-, B² is -C(O)NR^{e6}-, -C(O)-, -NR^{e6}- or -O-, and B³ is - C(O)NR^{e6}-, -C(O)-, or -NR^{e6}-,
A² is a single bond or -B³-R³⁰-,
A³ is A¹ when the atom in Z¹ to which A³ is bonded is a carbon atom, and is A² when the atom in Z¹ to which A³ is bonded is a nitrogen atom,
Q¹¹ is a single bond, -O-, an alkylene group, or an alkylene group having at least 2 carbon atoms and having between carbon-carbon atoms -C(O)NR^{e6}-, -C(O)-, -NR^{e6}-, or -O-,
Q²² is a single bond, -B³-, -R³⁰-B³- or -B²-R³⁰-B³-,
Q²³ is a single bond or -R³⁰-B³-,
Q²⁴ is Q²² when the atom in Z¹ to which Q²⁴ is bonded is a carbon atom and is Q²³ when the atom in Z¹ to which Q²⁴ is bonded is a nitrogen atom,
Q²⁵ is a single bond, or -R³⁰-B³-,
Q²⁶ is a single bond or -R³⁰-B³-,
Z¹ is a group having a (d8+d9) valent cyclic structure having a carbon atom or a nitrogen atom to which A³ is directly bonded and a carbon atom or a nitrogen atom to which Q²⁴ is directly bonded,
R^{e1} is a hydrogen atom or an alkyl group,
R^{e2} is a hydrogen atom, a hydroxyl group, an alkyl group or an acyloxy group,
R^{e3} is an alkyl group,
R^{e6} is a hydrogen atom, an alkyl group having 1 to 6 carbon atoms, or a phenyl group,
d1 is an integer from 0 to 3, d2 is an integer from 0 to 3, and d1+d2 is an integer from 1 to 3,
d3 is an integer from 0 to 3, d4 is an integer from 0 to 3, and d3+d4 is an integer from 1 to 3,
d1+d3 is an integer from 1 to 5,
d2+d4 is an integer from 1 to 5,
d5 is an integer from 1 to 3, d6 is an integer from 1 to 3, and d5+d6 is an integer from 2 to 4,
d7 is 1 or 2,
d8 is an integer of at least 1,
d9 is an integer of at least 1,
d10 is an integer from 1 to 3, d11 is an integer from 1 to 3, and d10+d11 is an integer from 2 to 4, and
d12 is an integer from 1 to 3.

Note that the orientation of B² and B³ is not particularly limited. When there are a plurality of A¹'s, the plurality of A¹'s may be the same as or different from each other. The same holds true for A², A³, Q²², Q²³, Q²⁴, Q²⁵, R^{e1}, R^{e2} and R^{e3}.

Further, d1+d3, d5, d7, d8, and d10 correspond to j and d2+d4, d6, 3-d7, d9, d11, and 1+d12 correspond to x1.

The number of carbon atoms in the alkylene group of R³⁰ is, in view of ease of production of the present compound, and in that the resulting surface layer will be more excellent in abrasion resistance, light resistance, and chemical resistance, preferably from 1 to 10, more preferably from 1 to 6, and particularly preferably from 1 to 4, provided that when the alkylene group has a specific bond between carbon-carbon atoms, the lower limit value of the number of carbon atoms in such an alkylene group is 2.

As the cyclic structure in Z¹, the d8+d9 valent residue having a cyclic structure constituting the aforementioned branch point P¹ may be mentioned, and the preferred embodiments are also the same.

The number of carbon atoms in the alkyl group of R^{e1}, R^{e2}, or R^{e3} is, in view of ease of production of the present compound, preferably from 1 to 6, more preferably from 1 to 3, particularly preferably from 1 to 2.

The number of carbon atoms in the alkyl group moiety in the acyloxy group of R^{e2} is, in view of ease of production of the compound 1, preferably from 1 to 6, more preferably from 1 to 3, and further preferably from 1 to 2.
d8 is, in view of ease of production of the present compound, and in that the resulting surface layer will be more excellent in abrasion resistance and fingerprint stain removability, preferably from 1 to 6, more preferably from 1 to 4, further preferably from 1 to 3.
d9 is, in view of ease of production of the present compound, and in that the resulting surface layer will be more excellent in abrasion resistance and fingerprint stain removability, preferably from 2 to 6, more preferably from 2 to 4, further preferably from 2 or 3.

As other embodiment of L¹, a group represented by the following formulae (L11) to (L17) may be mentioned.

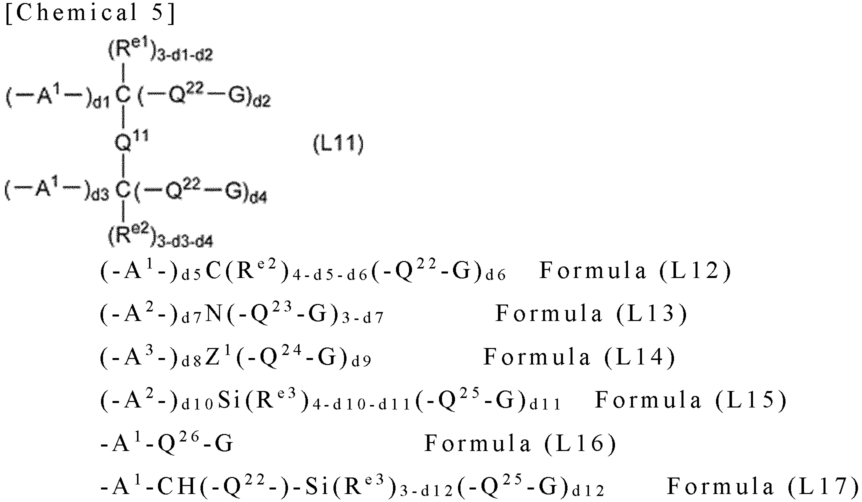

In the formulae (L11) to (L17), the A¹, A², or A³ side is connected to R¹ in the formula (A1), and the Q²², Q²³, Q²⁴, Q²⁵ or Q²⁶ side is connected to R¹¹. G is the following group (G21), and two or more G in L¹ may be the same as or different. The symbols other than G are the same as those in the formulae (L1) to (L7).

-Si(R⁵¹)₃₋ₖ(-Q³-)ₖ Formula (G21)

In the formula (G21), the Si side is connected to Q²², Q²³, Q²⁴, Q²⁵, or Q²⁶, and the Q³ side is connected to R¹¹. R⁵¹ is an alkyl group. Q³ is a single bond or -R⁵²-B³-, R⁵² is an alkylene group, or a group having -C(O)NR³²-, -C(O)-, -NR³²-, or -O- between carbon-carbon atoms of an alkylene group having at least 2 carbon atoms, or - (OSi(R²²)₂)ₚ₁₁-O-, and two or more Q³'s may be the same as or different. k is 2 or 3. R³² is a hydrogen atom, an alkyl group having 1 to 6 carbon atoms, or a phenyl group. R²² is an alkyl group, a phenyl group, or an alkoxy group, and the two R²²'s may be the same as or different. p11 is an integer from 0 to 5, and when p11 is at least 2, the two or more (OSi(R²²)₂) may be the same as or different.

The number of carbon atoms in the alkylene group of Q³ and R⁵² is, in view of ease of production of the present compound, and in that the resulting surface layer will be more excellent in abrasion resistance, light resistance, and chemical resistance, each independently preferably from 1 to 10, more preferably from 1 to 6, and particularly preferably from 1 to 4, provided that when the alkylene group has a specific bond between carbon-carbon atoms, the lower limit value of the number of carbon atoms in such an alkylene group is 2.

The number of carbon atoms in the alkyl group of R⁵¹ is, in view of ease of production of the present compound, preferably from 1 to 6, more preferably from 1 to 3, particularly preferably from 1 to 2.

The number of carbon atoms in the alkyl group of R²² is, in view of ease of production of the present compound, preferably from 1 to 6, more preferably from 1 to 3, particularly preferably from 1 to 2.

The number of carbon atoms in the alkoxy group of R²² is, in that the present compound is excellent in storage stability, preferably from 1 to 6, more preferably from 1 to 3, and particularly preferably from 1 to 2.

p11 is preferably 0 or 1.

As the compound (A1), for example, the following compounds can be mentioned. 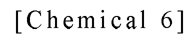 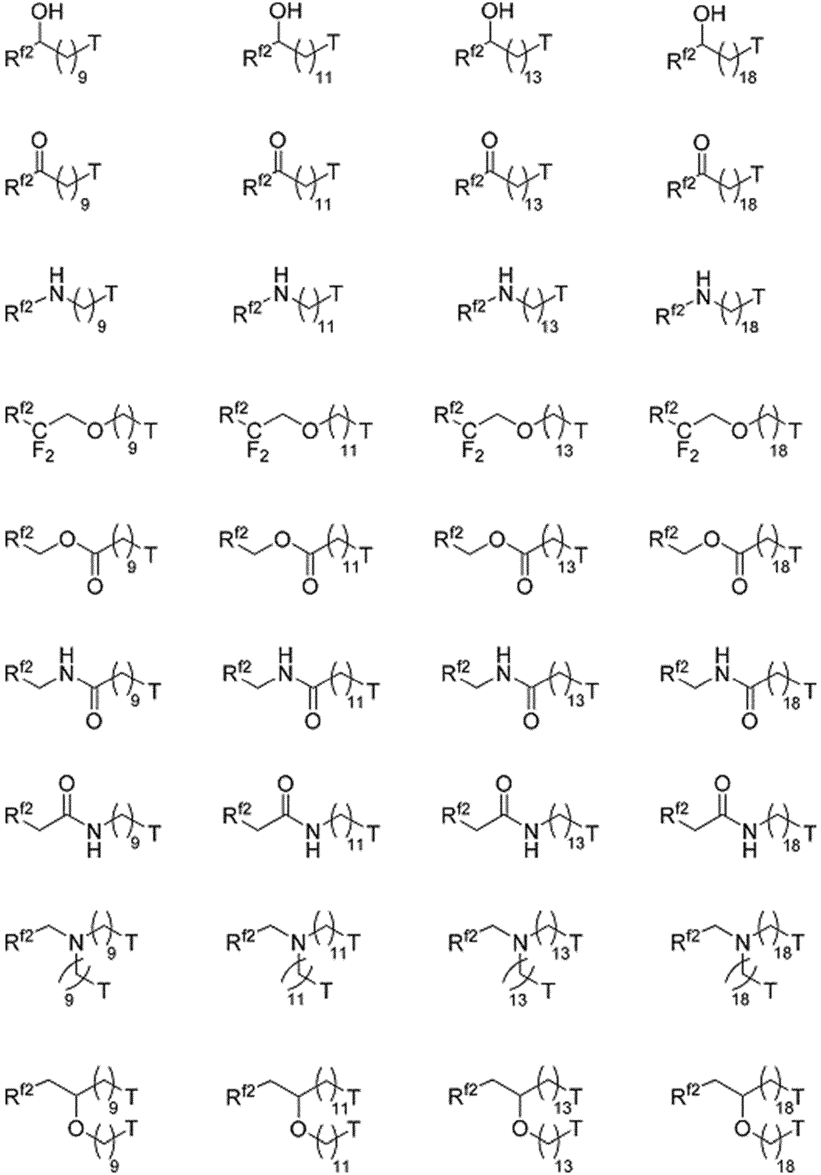 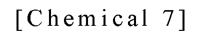 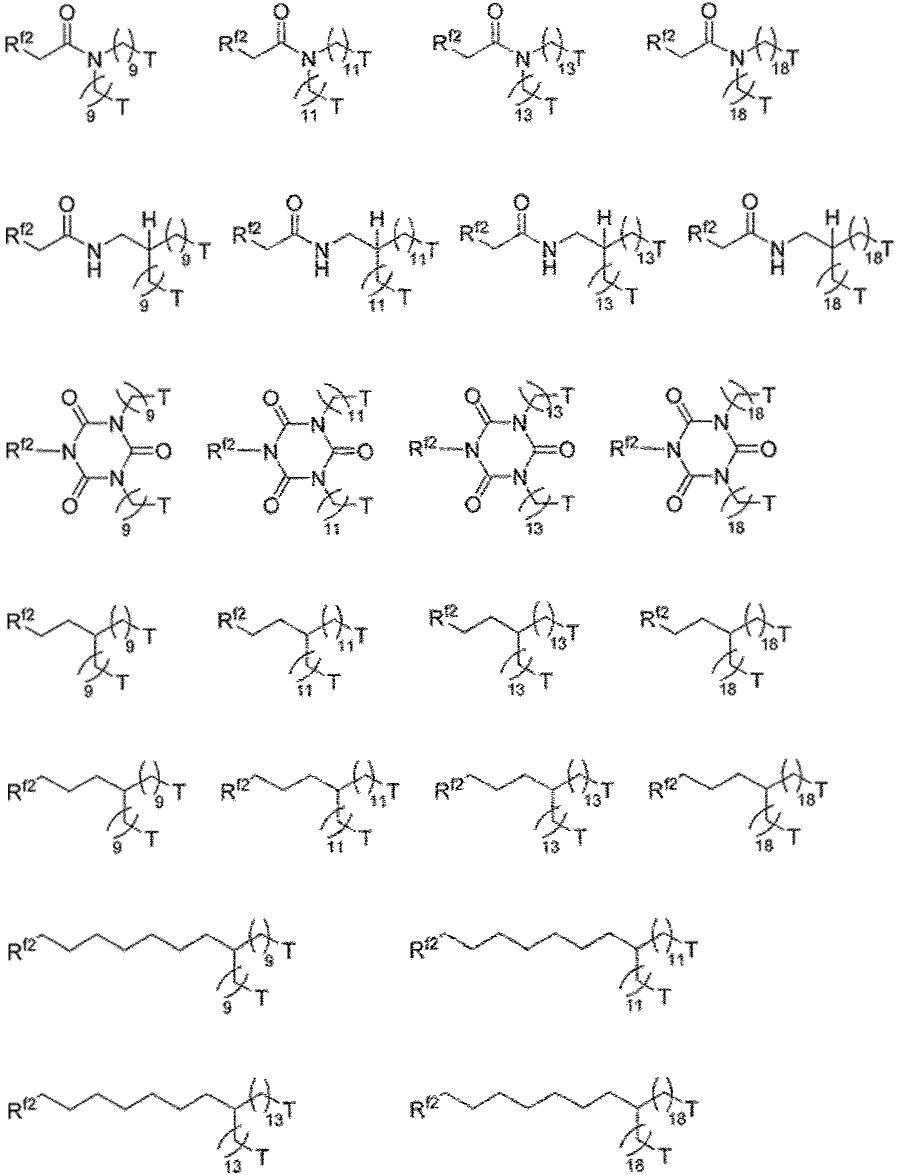 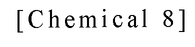 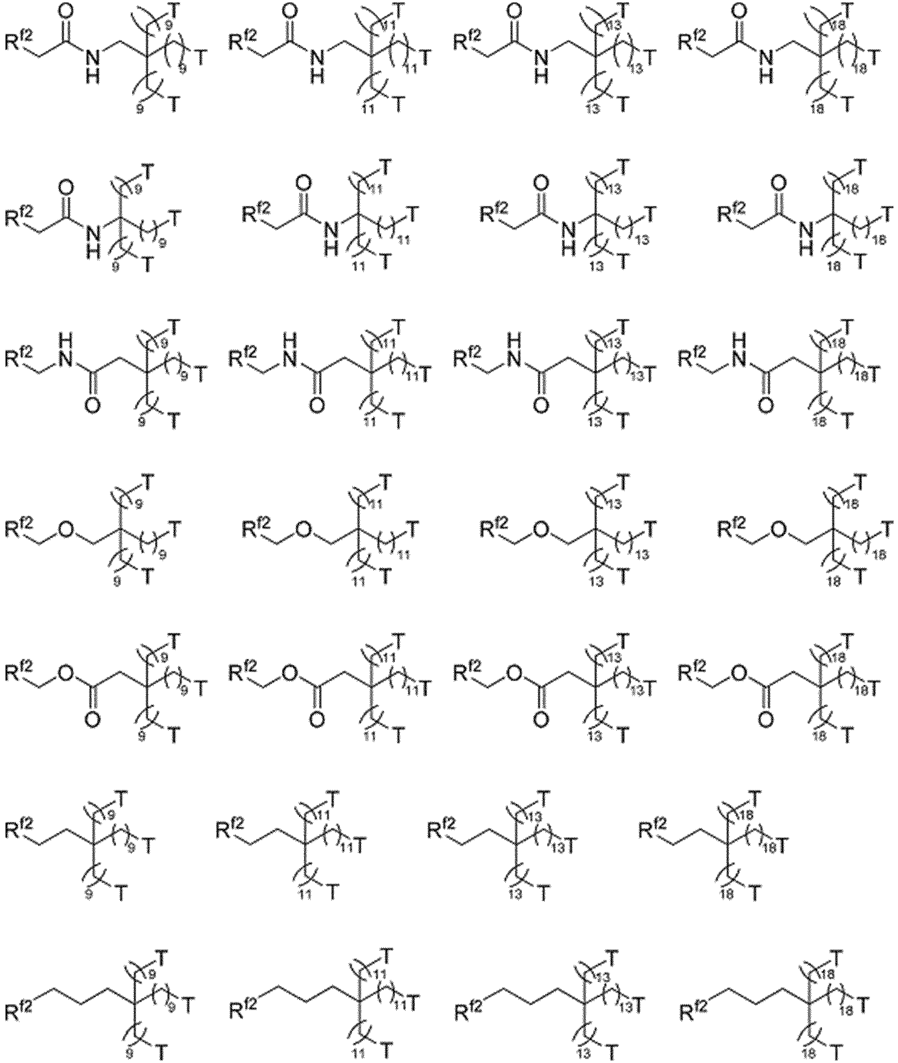 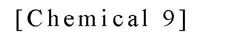 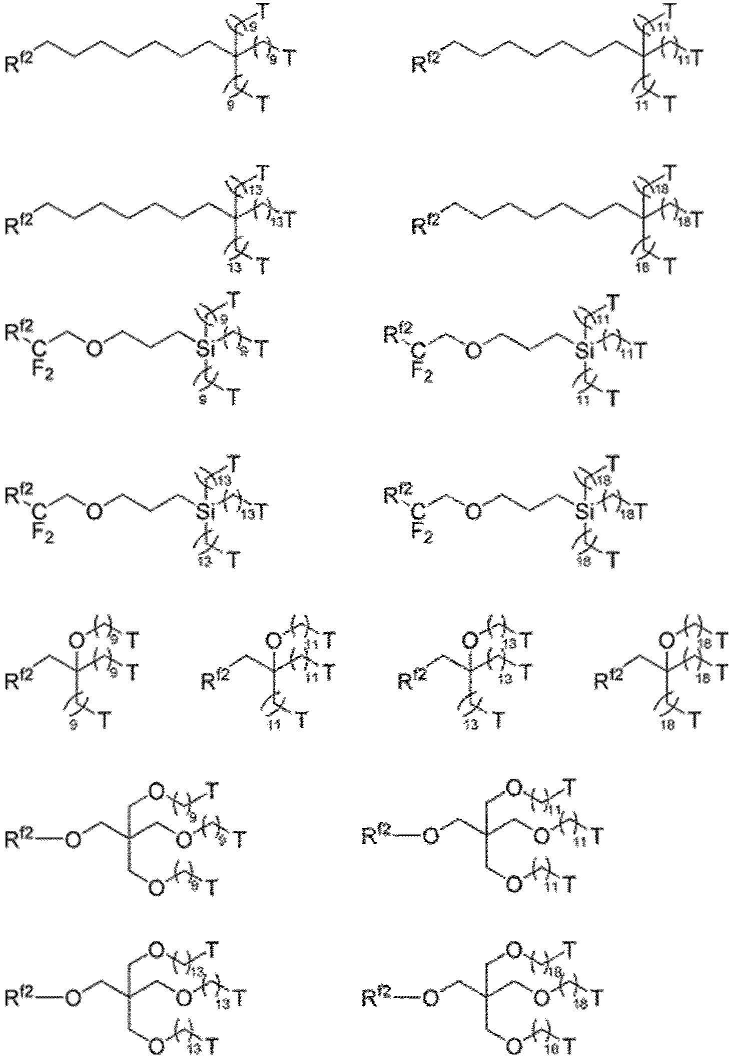 where Rf²'s are each independently similar to [R^{f1}-(OR^{f11})_{yl}-OR¹] or [R^{f1}-(OR^{f11})_{yl}-O-], and T is similar to T¹¹.

### <Compound (A2)>

The compound (A2) has a structure represented by the following formula (A2).

(T³¹-R³¹)ₓ₃-L³-R³-(OR^{f12})_{y2}-O-R²-L²-(R²¹-T²¹)ₓ₂ ... (A2)

where the symbols in the formula (A2) have been described above.

R^{f12} and (OR^{f12})_{y2} are similar to the R^{f11} and (OR^{f11})_{y1}, and the preferred embodiments are also the same.

R² and R³ are each independently similar to the R¹, and the preferred embodiments are also the same.

At least one of R²¹-T²¹ and T³¹-R³¹ is the group represented by the aforementioned formula (g1).

R²¹ and R³¹ corresponding to R^{g1} in the group (g1) are each independently similar to the R^{g1}, and the preferred embodiments are also the same. Here, "having a connecting bond *" can be replaced by "bonded to L²" and "bonded to L³". When L² is a single bond, R²¹ is directly bonded to R². Further, when L³ is a single bond, R³¹ is directly bonded to R³.

The alkylene group in R²¹ and R³¹, which are different from R^{g1}, is similar to that in R¹¹, and the preferred embodiments are also the same.

T²¹ and T³¹ are each independently similar to the above T^{g1}, and the preferred embodiments are also the same. Further, R^{a21}, R^{a22}, z21 that constitute T²¹ or T³¹ each independently similar to the R^{a1}, R^{a2}, and z1, and the preferred embodiments are also the same.

x2 and x3 are each independently similar to x1, and the preferred embodiments are also the same.

L² and L³ are each independently similar to the above L¹ in the case where j is 1.

When, for example, L² and L³ are a single bond, the compound (A2) is represented by the following formula (A2').

T³¹-R³¹-R³-(OR^{f12})_{y2}-O-R²-L²-R²¹-T²¹ ... (A2')

where the symbols in the formula (A2') are similar to those in the formula (A2).

When L² or L³ is a trivalent or higher group, this L² or L³ has at least one branch point (hereinafter referred to as a "branch point P²") selected from the group consisting of C, N, Si, a cyclic structure, and a (1+x2) valent or (1+x3) valent organopolysiloxane residue.

When N is the branch point P², the branch point P² is represented, for example, by *-N(-**)₂. Here, * is a connecting bond on the R² or R³ side and ** is a connecting bond on the R²¹ or R³¹ side.

When C is the branch point P², the branch point P² is represented, for example, by *-C(-**)₃, or *-CR²⁹(-**)₂. Here, * is a connecting bond on the R² or R³ side, ** is a connecting bond on the R²¹ or R³¹ side, and R²⁹ is a monovalent group such as a hydrogen atom, a hydroxyl group, an alkyl group, an alkoxy group, or the like.

When Si is the branch point P², the branch point P² is represented, for example, by *-Si(-**)₃, or *-SiR²⁹(-**)₂. Here, * is a connecting bond on the R¹ side, ** is a connecting bond on the R¹¹ side, and R²⁹ is a monovalent group such as a hydrogen atom, a hydroxyl group, an alkyl group, an alkoxy group, or the like.

The cyclic structure and the organopolysiloxane residue constituting the branch point P² are similar to those of the branch point P¹ and the preferred embodiments are also the same.

Further, a divalent or higher L² or L³ may each independently have the above bond B¹. The embodiment of the bond B¹ has been described above, and the preferred embodiments are also the same.

In the divalent L² or L³, atoms bonded to R² and R²¹ or R³ and R³¹ are each independently an N, O, S, or Si atom or a carbon atom having an oxo group (=0). That is, atoms adjacent to R² and R²¹ or R³ and R³¹ are each a constituent element of the bond B¹. Specific examples of the divalent L² or L³ include a single bond, at least one bond B¹ (e.g., *-B¹-**, *-B¹-R^{2g}-B¹-**), or the like. Here, R²⁸ is a single bond or a divalent organic group, * is a connecting bond on the R¹ side, and ** is a connecting bond on the R¹¹ side.

In the trivalent or higher L² or L³, atoms bonded to R² and R²¹ or R³ and R³¹ are each independently an N, O, S, or Si atom, a carbon atom constituting a branch point, or a carbon atom having a hydroxyl group or an oxo group (=0). That is, atoms adjacent to R² and R²¹ or R³ and R³¹ are each a constituent element of the bond B¹ or the branch point P². As specific examples of the trivalent or higher L² or L³, at least one branch point P² (e.g., {*-P²(-**)ₓ} or {*-P¹(-R^{2g}-P¹-**)ₓ₁}), a combination of at least one branch point P² with at least one bond B¹ (e.g., {*-B¹-R²⁸-P¹(-**)ₓ} or {*-B¹-R²⁸-P¹(-R²⁸-B¹-**)ₓ}) may be mentioned. Here, x is x2 when L² and x is x3 when L³. R²⁸ is a single bond or a divalent organic group, * is a connecting bond on the R¹ side, and ** is a connecting bond on the R¹¹ side.

The embodiment of the above R²⁸ has already been described above, and the preferred embodiments are also the same.

The above L² or L³ is, in view of ease of production of the present compound, preferably a group represented by each of the following formulae (L21) to (L27). 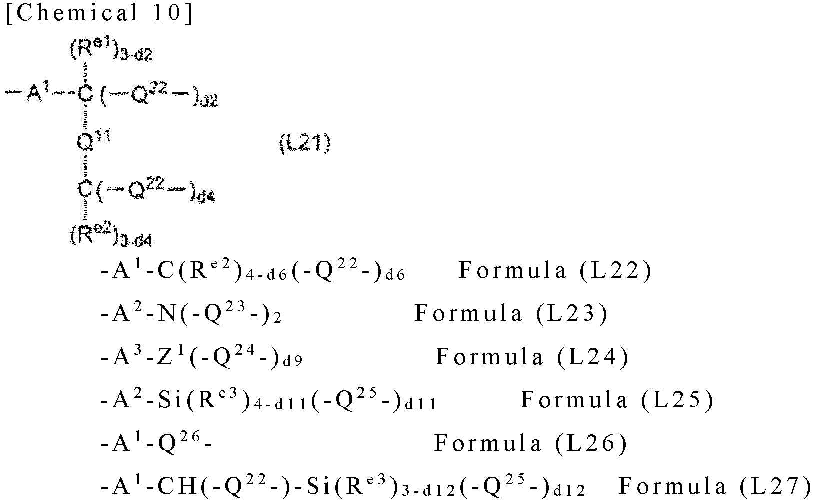 where, in the formulae (L21)-(L27), the A¹, A² or A³ side is connected to the formula R² or R³ and the Q²², Q²³, Q²⁴, Q²⁵ or Q²⁶ side is connected to R²¹ or R³¹.

Here, A1, A², A³, Q¹¹, Q²², Q²³, Q²⁴, Q²⁵, Q²⁶, R^{e1}, R^{e2}R^{e3}, and R^{e6} are similar to those described with regard to the above L¹, and the preferred embodiments are also the same.

Z¹ is a group having a (1+d9) valent cyclic structure having a carbon atom or a nitrogen atom to which A³ is directly bonded and having a carbon atom or a nitrogen atom to which Q²⁴ is directly bonded,
d2 is an integer from 0 to 3, d4 is an integer from 0 to 3, and d2+d4 is an integer from 1 to 5,
d6 is an integer from 1 to 3,
d9 is an integer of at least 1,
d11 is an integer from 1 to 3, and
d12 is an integer from 1 to 3.

Note that d2+d4, d6, d9, d11, and 1+d12 are x2 or x3.

d9 is, in view of ease of production of the present compound, and in that the resulting surface layer will be more excellent in abrasion resistance and fingerprint stain removability, preferably from 2 to 6, more preferably from 2 to 4, further preferably 2 or 3.

As other embodiments of the above L² or L³, a group represented by one of the following formulae (L31) to (L37) may be mentioned.

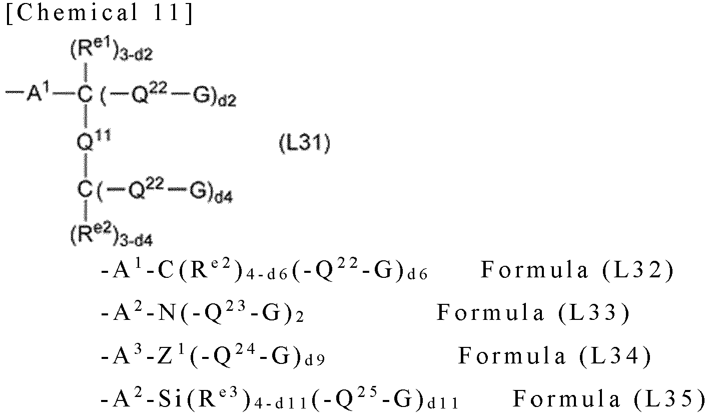

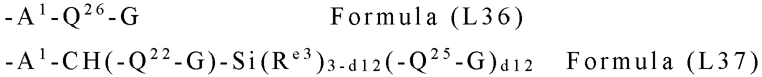

In the formulae (L31) to (L37), the A¹, A² or A³ side is connected to R² or R³ in each formula, and the Q²², Q²³, Q²⁴, Q²⁵ or Q²⁶ side is connected to R²¹ or R³¹. G is the aforementioned group (G21), and the preferred embodiments are also the same. The symbols other than G are the same as those in the formulae (L21) to (L27), and the preferred embodiments are also the same.

As the compound (A2), for example, the following ones can be mentioned. 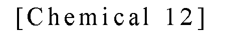 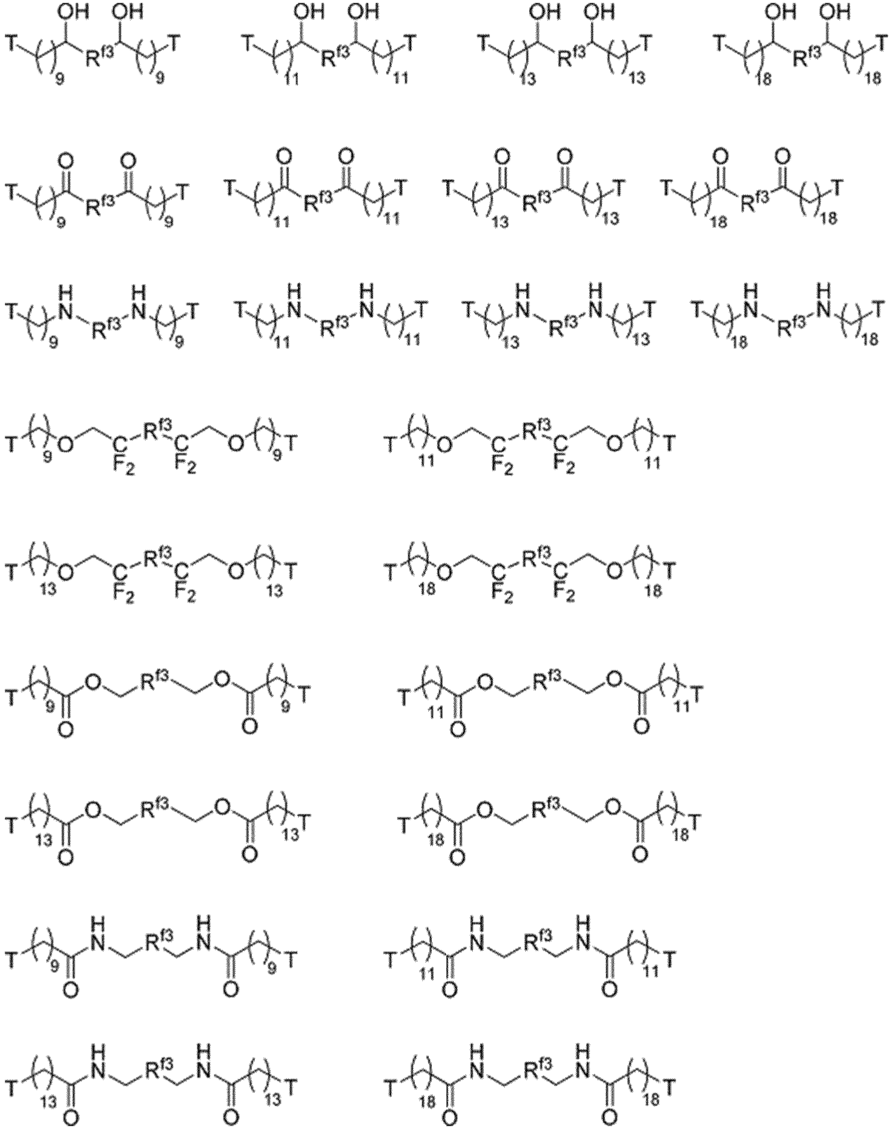 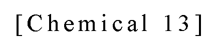 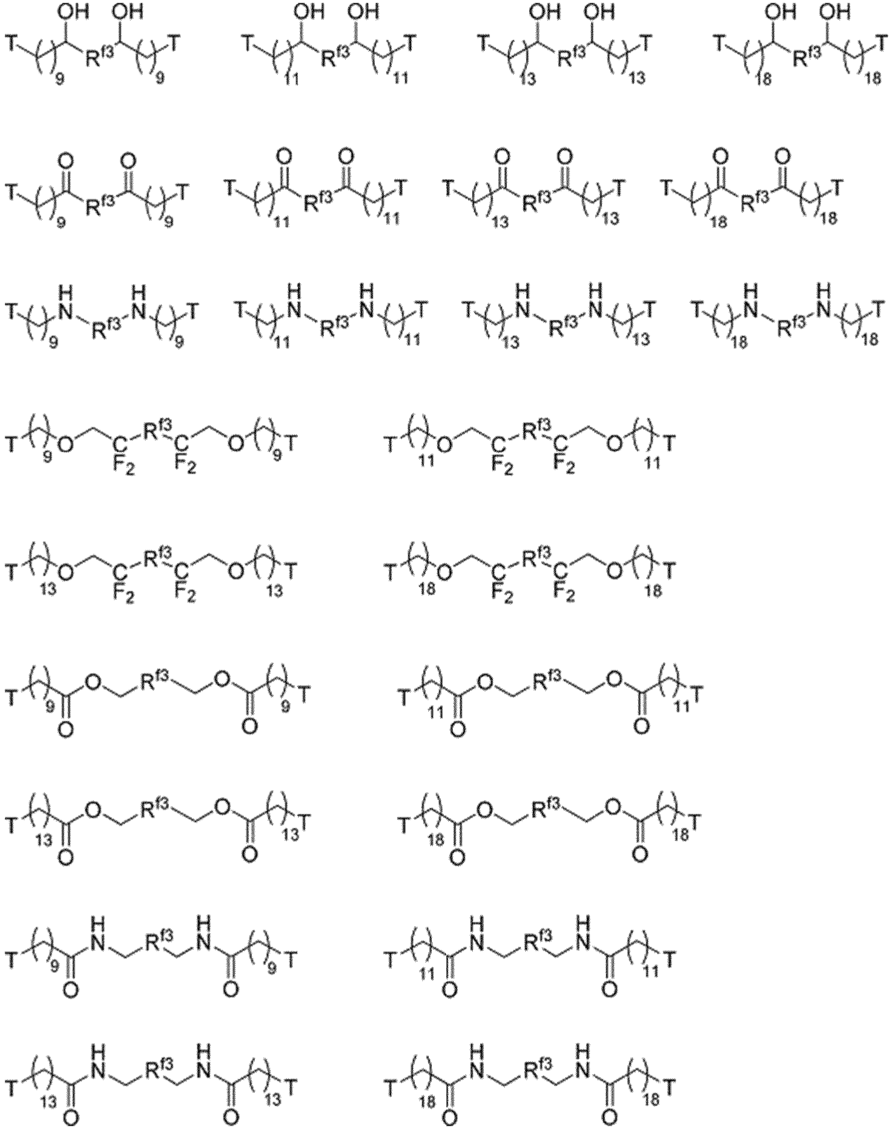 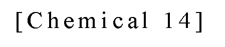 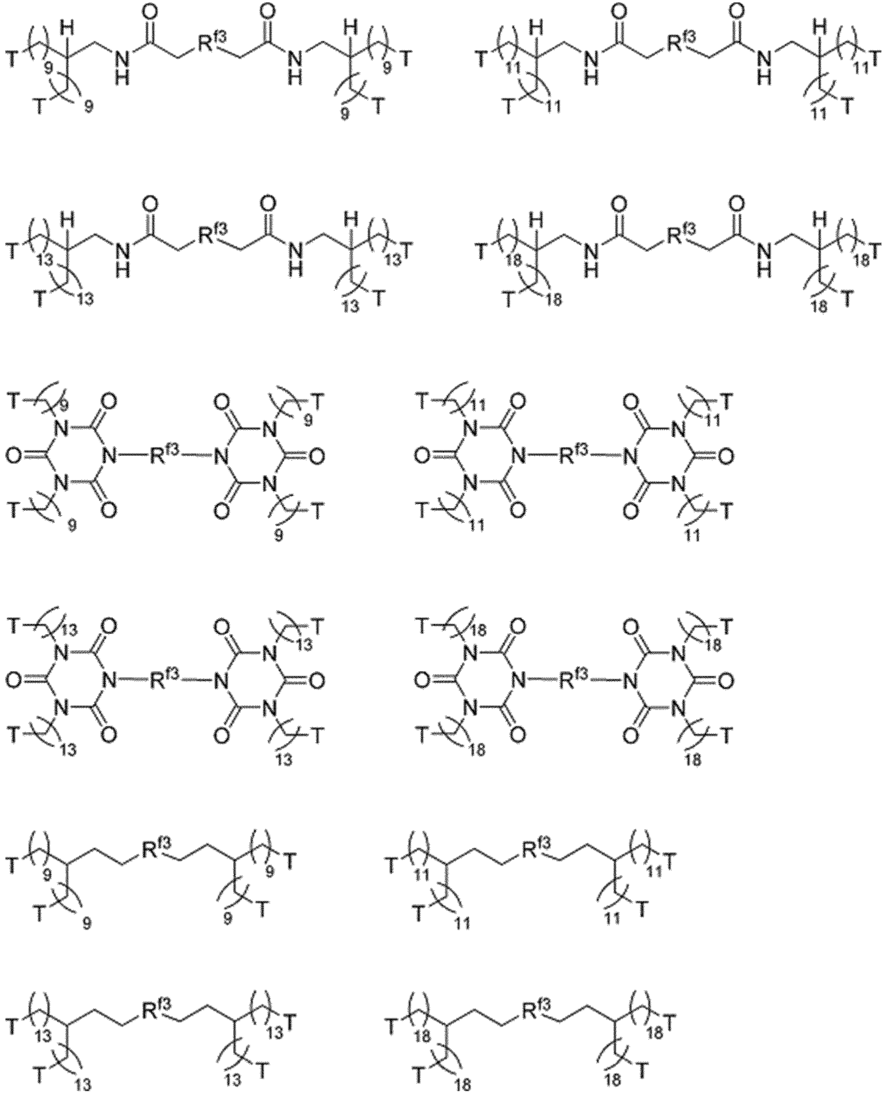 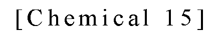 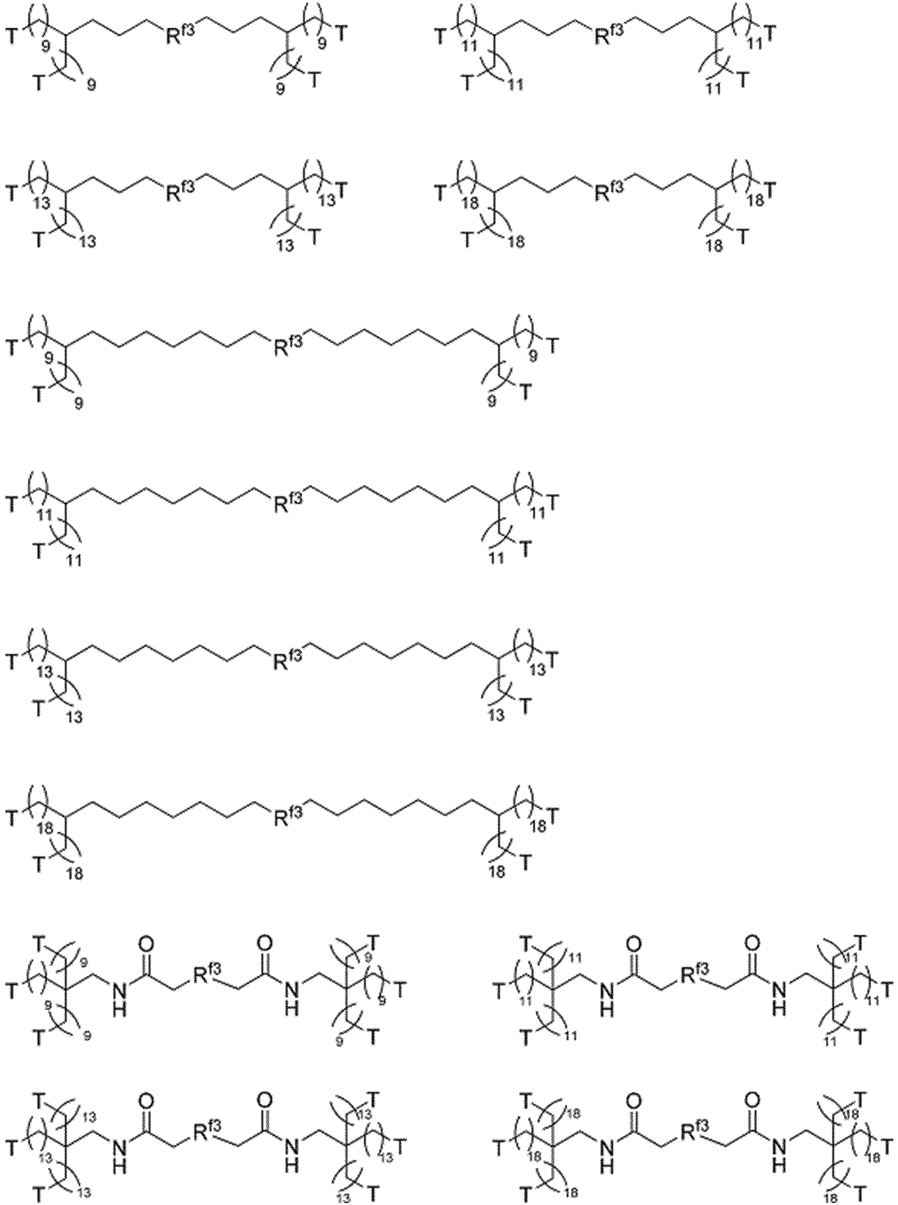 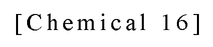 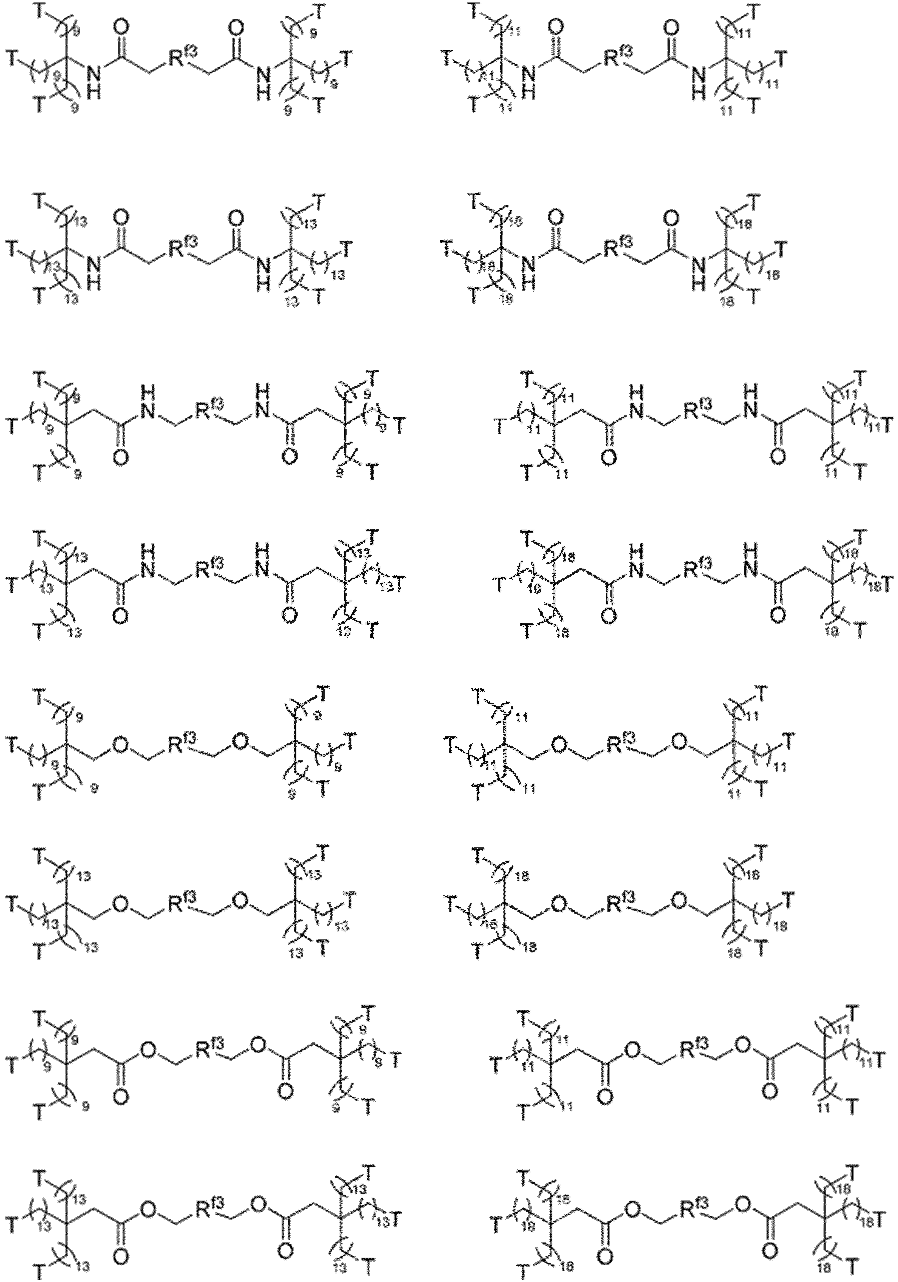 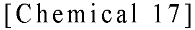 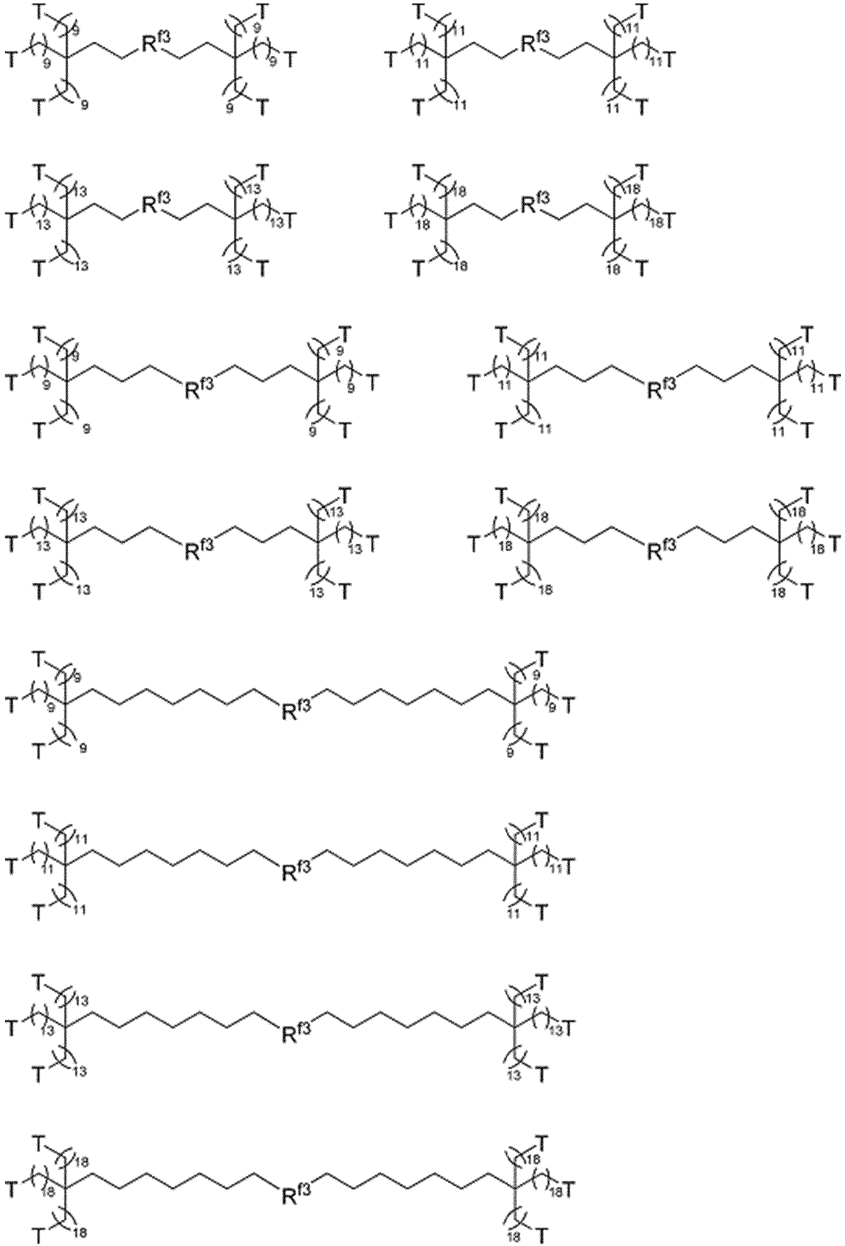 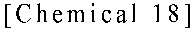 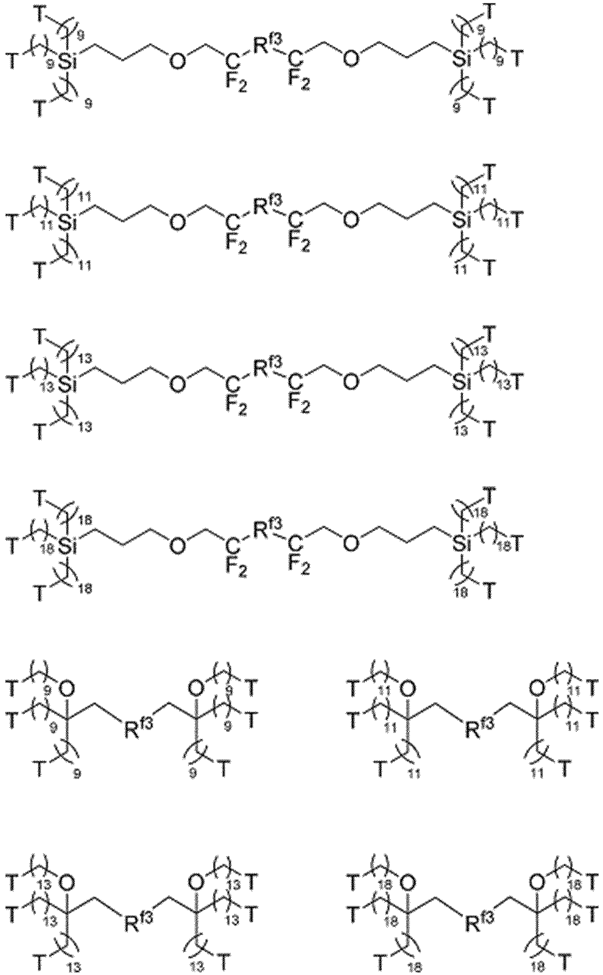 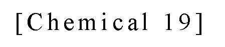 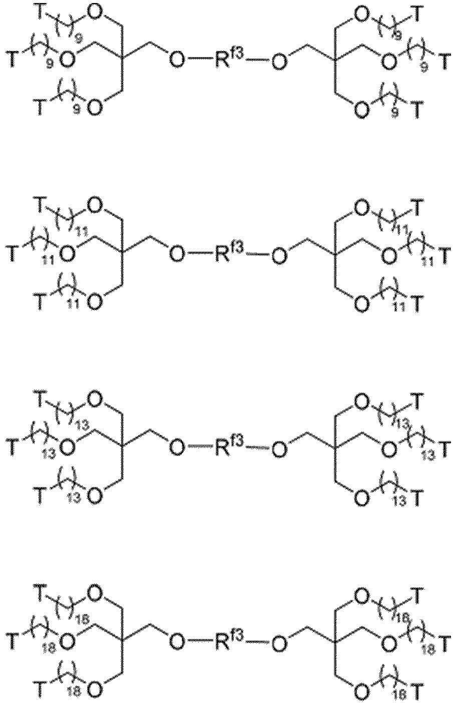 where Rf³'s are each independently similar to [R³-(OR^{f12})_{y2}-OR²] or [(OR^{f12})_{y2}-O] and T is similar to T²¹ or T³¹.

### <Compound (A3)>

The compound (A3) has a structure represented by the following formula (A3).

Q¹[-(OR^{f13})_{y3}-O-R⁴-L⁴-(R⁴¹-T⁴¹)ₓ₄]ᵣ₁ ... (A3)

where the symbols in the formula (A3) have been described above.

R^{f13} and (OR^{f13})_{y3} are similar to the R^{f11} and (OR^{f11})_{yl}, and the preferred embodiments are also the same.

R⁴ is similar to the R¹, and the preferred embodiments are also the same.

At least one of R⁴¹-T⁴¹'s is a part that corresponds to the aforementioned group (g1).

R⁴¹ that corresponds to R^{g1} in the group (g1) is similar to the R^{g1}, and the preferred embodiments are also the same. Here, "having a connecting bond *" can be replaced by "bonded to L⁴". When L⁴ is a single bond, R⁴¹ is directly bonded to R⁴.

The alkylene group in R⁴¹, which is different from R^{g1}, is similar to that in R¹¹, and the preferred embodiments are also the same.

T⁴¹, and R^{a41}, R^{a42}, and z41 that constitute T⁴¹ are respectively similar to T^{g1}, R^{a1}, R^{a2}, and z1, and the preferred embodiments are also the same.

x4 is similar to x1, and the preferred embodiments are also the same.

L⁴ is similar to L² or L³, and the preferred embodiments are also the same.

Q¹ is an r1 valent group having a branch point, and r1 is preferably 3 or 4.

As the branch point P³ that constitutes Q¹, N, C, Si or a cyclic structure may be mentioned. The number of branch points P³ may be 1, or may be 2 or more.

When N is the branch point P³, the branch point P³ is represented, for example, by N(-*)₃ or NR²⁹(-*)₂.

When C is the branch point P³, the branch point P³ may, for example, be C(-*)₄, CR²⁹(-*)₃, or C(R²⁹)₂(-*)₂.

When Si is the branch point P³, the branch point P³ may, for example, be Si(-*)₄, SiR²⁹(-*)₃, or Si(R²⁹)₂(-*)₂. Here, * is a connecting bond on the OR^{f13} side and R²⁹ is a monovalent group. R²⁹ may be a hydrogen atom, a fluorine atom, a hydroxyl group, an alkyl group, a fluoroalkyl group, a fluoropolyether chain not containing R⁴¹-T⁴¹ or the like.

As the cyclic structure that constitutes the branch point P³, the components similar to those described with regard to the branch point P¹ may be mentioned. The substituent of the cyclic structure may further include, besides the aforementioned substituent, a fluorine atom, a fluoroalkyl group, and a fluoropolyether chain not containing R⁴¹-T⁴¹.

The Q¹ is, in view of ease of production of the present compound, preferably a group represented by any one of the following formulae (Q1) to (Q6). 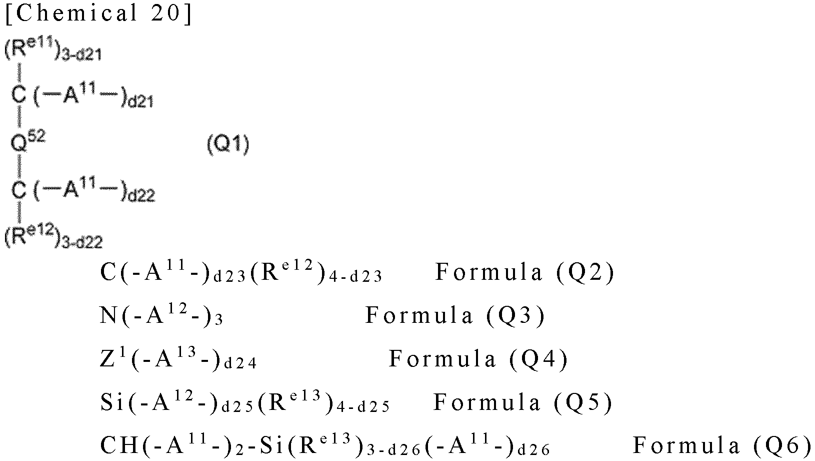 where, in the formulae (Q1) to (Q6), A¹¹ is connected to (OR^{f13}).

Here, A¹¹ is a single bond, -R⁴⁰-, or -B¹³-R⁴⁰-, R⁴⁰ is an alkylene group, a fluoroalkylene group, or a group having - C(O)NR^{e16}-, -C(O)-, -CO(O)-, -NR^{e16}- or -O- between carbon-carbon atoms of an alkylene group or a fluoroalkylene group having at least 2 carbon atoms, and B¹³ is -C(O)NR^{e16}-, -C(O)-, -NR^{e16}- or -O-,
A¹² is a single bond, or -R⁴⁰-,
A¹³ is A¹¹ when the atom in Z¹ to which A¹³ is bonded is a carbon atom and is A¹² when the atom in Z¹ to which A¹³ is bonded is a nitrogen atom,
Z¹ is a group having an r1 valent cyclic structure, Z¹ having a carbon atom or a nitrogen atom to which A¹³ is directly bonded,
Q⁵² is a single bond, -O-, an alkylene group, a fluoroalkylene group, or a group having -C(O)NR^{e16}-, -C(O)-, -NR^{e16}- or -O- between carbon-carbon atoms of an alkylene group or a fluoroalkylene group having at least 2 carbon atoms,
R^{e11} is a hydrogen atom, a fluorine atom, an alkyl group, a fluoroalkyl group, a fluoropolyether chain not containing R⁴¹-T⁴¹, or a group having a repetition structure of -Q⁵²-C(R^{e11})_{3-d21}(-A¹¹-)_{d21} in a range in which r1 is from 3 to 4,
R^{e12} is a hydrogen atom, a fluorine atom, a hydroxyl group, an alkyl group, a fluoroalkyl group, or a fluoropolyether chain not containing R⁴¹-T⁴¹,
R^{e13} is an alkyl group or a fluoroalkyl group,
R^{e16} is a hydrogen atom, an alkyl group having 1 to 6 carbon atoms, a fluoroalkyl group, or a phenyl group that may be substituted with fluorine,
d21 is an integer from 0 to 3, d22 is an integer from 0 to 3, and d21+d22 is an integer from 3 to 4,
d3 is an integer from 0 to 3, d4 is an integer from 0 to 3, and d3+d4 is an integer from 1 to 3,
d23 is 3 or 4,
d24 is 3 or 4,
d25 is 3 or 4, and
d26 is 1 or 2.

Note that the orientation of B¹³ is not particularly limited. When there are a plurality of A¹¹'s, the plurality of A¹'s may be the same as or different from each other. The same holds true for A¹², A¹³, R^{e11}, R^{e12}, and R^{e13}.

The number of carbon atoms in the alkylene group or the fluoroalkylene group of R⁴⁰ is, in view of ease of production of the present compound, and in that the resulting surface layer will be more excellent in abrasion resistance, light resistance, and chemical resistance, preferably from 1 to 10, more preferably from 1 to 6, and particularly preferably from 1 to 4, provided that when the alkylene group has a specific bond between carbon-carbon atoms, the lower limit value of the number of carbon atoms in such an alkylene group is 2.

As the cyclic structure in Z¹, the aforementioned cyclic structure may be mentioned, and the preferred embodiments are also the same.

The number of carbon atoms in the alkyl group or the fluoroalkylene group of R^{e11}, R^{e12} or R^{e13} is, in view of ease of production of the present compound, preferably from 1 to 6, more preferably from 1 to 3, particularly preferably from 1 to 2.

As the compound (A3), for example, the following ones can be mentioned. 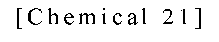 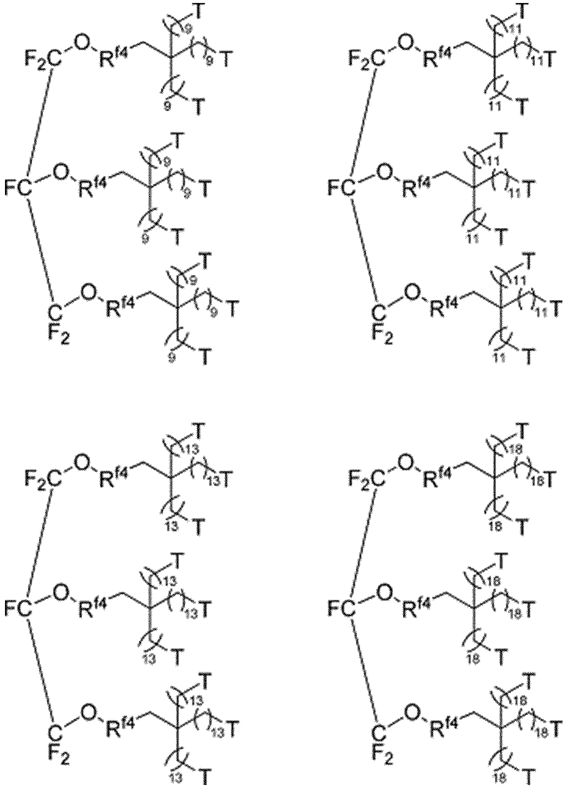 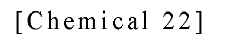 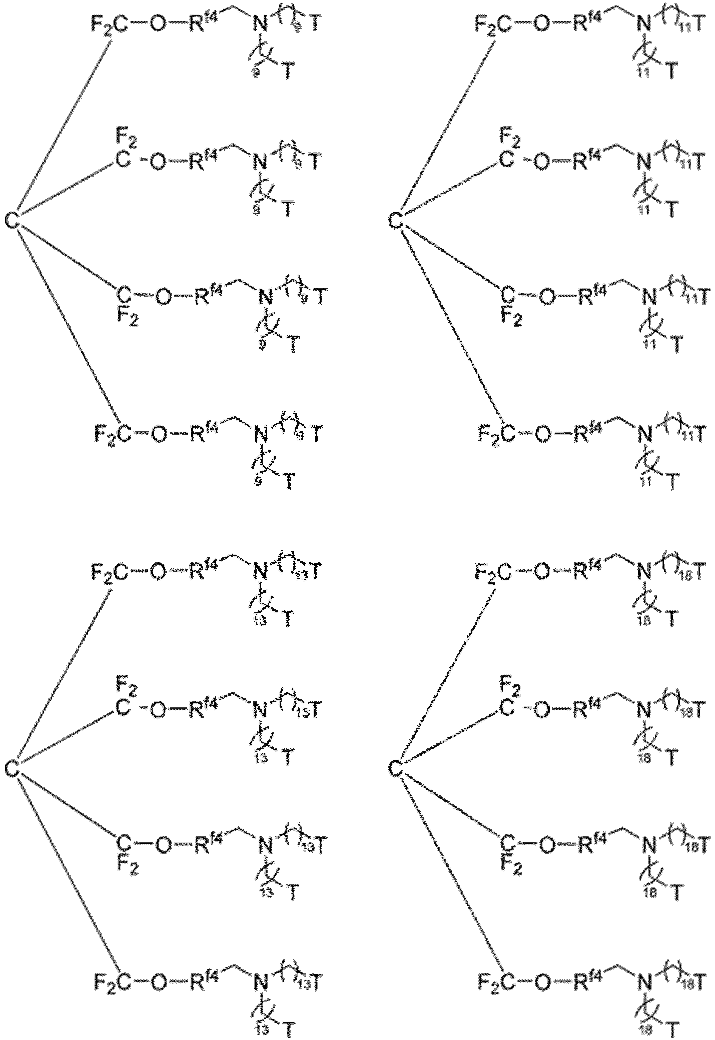 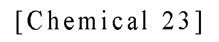 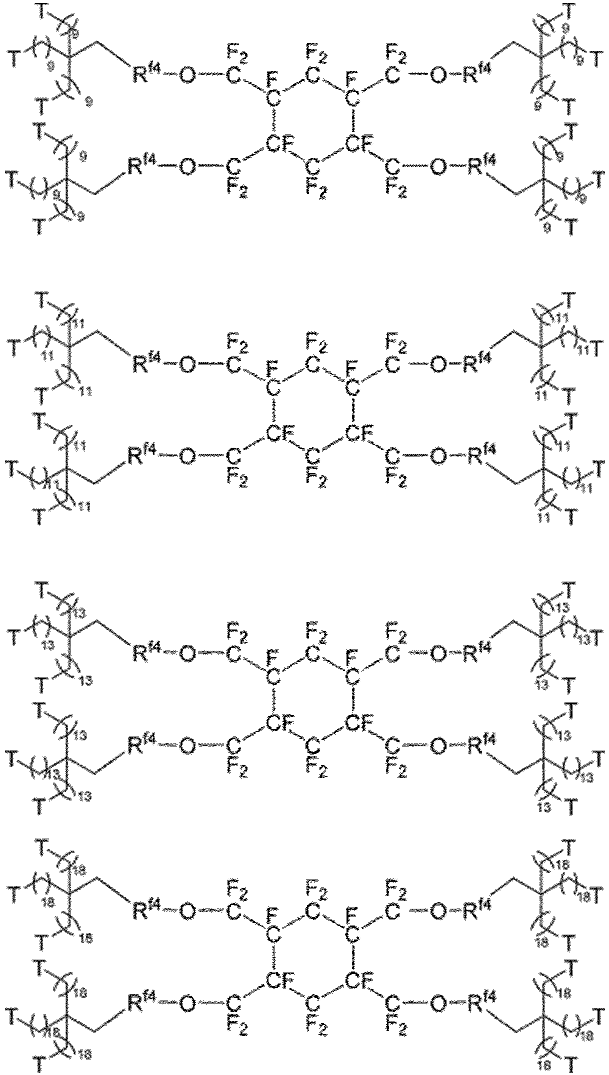 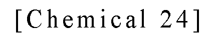 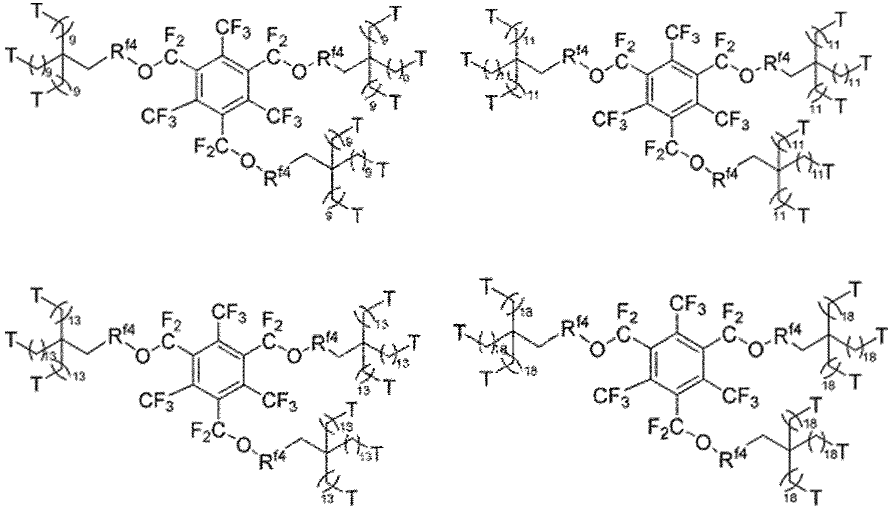 where Rf⁴'s are each independently similar to [-(OR^{f13})_{y3}-OR⁴-]ᵣ₁ or [-(OR^{f13})_{y3}-O-]ᵣ₁, and T is similar to T⁴¹.

Further, specific examples of the present compound may include the following compounds. 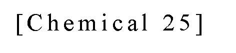 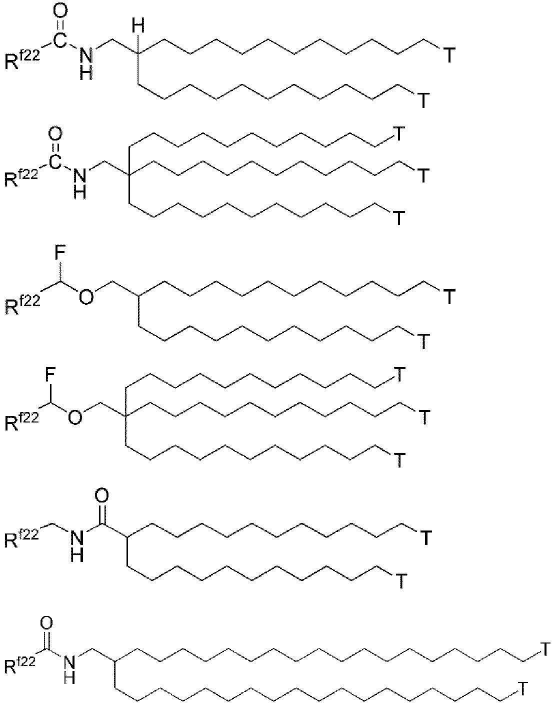 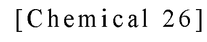 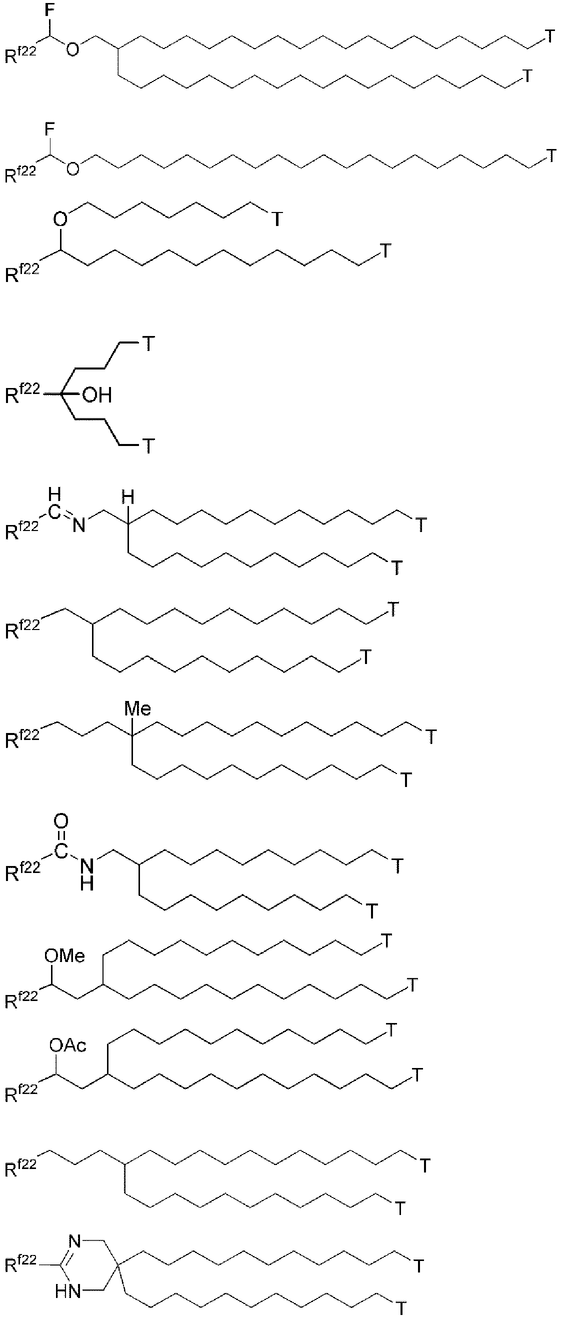 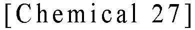 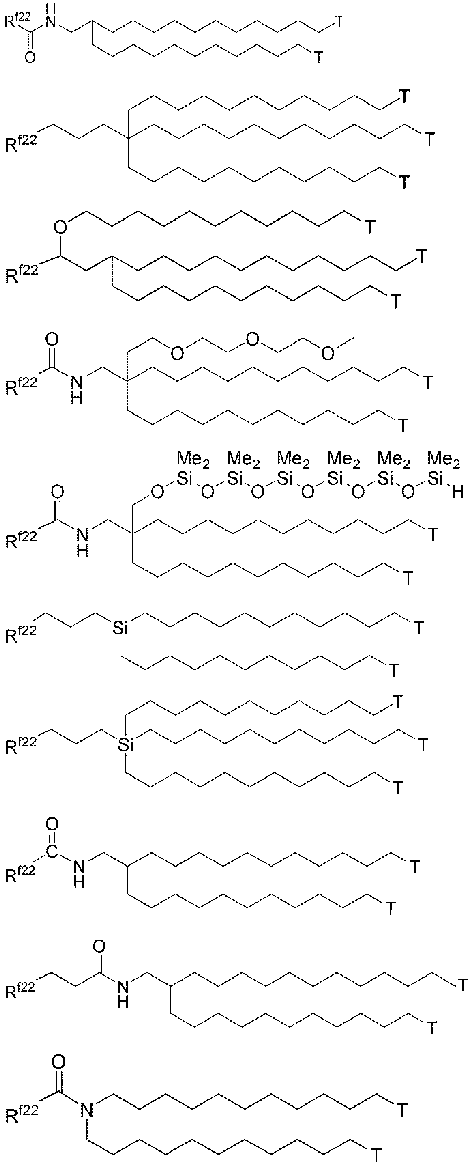 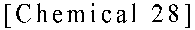 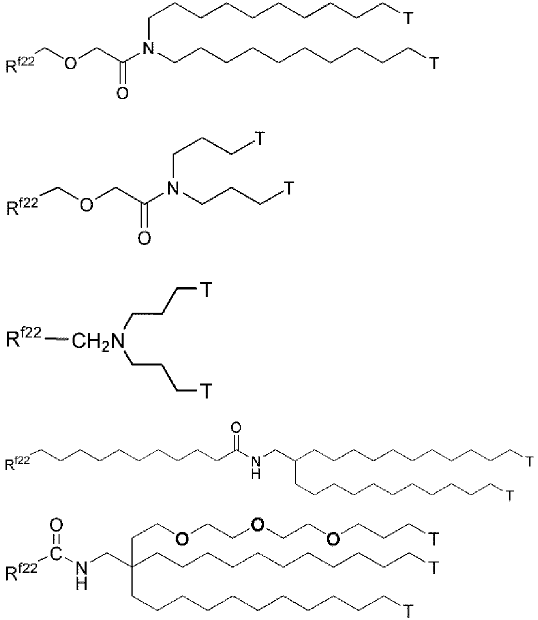 where R^{f22}'s are each independently similar to [R^{f1}-(OR^{f11})_{y1}] and T is similar to T^{g1}.

More detailed specific examples of the present compound may include the following compounds. 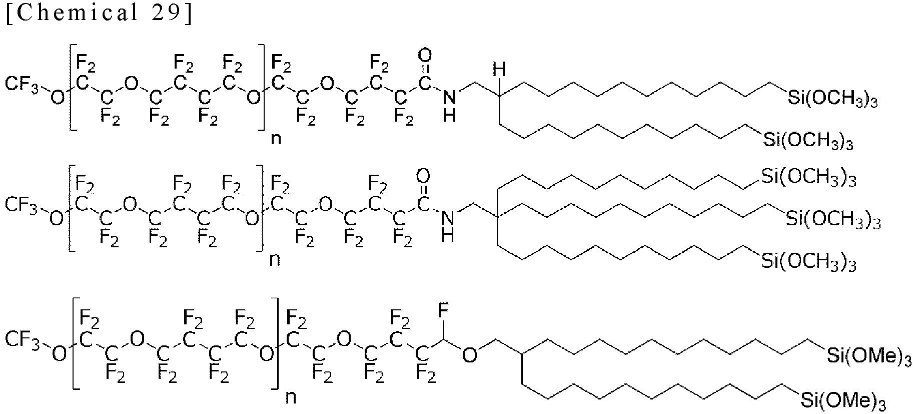 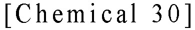 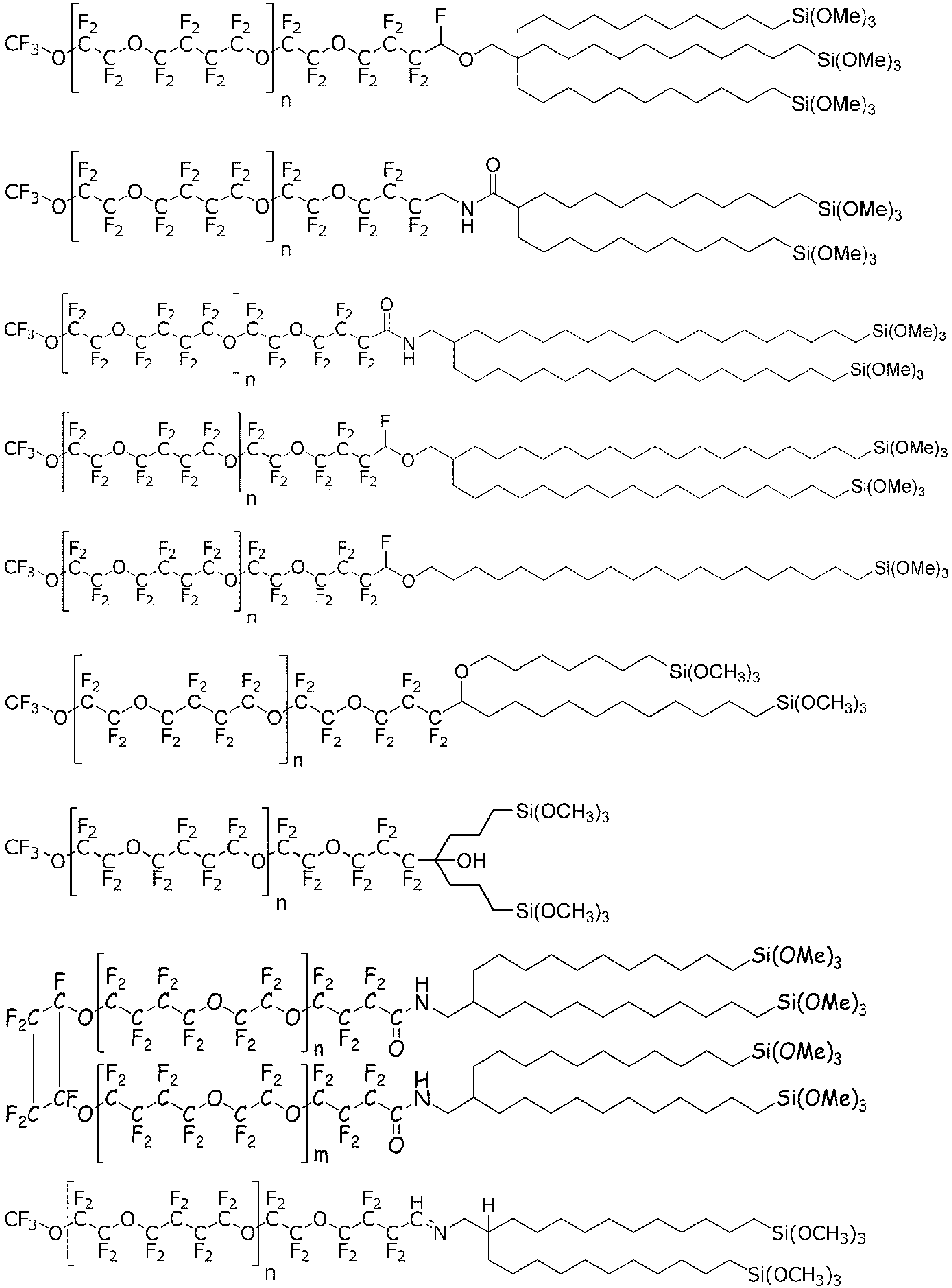 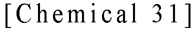 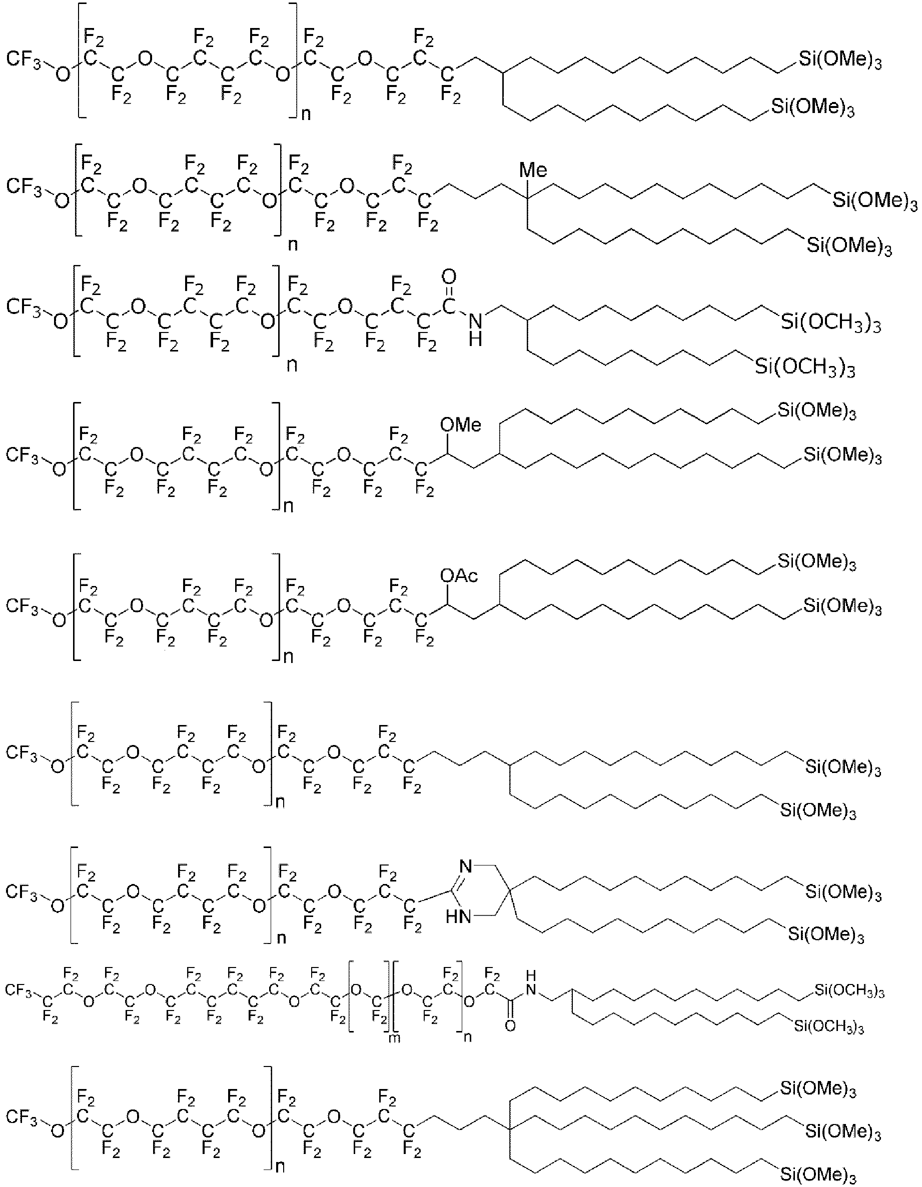 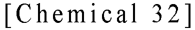 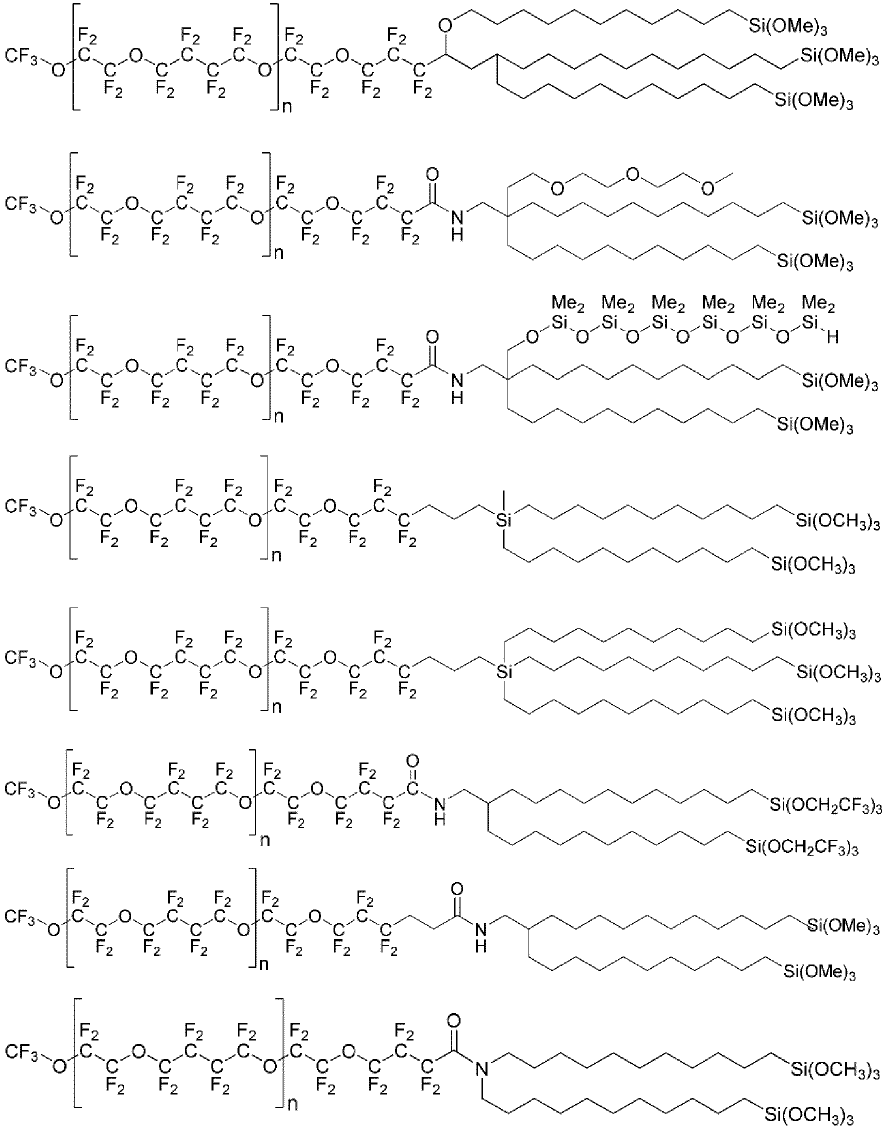 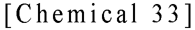 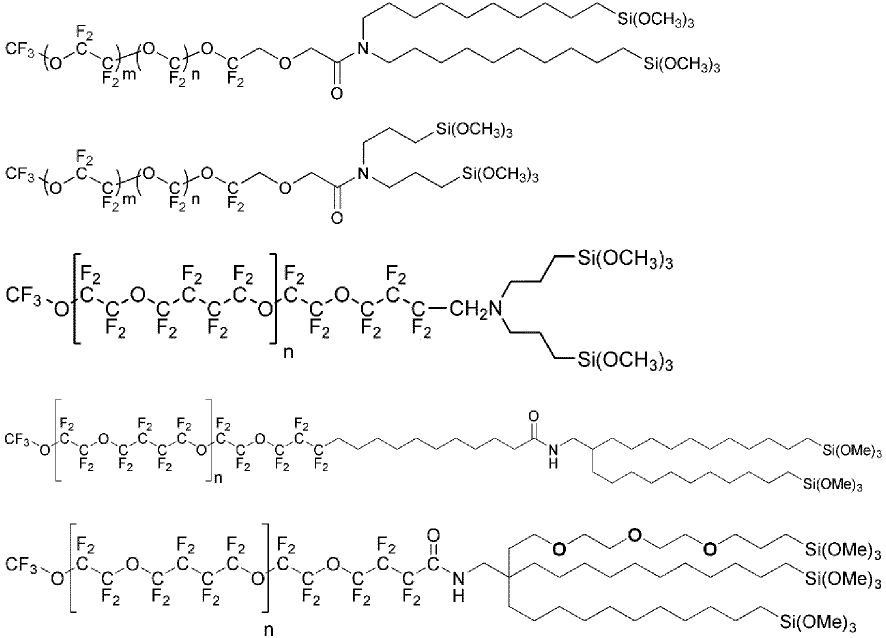 where m and n are each independently an integer of at least 1.

### <Method for producing present compound>

While the method for producing the present compound is not particularly limited, in view of ease of production and the like, a method for hydrosilylating the following compound (B) with the following compound (C1) is preferably employed. The aforementioned group (g1) is obtained by hydrosilylating the following group (g2) with the following compound (C1).

### (Compound (B))

A compound including a fluoropolyether chain and a group represented by the following formula (g2) .

*-R^{g2}-CH=CH₂ ... (g2)

where
R^{g2} is an alkylene group in which an atom having a connecting bond * may be an etheric oxygen atom and that may contain an etheric oxygen atom between carbon-carbon atoms, R^{g2} containing, either alone or in combination with -CH=CH₂, a carbon chain with at least 9 carbon atoms linked together, and
* is a connecting bond bonded to the fluoropolyether chain directly or bonded to it via a linking group.

   HSiR^{a1}_{z1}R^{a2}_{3-z1} ··· (C1)
where R^{a1}, R^{a2}, and Z1 are similar to those in the aforementioned group (g1), and the preferred embodiments are also the same.

The aforementioned compound (B) is, in view of ease of preparation and ease of handling of the compound, preferably a compound represented by the following formula (B1), the following formula (B2) or the following formula (B3).

[R^{f1}-(OR^{f11})_{y1}-O-R¹]ⱼ-L¹-(R^{g12}-CH=CH₂)ₓ₁ ··· (B1)

(CH₂=CH-R^{g12})ₓ₃-L³-R³-(OR^{f12})_{y2}-O-R²-L²-(R^{g12}-CH=CH₂)ₓ₂ ... (B2)

Q¹[-(OR^{f13})_{y3}-O-R⁴-L⁴-(R^{g12}-CH=CH₂)ₓ₄]ᵣ₁ ··· (B3)

where
at least one of R^{g12}'s in the molecules is R^{g2} and other R^{g12}'s do not contain, either alone or in combination with -CH=CH₂, a carbon chain with at least 9 carbon atoms linked together.

The other symbols have already been described above, and its preferable embodiments have already been described above.

The compound (B) may be obtained by changing, for example, the raw material to the following compound (E) in a known preparation method.

Specifically, for example, a method for introducing the following compound (E) into a precursor of the compound (B) (e.g., the following compounds (D1) to (D3)) may be mentioned.

[R^{f1}-(OR^{f11})_{y1}-O-R¹]ⱼ-L¹-(E¹)ₓ₁ ··· (D1)

(E¹)ₓ₃-L³-R³-(OR^{f12})_{y2}-O-R²-L²-(E¹)ₓ₂ ... (D2)

Q¹[-(OR^{f13})_{y3}-O-R⁴-L⁴-(E¹)ₓ₄]ᵣ₁ ··· (D3)

E²-R^{g2}-CH=CH₂ ... (E)

where
E¹ is -OH, -OR, -C(O)-X, -I, -NH₂, or -CH=CH₂,
X is a halogen atom, an alkoxy group, a hydroxyl group or an amino group,
R is an alkyl group,
E² is -OH, -OR, -C(O)-X, -I, -NH₂, or -CH=CH₂, and a substituent capable of undergoing addition reaction in accordance with E¹ may be selected as E².

The other symbols have already been described above.

As the method for preparing the compounds (D1) to (D3), and the addition reaction of the compound corresponding to the compound (E), for example, the method disclosed in International Patent Publication No. WO 2009/008380, the method disclosed in International Patent Publication No. WO 2013/121984, the method disclosed in International Patent Publication No. WO 2013/121986, the method disclosed in International Patent Publication No. WO 2015/087902, the method disclosed in Patent Literature 1, the method disclosed in International Patent Publication No. WO 2017/038832, the method disclosed in International Patent Publication No. WO 2018/143433, the method disclosed in Japanese Unexamined Patent Application No. 2017-104731, the method disclosed in International Patent Publication No. WO 2021/060537, the method disclosed in International Patent Publication No. WO 2021/054417 and the like may be mentioned.

### [Composition]

The composition of the present invention (hereinafter also referred to as "the present composition") contains the aforementioned compound according to the present invention, and at least one of a fluorinated compound other than the present compound and the following impurities. Examples of the impurities include compounds inevitably generated during the production of the present compound and other fluorinated compound. The present composition does not contain a liquid medium described later.

Examples of other fluorinated compound include fluorinated compounds yielded as by-products during the process for producing the present compound (hereinafter also referred to as a "by-product fluorinated compound"), and known fluorinated compounds used in the same application as those of the present compound.

The other fluorinated compound is preferably a compound which is less likely to reduce the properties of the present compound.

The content of the other fluorinated compound is, in order to sufficiently exhibit properties of the present compound, in the total amount of this composition, preferably less than 50% by mass, more preferably less than 30% by mass, and further preferably less than 10% by mass.

Examples of the by-product fluorinated compounds include an unreacted fluorinated compound during the production of the present compound. When the present composition contains the by-product fluorinated compound, a purification process for removing the by-product fluorinated compound or reducing the amount of the by-product fluorinated compound can be simplified.

Examples of the known fluorinated compounds include, for example, compounds described in the following documents.

Perfluoropolyether-modified aminosilanes disclosed in Japanese Unexamined Patent Application Publication No. H11-029585,
silicon-containing organic fluorinated polymers disclosed in Japanese Patent No. 2874715,
organic silicon compounds disclosed in Japanese Unexamined Patent Application Publication No. 2000-144097,
perfluoropolyether-modified aminosilanes disclosed in Japanese Unexamined Patent Application Publication No. 2000-327772,
fluorinated siloxanes disclosed in Published Japanese Translation of PCT International Publication for Patent Application, No. 2002-506887,
organic silicone compounds disclosed in Published Japanese Translation of PCT International Publication for Patent Application, No. 2008-534696,
fluorinated modified hydrogenerated polymers disclosed in Japanese Patent No. 4138936,
compounds disclosed in United States Patent Application Publication No. 2010/0129672, International Patent Publication No. WO 2014/126064, and Japanese Unexamined Patent Application Publication No. 2014-070163,
organosilicon compounds disclosed in International Patent Publication No. WO 2011/060047 and International Patent Publication No. WO 2011/059430,
fluorinated organosilane compounds disclosed in International Patent Publication No. WO 2012/064649,
fluoroxyalkylene group-containing polymers disclosed in Japanese Unexamined Patent Application Publication No. 2012-72272,
fluorinated ether compounds disclosed in International Patent Publication No. WO 2013/042732, International Patent Publication No. WO 2013/121984, International Patent Publication No. WO 2013/121985, International Patent Publication No. WO 2013/121986, International Patent Publication No. WO 2014/163004, Japanese Unexamined Patent Application Publication No. 2014-080473, International Patent Publication No. WO 2015/087902, International Patent Publication No. WO 2017/038830, International Patent Publication No. WO 2017/038832, and International Patent Publication No. WO 2017/187775,
perfluoro(poly)ether-containing silane compounds disclosed in Japanese Unexamined Patent Application Publication No. 2014-218639, International Patent Publication No. WO 2017/022437, International Patent Publication No. WO 2018/079743, and International Patent Publication No. WO 2018/143433,
fluoropolyether group-containing polymer-modified silanes disclosed in Japanese Unexamined Patent Application Publication No. 2015-199906, Japanese Unexamined Patent Application Publication No. 2016-204656, Japanese Unexamined Patent Application Publication No. 2016-210854, and Japanese Unexamined Patent Application Publication No. 2016-222859, and
fluorinated ether compounds disclosed in International Patent Publication No. WO 2018/216630, International Patent Publication No. WO 2019/039226, International Patent Publication No. WO 2019/039341, International Patent Publication No. WO 2019/039186, International Patent Publication No. WO 2019/044479, Japanese Unexamined Patent Application Publication No. 2019-44158, International Patent Publication No. WO 2019/044479, and International Patent Publication No. WO 2019/163282.

Further, examples of the commercial products of the fluorinated compound include KY-100 series (KY-178, KY-185, KY-195, etc.) manufactured by Shin-Etsu Chemical Co., Ltd., SURECO AF series such as SURECO (registered trademark) 2101S manufactured by AGC Inc., OPTOOL (registered trademark) DSX, OPTOOL (registered trademark) AES, OPTOOL (registered trademark) UF503, OPTOOL (registered trademark) UD509, etc., manufactured by DAIKIN INDUSTRIES, LTD.

The proportion of the present compound in the present composition is less than 100 mass %, preferably at least 60 mass %, more preferably at least 70 mass %, and further preferably at least 80 mass %.

When the present composition includes other fluorinated compound, the proportion of other fluorinated compound to the total of the present compound and other fluorinated compound in the present composition is preferably at most 40 mass %, more preferably at most 30 mass %, and further preferably at most 20 mass %.

The total proportion of the present compound and other fluorinated compound in the present composition is preferably at least 80 mass %, and more preferably at least 85 mass %.

When the content of the present compound and other fluorinated compound is within the above ranges, the surface layer will be excellent in water/oil repellency, abrasion resistance, fingerprint stain removability, lubricity, and outer appearance.

The present composition and the present compound are suitable as a surface treatment agent for forming a surface layer for imparting water/oil repellency, abrasion resistance, and fingerprint stain removability to the surface of the substrate.

### [Coating Liquid]

The coating liquid of the present invention (hereinafter also referred to as "the present coating liquid") includes the present compound or the present composition, and a liquid medium. The present coating liquid may be any liquid and may be a solution or a dispersion.

It is sufficient that the present coating liquid include the present compound or the present composition. The present coating liquid may include impurities such as by-products produced in the process for producing the present compound.

The concentration of the present compound or the present composition in the present coating liquid is preferably from 0.001 to 40 mass %, more preferably from 0.01 to 20 mass %, and further preferably from 0.1 to 10 mass %.

The liquid medium is preferably an organic solvent. The organic solvent may be a fluorinated organic solvent, may be a non-fluorinated organic solvent, or may contain both solvents.

Examples of the fluorinated organic solvent include a fluorinated alkane, a fluorinated aromatic compound, a fluoroalkyl ether, a fluorinated alkylamine, a fluoroalcohol, etc.

The fluorinated alkane is preferably a C4-8 compound. Commercially available products may, for example, be C₆F₁₃H (manufactured by AGC Inc., ASAHIKLIN (registered trademark) AC-2000), C₆F₁₃C₂H₅ (manufactured by AGC Inc., ASAHIKLIN (registered trademark) AC-6000), and C₂F₅CHFCHFCF₃ (manufactured by Chemours, Vertrel (registered trademark) XF).

Examples of the fluorinated aromatic compound include, for example, hexafluorobenzene, trifluoromethylbenzene, perfluorotoluene or bis(trifluoromethyl)benzene.

The fluoroalkyl ether is preferably a C4-12 compound. Commercially available products may, for example, be CF₃CH₂OCF₂CF₂H (manufactured by AGC Inc., ASAHIKLIN (registered trademark) AE-3000), C₄F₉OCH₃ (manufactured by 3M, Novec (registered trademark) 7100), C₄F₉OC₂H₅ (manufactured by 3M, Novec (registered trademark) 7200), and C₂F₅CF(OCH₃)C₃F₇ (manufactured by 3M, Novec (registered trademark) 7300).

Examples of the fluorinated alkylamine include, for example, perfluorotripropylamine or perfluorotributylamine.

Examples of the fluoroalcohol include, for example, 2,2,3,3-tetrafluoropropanol, 2,2,2-trifluoroethanol or hexafluoroisopropanol.

The non-fluorinated organic solvent is preferably a compound composed solely of hydrogen atoms and carbon atoms, and a compound composed solely of hydrogen atoms, carbon atoms and oxygen atoms, and may, for example, be a hydrocarbon-based organic solvent, an alcohol-based organic solvent, a ketone-based organic solvent, an ether-based organic solvent, or an ester-based organic solvent.

The content of the liquid medium is preferably from 75 to 99.999 mass %, more preferably from 85 to 99.99 mass %, and particularly preferably from 90 to 99.9 mass % in the present coating liquid.

The present coating liquid may contain other components in addition to the present compound or the present composition and the liquid medium within a range not to impair the effects of the present invention.

Examples of the other components include, for example, known additives such as an acid catalyst or a basic catalyst which promotes hydrolysis and condensation reaction of the hydrolyzable silyl group.

The content of other components in the present coating liquid is preferably at most 10 mass %, and more preferably at most 1 mass %.

The total concentration of the present compound and other components or the total concentration of the present composition and other components (hereinafter this may be referred to as a solid content) in the present coating liquid is preferably 0.001 to 40 mass %, more preferably from 0.01 to 20 mass %, further preferably from 0.01 to 10 mass %, and particularly preferably from 0.01 to 1 mass %. The solid content of the coating liquid is a value calculated from the mass of the coating liquid before and after 4 hours of heating at 120°C with a convection dryer.

### [Article]

Fig. 1 is a schematic cross-sectional view showing one example of an article according to the present invention. A first article of the present invention is an article 20 including a substrate 12, an undercoat layer 14, and a surface layer 22 in this order, in which the undercoat layer 14 contains an oxide containing silicon and the surface layer 22 contains a condensation product of the present compound.

The material and the shape of the substrate 12 in the aforementioned first article may be selected as appropriate according to the application or the like of this article 20. The material of the substrate 12 may, for example, be glass, resin, sapphire, metal, ceramic, stone, or a composite material thereof. The glass may be chemically tempered. In particular, the substrate 12 where water/oil repellency is required may, for example, be a substrate for a touch panel, a substrate for display, a substrate constituting a case of electronic equipment or the like. A substrate for a touch panel and a substrate for display have translucency. "Having translucency" means that the normal incidence visible light transmittance in accordance with JIS R3106: 1998 (ISO 9050: 1990) is at least 25%. As the material of a substrate for a touch panel, glass or a transparent resin is preferable.

The substrate 12 may be the one obtained by performing a surface treatment such as a corona discharge treatment, a plasma treatment, or a plasma graft polymerization treatment on the surface of the substrate 12 on which the undercoat layer 14 is provided. The surface that has been subjected to surface treatment is further excellent in adhesion between the substrate 12 and the undercoat layer 14, as a result of which the wear resistance of the surface layer 22 is further improved. The surface treatment is, in view of more excellent wear resistance of the surface layer 22, preferably a corona discharge treatment or a plasma treatment.

The undercoat layer 14 is a layer that contains an oxide containing at least silicon, and may further contain other elements. When the undercoat layer 14 contains silicon oxide, T of the present compound is subjected to dehydration condensation, whereby the surface layer 22 excellent in wear durability, with a Si-O-Si bond formed between the surface layer 22 and the undercoat layer 14, is formed.

The content of the silicon oxide in the undercoat layer 14 is not particularly limited as long as it is at least 65 mass %, and is preferably at least 80 mass %, more preferably at least 85 mass %, and further preferably at least 90 mass %. When the content of the silicon oxide is at least the lower limit value of the above range, the Si-O-Si bond in the undercoat layer 14 is sufficiently formed and mechanical properties of the undercoat layer 14 are sufficiently secured. The content of the silicon oxide is a remaining part obtained by removing the total content of the other elements (for an oxide, an amount in terms of the oxide) from the mass of the undercoat layer 14.

From the viewpoint of durability of the surface layer 22, the oxide in the undercoat layer 14 further preferably contains at least one element selected from alkaline metal elements, alkaline earth metal elements, platinum group elements, boron, aluminum, phosphorus, titanium, zirconium, iron, nickel, chromium, molybdenum, and tungsten. When the oxide contains these elements, the bonding between the undercoat layer 14 and the present compound is enhanced and the wear resistance is improved.

When the undercoat layer 14 contains at least one element selected from iron, nickel, and chromium, the total content of them is, as expressed as a proportion to silicon oxide, preferably from 10 to 1100 mass ppm, more preferably from 50 to 1100 mass ppm, further preferably from 50 to 500 mass ppm, and particularly preferably from 50 to 250 mass ppm.

When the undercoat layer 14 contains at least one element selected from aluminum and zirconium, the total content of them is preferably from 10 to 2500 mass ppm, more preferably from 15 to 2000 mass ppm, and further preferably from 20 to 1000 mass ppm.

When the undercoat layer 14 contains alkaline metal elements, the total content of them is preferably from 0.05 to 15 mass %, more preferably from 0.1 to 13 mass %, and further preferably from 1.0 to 10 mass %. The alkaline metal elements may, for example, be lithium, sodium, potassium, rubidium or cesium.

When the undercoat layer 14 contains platinum group elements, the total content of them is preferably at least 0.02 mass ppm but at most 800 mass ppm, more preferably at least 0.04 mass ppm but at most 600 mass ppm, and further preferably at least 0.7 mass ppm but at most 200 mass ppm. The platinum group elements may include platinum, rhodium, ruthenium, palladium, osmium, or iridium.

When the undercoat layer 14 contains at least one element selected from boron and phosphorus, the total content of them is, in view of the wear resistance of the surface layer 22, as the ratio of the total molar concentration of boron and phosphorus to the molar concentration of silicon, preferably from 0.003 to 9, more preferably from 0.003 to 2, and further preferably from 0.003 to 0.5.

When the undercoat layer 14 contains alkaline earth metal elements, the total content of them is, from the viewpoint of the wear resistance of the surface layer 22, as the ratio of the total molar concentration of alkaline earth metal elements to the molar concentration of silicon is preferably from 0.005 to 5, more preferably from 0.005 to 2, and further preferably from 0.007 to 2. The alkaline earth metal elements may include lithium, sodium, potassium, rubidium, and cesium.

From the viewpoint of improving adhesion of the present compound and improving water/oil repellency and wear resistance of the article 20, the undercoat layer 14 is preferably a silicon oxide layer including alkali metal atoms. In particular, in the silicon oxide layer, an average concentration of the alkali metal atoms in the region having a depth from the surface that contacts the surface layer 22 of from 0.1 to 0.3 nm is preferably at least 2.0×10¹⁹ atoms/cm³. On the other hand, from the viewpoint of sufficiently securing mechanical properties of the silicon oxide layer, the average concentration of the alkali metal atoms is preferably at most 4.0×10²²atoms/cm³.

The thickness of the undercoat layer 14 is preferably from 1 to 200 nm, and particularly preferably from 2 to 20 nm. When the thickness of the undercoat layer 14 is at least the lower limit value of the above range, sufficient effects to improve the adhesion by the undercoat layer 14 tend to be obtained. When the thickness of the undercoat layer 14 is at most the upper limit value of the above range, the wear resistance of the undercoat layer 14 itself becomes high. A method for measuring the thickness of the undercoat layer 14 may include a method by observing a cross section of the undercoat layer 14 by an electron microscope (such as SEM or TEM) or a method of using an optical interference film thickness meter, a spectroscopic ellipsometer or a profiler.

A method for forming the undercoat layer 14 may, for example, be a method for evaporating a deposition material having a composition of a desired undercoat layer 14 to make it attached to the surface of the substrate 12.

Examples of the deposition method include a vacuum deposition method. The vacuum deposition method is a method of evaporating the deposition material in a vacuum chamber to make it attached to the surface of the substrate 12.

The temperature at the time of deposition (e.g., in a case where a vacuum deposition apparatus is used, the temperature of the boat on which the deposition material is placed) is preferably from 100 to 3000°C, and particularly preferably from 500 to 3000°C.

The pressure at the time of deposition (e.g., in a case where a vacuum deposition apparatus is used, the absolute pressure in the chamber in which the deposition material is placed) is preferably at most 1 Pa, and particularly preferably at most 0.1 Pa.

When the undercoat layer 14 is formed by using the deposition material, one deposition material may be used or two or more deposition materials containing different elements may be used.

Examples of the method of evaporating the deposition material include resistance heating method in which the deposition material is melted and evaporated on a high melting metal boat for resistance heating, or electron gun method in which electron beams are applied to the deposition material to directly heat the deposition material and to melt its surface thereby to evaporate it. The method of evaporating the deposition material is preferably electron gun method in that a high melting substance can be evaporated since local heating is possible, and reaction with the container and inclusion of impurities are less likely to occur since the temperature of the portion not irradiated with the electron beams is low. The deposition material used for the electron gun method is preferably a molten granular material or a sintered body since they are unlikely to scatter even when air currents are generated.

The surface layer 22 on the undercoat layer 14 contains a condensation product of the present compound. The condensation product of the present compound contains a Si-O-Si bond that is formed as a result of condensation of silanol groups (Si-OH) intermolecularly, each of the silanol groups being formed by hydrolysis reaction of a hydrolyzable silyl group in the present compound, and a Si-O-Si bond that is formed as a result of condensation of the silanol group in the present compound with a silanol group on the surface of the undercoat layer 14 or an Si-OM group (where M represents an alkaline metal element). Further, the surface layer 22 may contain a condensation product of a fluorinated compound other than the present compound. That is, the surface layer 22 contains the fluorinated compound having a reactive silyl group in a state where some of or all the reactive silyl groups in the fluorinated compound are condensed.

The thickness of the surface layer 22 is preferably from 1 to 100 nm, and particularly preferably from 1 to 50 nm. When the thickness of the surface layer 22 is at least the lower limit value of the above range, effects by the surface layer 22 will be sufficiently obtained. When the thickness of the surface layer 22 is at most the upper limit value of the above range, high utilization efficiency will be obtained.

The thickness of the surface layer 22 is a thickness obtained by using an X-ray diffractometer for thin film analysis. The thickness of the surface layer 22 is calculated from the oscillation period of an interference pattern of reflected X-rays obtained by X-ray reflectometry by using the X-ray diffractometer for thin film analysis.

The second article of the present invention is an article 20 including an undercoat layer-provided substrate 10 and a surface layer 22 in this order, in which the undercoat layer-provided substrate 10 contains an oxide containing silicon, and the surface layer 22 contains a condensation product of the present compound.

In the second article, the undercoat layer-provided substrate 10 has the composition of the undercoat layer 14 in the first article. Therefore, even when the surface layer 22 is directly formed on the undercoat layer-provided substrate 10, the surface layer 22 is excellent in the wear durability.

The material of the undercoat layer-provided substrate 10 in the second article may be anything that has the composition of the undercoat layer 14, and may, for example, be a glass substrate. Since the details of the material of the undercoat layer-provided substrate 10 are similar to those of the material of the substrate 12 and the undercoat layer 14, the explanation will be omitted. Further, since the structure of the surface layer 22 is also similar to that of the first article, the explanation will be omitted.

### [Method for producing article]

A method for producing the article according to the present invention is a method for forming a surface layer by a dry coating method or a wet coating method using the fluorinated compound, the fluorinated compound-containing composition, or the coating liquid.

The present compound and the present composition can be directly used for the dry coating method. The present compound and the present composition are suitable for forming a surface layer excellent in adhesion by the dry coating method. Examples of the dry coating method include vacuum deposition method, CVD method, and sputtering method. Among them, with a view to suppressing decomposition of the present compound and in view of simplicity of the apparatus, vacuum deposition method can be preferably used.

At the time of vacuum deposition, a pelletized material in which the present compound is carried on a metal porous product consisting of a metal material such as iron or steel may be used. The pelletized material carrying the present compound can be produced by impregnating the metal porous product with a solution of the present compound, followed by drying and removing a liquid medium. As the solution of the present compound, the present coating liquid may be used.

The present coating liquid can be suitably used for the wet coating method. The wet coating method may include a spin coating method, a wipe coating method, a spray coating method, a squeegee coating method, a dip coating method, a die coating method, an ink-jet method, a flow coating method, a roll coating method, a casting method, a Langmuir-Blodgett method, or a gravure coating method.

In order to improve abrasion resistance of the surface layer, as the case requires, an operation to accelerate the reaction between the present compound and the substrate may be conducted. Such an operation may, for example, be heating, humidification or light irradiation. For example, the substrate having a surface layer formed thereon may be heated in the air containing moisture to accelerate, e.g., a hydrolysis reaction of a hydrolyzable group, reaction of a hydroxyl group or the like on the surface of the substrate with silanol groups, and formation of a siloxane bond by condensation reaction of the silanol groups.

After the surface treatment, the compound in the surface layer, which is not chemically bonded to other compound or the substrate, may be removed as the case requires. Specific method may include, for example, a method of rinsing the surface layer with a solvent or a method of wiping the surface layer with cloth impregnated with a solvent.

### Examples

While the present invention will be described hereinafter in further detail using Examples, the present invention is not limited to these Examples. In the following, "%" is "mass %" unless otherwise specified. Examples 1 to 16 and Examples 19 to 24 correspond to Examples and Examples 17 and 18 correspond to comparative examples.

### [Example 1] Preparation of compound I

### <Preparation Example 1-1>

According to the method of (Example 1-1) to (Example 1-4) of International Patent Publication No. WO 2018/216630, the following compound (1-1) was obtained.

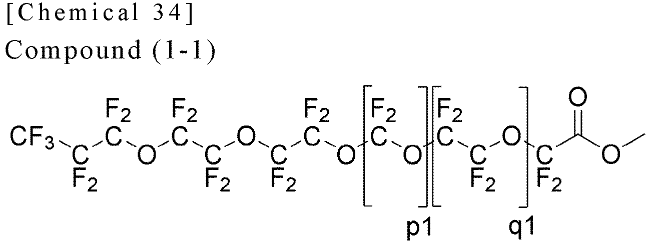

The average of p1 is 21 and the average of q1 is 20.

### <Preparation Example 1-2>

Into a reactor, 40.0 g of the compound (1-1), 80.0 g of 1,3-bis(trifluoromethyl)benzene, 6.1 g of Undec-10-enylmagnesium bromide (CH₂=CH(CH₂)₉-MgBr), and 20 g of tetrahydrofuran (THF) were put and stirred at a room temperature under a nitrogen atmosphere. After completion of the reaction, a 1N hydrochloric acid was added and an organic phase was recovered, followed by recovering the organic phase by filtering. The recovered organic phase was concentrated by an evaporator and subjected to silica gel column chromatography. As a result, 39.1 g of a compound (1-2) was obtained.

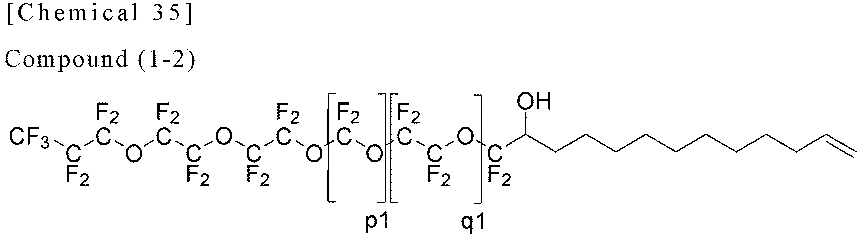

### <Preparation Example 1-3>

In a reactor the interior of which was replaced with nitrogen, 5.0 g of the compound (1-2), 5.0 g of 1,3-bis(trifluoromethyl)benzene, 0.15 g of a xylene solution (platinum content: 2%) of platinum/1,3-divinyl-1,1,3,3-tetramethyldisiloxane complex, 0.28 g of HSi(OCH₃)₃, and 0.04 g of dimethyl sulfoxide (DMSO) were put, followed by stirring at 40°C. After completion of the reaction, the solvent and the like were distilled off under reduced pressure, and the residue was subjected to filtration through a membrane filter having a pore size of 0.2 µm to obtain 4.8 g of the following compound I.

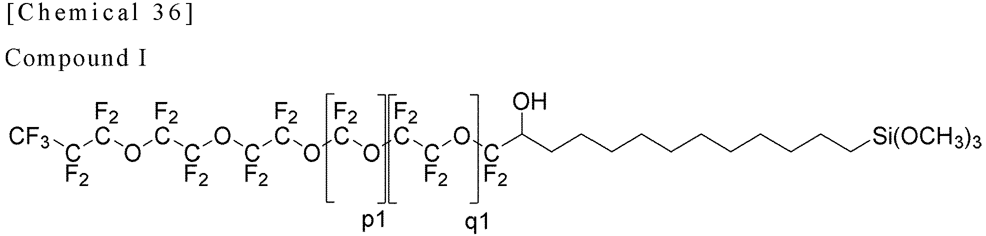

The average of p1 is 21 and the average of q1 is 20.

### [Example 2] Preparation of compound II

### <Preparation Example 2-1>

Into a reactor, 5.0 g of the compound (1-2), 15 g of 1,3-bis(trifluoromethyl)benzene, and 5.0 g of 1,1,1-Triacetoxy-1,1-dihydro-1,2-benziodoxol-3(1H)-one were put, followed by stirring at 40°C under a nitrogen atmosphere. After completion of the reaction, methanol was added, and an organic phase (1,3-bis(trifluoromethyl)benzene phase) was recovered. After that, the recovered organic phase was concentrated by an evaporator and subjected to silica gel column chromatography to obtain 4.5 g of a compound (2-1).

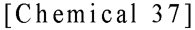

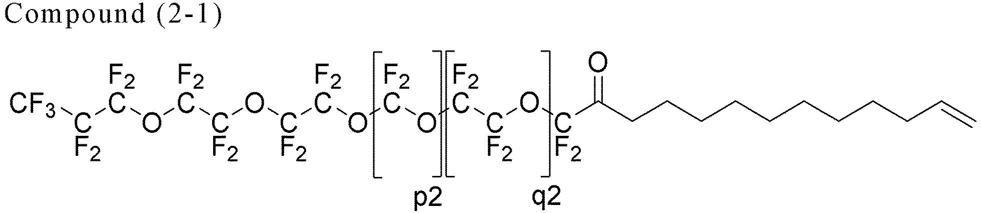

The average of p2 is 21 and the average of q2 is 20.

### <Preparation Example 2-2>

In a reactor the interior of which was replaced with nitrogen, 3.0 g of the compound (2-1), 3.0 g of 1,3-bis(trifluoromethyl)benzene, 0.09 g of a xylene solution (platinum content: 2%) of platinum/1,3-divinyl-1,1,3,3-tetramethyldisiloxane complex, 0.17 g of HSi(OCH₃)₃, and 0.03 g of DMSO were put, followed by stirring at 40°C. After completion of the reaction, the solvent and the like were distilled off under reduced pressure, and the residue was subjected to filtration through a membrane filter having a pore size of 0.2 µm to obtain 3.0 g of the following compound II.

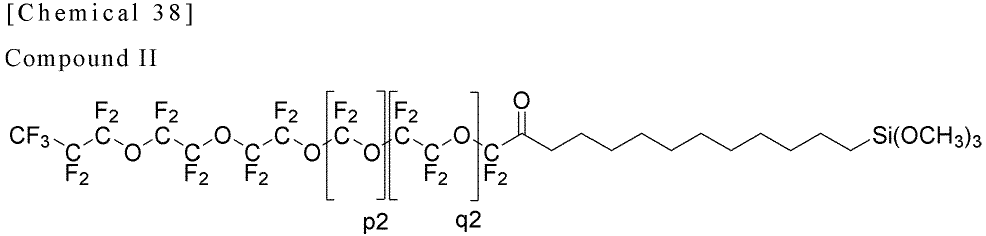

The average of p2 is 21 and the average of q2 is 20.

### [Example 3] Preparation of compound III

### <Preparation Example 3-1>

Into a reactor, 20 g of dehydrated acetonitrile, 200 g of dehydrated THF, 46.97 g of lithium diisopropylamide, and 102.25 g of 11-bromo-1-undecene (CH₂=CH(CH₂)₉-Br) were put and stirred at about -70°C under a nitrogen atmosphere. After completion of the reaction, hydrochloric acid was added and an organic phase was recovered. Then, the recovered organic phase was concentrated by an evaporator and subjected to silica gel column chromatography to obtain 58.8 g of a compound (3-1).

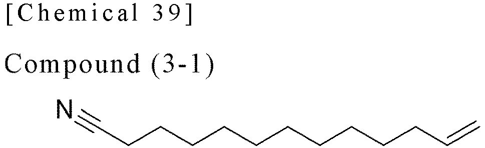

### <Preparation Example 3-2>

Into a reactor, 10.3 g of lithium aluminum hydride and 105 g of dehydrated THF were put and stirred at 0°C under a nitrogen atmosphere. Then, 10.5 g of the compound (3-1) was put and stirred at 0°C under a nitrogen atmosphere. After completion of the reaction, water and a 1N aqueous sodium hydroxide solution were added, and an organic phase was recovered. Then, the recovered organic phase was concentrated by an evaporator and subjected to silica gel column chromatography to obtain 8.7 g of a compound (3-2).

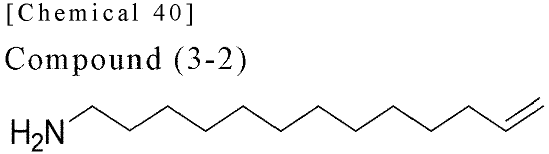

### <Preparation Example 3-3>

According to the method of (Example 6-1) to (Example 6-4) of International Patent Publication No. WO 2013/121984, the following compound (3-3) was obtained.

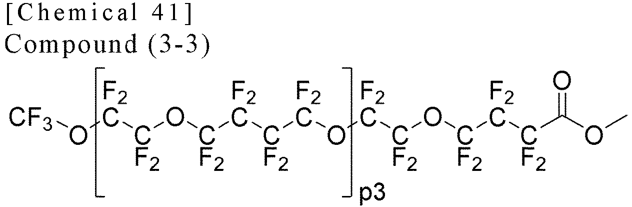

The average of p3 is 13.

### <Preparation Example 3-4>

Into a reactor, 50.0 g of the compound (3-3), 50.0 g of 1,3-bis(trifluoromethyl)benzene, and 5.2 g of the compound (3-2) were put and stirred at 60°C under a nitrogen atmosphere. After completion of the reaction, the mixture was washed, concentrated by an evaporator, and subjected to silica gel column chromatography to obtain 35.7 g of a compound (3-4).

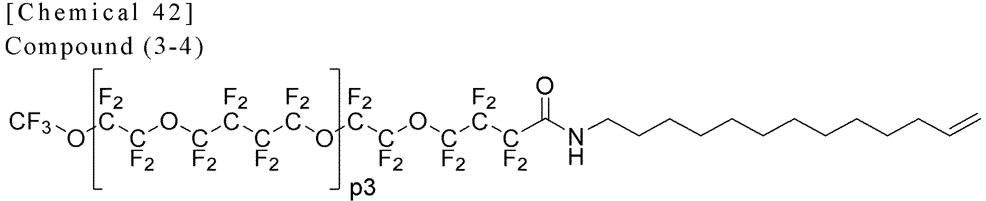

### <Preparation Example 3-5>

In a reactor the interior of which was replaced with nitrogen, 5.0 g of the compound (3-4), 5.0 g of 1,3-bis(trifluoromethyl)benzene, 0.15 g of a xylene solution (platinum content: 2%) of platinum/1,3-divinyl-1,1,3,3-tetramethyldisiloxane complex, 0.25 g of HSi(OCH₃)₃, and 0.04 g of DMSO were put, followed by stirring at 40°C. After completion of the reaction, the solvent and the like were distilled off under reduced pressure, and the residue was subjected to filtration through a membrane filter having a pore size of 0.2 µm to obtain 4.9 g of the following compound III.

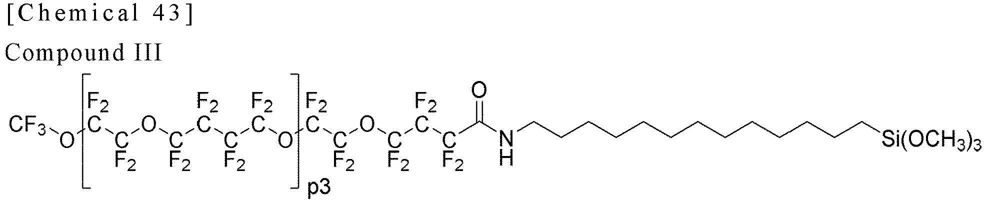

The average of p3 is 13.

### [Example 4] Preparation of compound IV

### <Preparation Example 4-1>

Based on Preparation Example 7 of International Patent Publication No. WO 2021/010105, a compound (4-1) was prepared.

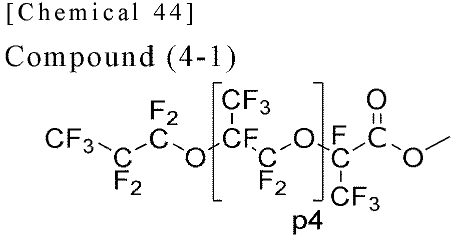

The average of p4 is 22.

### <Preparation Example 4-2>

Into a reactor, 6.4 g of the compound (4-1), 6.4 g of 1,3-bis(trifluoromethyl)benzene, and 1.9 g of NH[(CH₂)₈CH=CH₂]₂ were put, followed by stirring at 40°C under a nitrogen atmosphere. After completion of the reaction, methanol was added, an organic phase was concentrated by an evaporator and subjected to silica gel column chromatography to obtain 4.8 g of a compound (4-2).

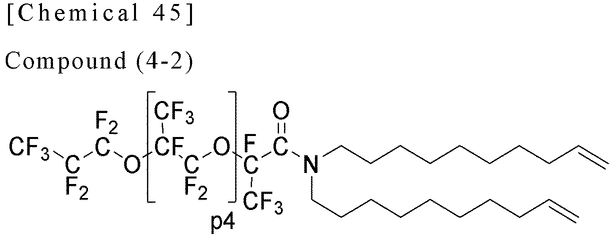

### <Preparation Example 4-3>

In a reactor the interior of which was replaced with nitrogen, 5.5 g of the compound (4-2), 5.5 g of 1,3-bis(trifluoromethyl)benzene, 0.22 g of a xylene solution (platinum content: 2%) of platinum/1,3-divinyl-1,1,3,3-tetramethyldisiloxane complex, 0.63 g of HSi(OCH₃)₃, and 0.05 g of DMSO were put, followed by stirring at 40°C. After completion of the reaction, the solvent and the like were distilled off under reduced pressure, and the residue was subjected to filtration through a membrane filter having a pore size of 0.2 µm to obtain 5.7 g of the following compound IV.

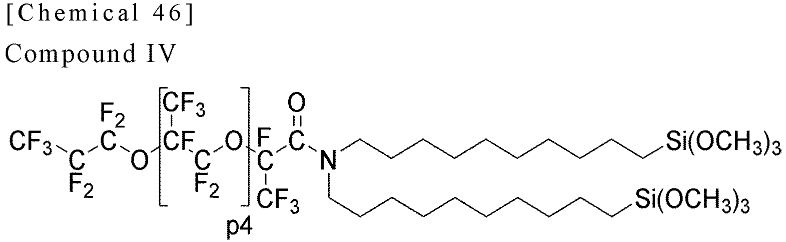

The average of p4 is 22.

### [Example 5] Preparation of compound V

### <Preparation Example 5-1>

Into a reactor, 10.0 g of the compound (1-2), 2.7 g of 11-bromo-1-undecene (CH₂=CH(CH₂)₉-Br), and 0.03 g of tetrabutylammonium lodide were put, followed by stirring. Then, 0.6 g of potassium hydroxide was put, followed by stirring at 70°C under nitrogen atmosphere. After completion of the reaction, acetone was added, 1,3-bis(trifluoromethyl)benzene phase was concentrated by an evaporator, and silica gel column chromatography was conducted to obtain 7.4 g of a compound (5-1).

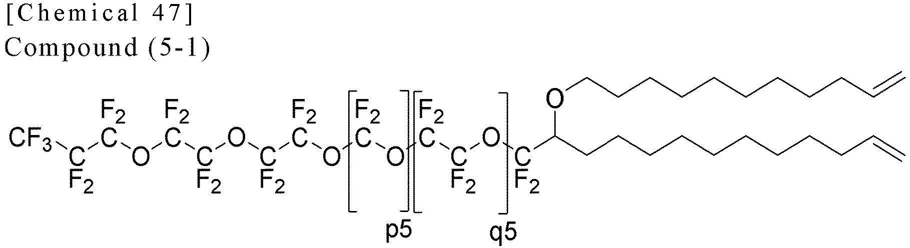

The average of p5 is 21 and the average of q5 is 20.

### <Preparation Example 5-2>

In a reactor the interior of which was replaced with nitrogen, 5.0 g of the compound (5-1), 5.0 g of 1,3-bis(trifluoromethyl)benzene, 0.20 g of a xylene solution (platinum content: 2%) of platinum/1,3-divinyl-1,1,3,3-tetramethyldisiloxane complex, 0.54 g of HSi(OCH₃)₃, and 0.04 g of DMSO were put, followed by stirring at 40°C. After completion of the reaction, the solvent and the like were distilled off under reduced pressure, and the residue was subjected to filtration through a membrane filter having a pore size of 0.2 µm to obtain 5.2 g of the following compound V.

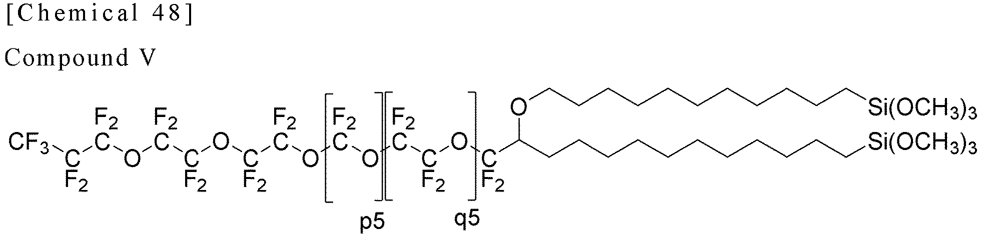

The average of p5 is 21 and the average of q5 is 20.

### [Example 6] Preparation of compound VI

### <Preparation Example 6-1>

Into a reactor, 2.1 g of methyl cyanoacetate, 11.9 g of 11-bromo-1-undecene (CH₂=CH(CH₂)₉-Br), 11.2 g of potassium carbonate, and 52.5 g of N,N-dimethylformamide (DMF) were put and stirred at 85°C under a nitrogen atmosphere. After completion of the reaction, hydrochloric acid was added and an organic phase was recovered. Then, the recovered organic phase was concentrated by an evaporator to obtain 8.1 g of a compound (6-1).

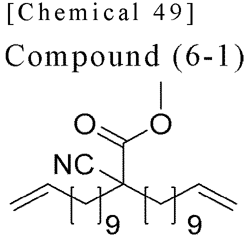

### <Preparation Example 6-2>

Into a reactor, 8.1 g of the compound (6-1), 24.3 g of DMSO, 3.0 g of lithium chloride, and 4.7 g of water were put and stirred at 180°C under a nitrogen atmosphere. After completion of the reaction, hydrochloric acid was added and an organic phase was recovered. Then, the recovered organic phase was concentrated by an evaporator and subjected to silica gel column chromatography to obtain 6.2 g of a compound (6-2).

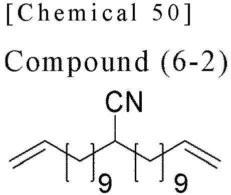

### <Preparation Example 6-3>

Into a reactor, 3.0 g of lithium aluminum hydride and 27.0 g of dehydrated THF were put and stirred at 0°C under a nitrogen atmosphere. Then, 5.4 g of the compound (6-2) was put and stirred at 0°C under a nitrogen atmosphere. After completion of the reaction, water and a 1N aqueous sodium hydroxide solution were added, and an organic phase was recovered. Then, the recovered organic phase was concentrated by an evaporator and subjected to silica gel column chromatography to obtain 4.3 g of a compound (6-3).

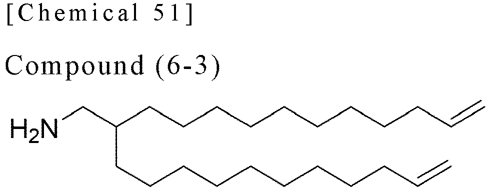

### <Preparation Example 6-4>

Into a reactor, 15 g of the compound (3-3), 15 g of 1,3-bis(trifluoromethyl)benzene, and 2.8 g of the compound (6-3) were put and stirred at 60°C under a nitrogen atmosphere. After completion of the reaction, the mixture was washed, concentrated by an evaporator, and subjected to silica gel column chromatography to obtain 11.4 g of a compound (6-4).

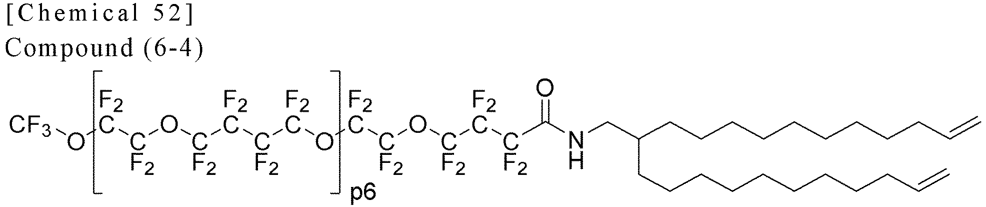

The average of p6 is 13.

### <Preparation Example 6-5>

In a reactor the interior of which was replaced with nitrogen, 5.0 g of the compound (6-4), 5.0 g of 1,3-bis(trifluoromethyl)benzene, 0.21 g of a xylene solution (platinum content: 2%) of platinum/1,3-divinyl-1,1,3,3-tetramethyldisiloxane complex, 0.48 g of HSi(OCH₃)₃, and 0.04 g of DMSO were put, followed by stirring at 40°C. After completion of the reaction, the solvent and the like were distilled off under reduced pressure, and the residue was subjected to filtration through a membrane filter having a pore size of 0.2 µm to obtain 5.1 g of the following compound VI.

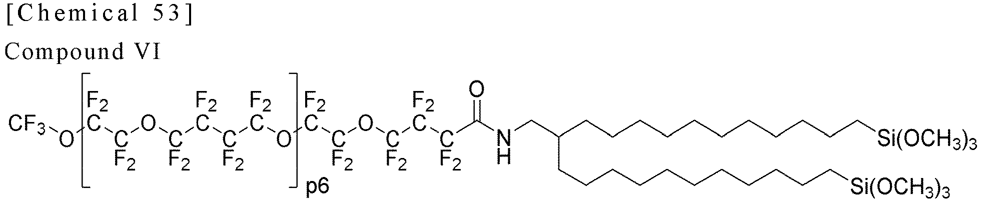

The average of p6 is 13.

### [Example 7] Preparation of compound VII

### <Preparation Example 7-1>

Into a reactor, 2.0 g of dimethyl malonate, 10.6 g of 11-bromo-1-undecene (CH₂=CH(CH₂)₉-Br), 8.4 g of potassium carbonate, and 50.0 g of DMF were put and stirred at 85°C under a nitrogen atmosphere. After completion of the reaction, hydrochloric acid was added and an organic phase was recovered. Then, the recovered organic phase was concentrated by an evaporator to obtain 6.1 g of a compound (7-1).

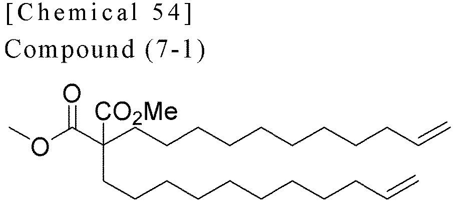

### <Preparation Example 7-2>

Into a reactor, 6.1 g of the compound (7-1), 24.4 g of DMSO, 2.4 g of lithium chloride, and 3.27 g of water were put and stirred at 180°C under a nitrogen atmosphere. After completion of the reaction, hydrochloric acid was added and an organic phase was recovered. Then, the recovered organic phase was concentrated by an evaporator and subjected to silica gel column chromatography to obtain 4.0 g of a compound (7-2).

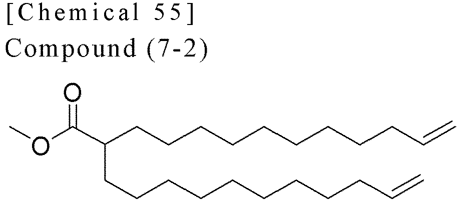

### <Preparation Example 7-3>

Into a reactor, 2.9 g of the compound (7-2), 52.98 g of ethanol, and 8.6 g of potassium hydroxide were put and stirred at 120°C under a nitrogen atmosphere. After completion of the reaction, hydrochloric acid was added and an organic phase was recovered. Then, the recovered organic phase was concentrated by an evaporator and subjected to silica gel column chromatography to obtain 2.5 g of a compound (7-3).

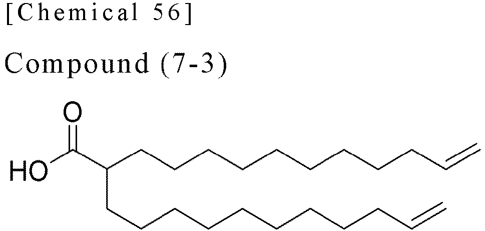

### <Preparation Example 7-4>

Into a reactor, 2.5 g of the compound (7-3), 25 g of dichloromethane, 2.6 g of oxalyl chloride, and 0.04 g of DMF were put and stirred at a room temperature under a nitrogen atmosphere. After completion of the reaction, the mixture was concentrated by an evaporator to obtain 2.6 g of a compound (7-4).

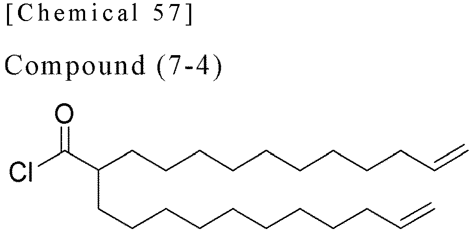

### <Preparation Example 7-5>

According to the method of (Example 1-1) to (Examples 1 to 3) disclosed in International Patent Publication No. WO2021/131960, the following compound (7-5) was obtained.

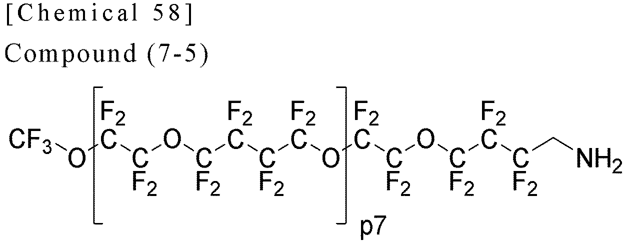

The average of p7 is 13.

### <Preparation Example 7-6>

Into a reactor, 10.0 g of the compound (7-5), 1.6 g of the compound (7-4), and 10 g of 1,3-bis(trifluoromethyl)benzene were put, followed by stirring at 40°C under a nitrogen atmosphere. After completion of the reaction, the resulting mixture was concentrated by an evaporator and subjected to silica gel column chromatography to obtain 5.2 g of a compound (7-6).

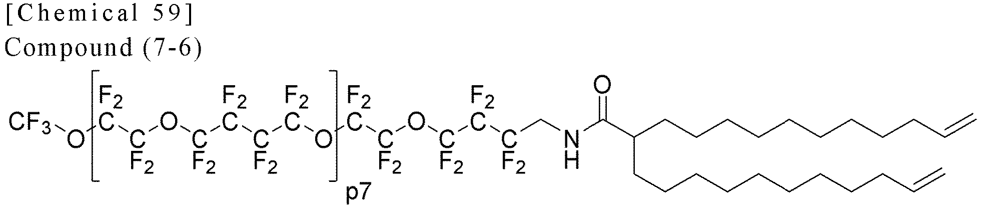

### <Preparation Example 7-7>

In a reactor the interior of which was replaced with nitrogen, 2.0 g of the compound (7-6), 2.0 g of 1,3-bis(trifluoromethyl)benzene, 0.09 g of a xylene solution (platinum content: 2%) of platinum/1,3-divinyl-1,1,3,3-tetramethyldisiloxane complex, 0.19 g of HSi(OCH₃)₃, and 0.02 g of DMSO were put, followed by stirring at 40°C. After completion of the reaction, the solvent and the like were distilled off under reduced pressure, and the residue was subjected to filtration through a membrane filter having a pore size of 0.2 µm to obtain 2.0 g of the following compound VII.

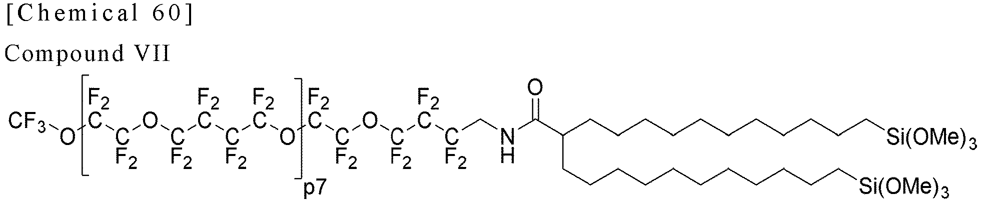

The average of p7 is 13.

### [Example 8] Preparation of compound VIII

### <Preparation Example 8-1>

Into a reactor, 0.5 g of lithium aluminum hydride and 5 g of dehydrated THF were put and stirred at 0°C under a nitrogen atmosphere. Then, 1.0 g of the compound (7-2) was put and stirred at 0°C under a nitrogen atmosphere. After completion of the reaction, water and a 1M aqueous sodium hydroxide solution were added, and an organic phase was recovered. Then, the recovered organic phase was concentrated by an evaporator and subjected to silica gel column chromatography to obtain 0.8 g of a compound (8-1).

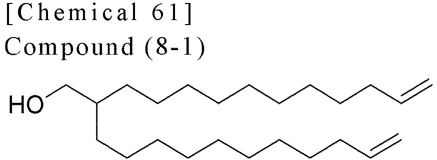

### <Preparation Example 8-2>

In accordance with the method of Example 6 of International Patent Publication No. WO 2013/121984, the following compound (8-2) was obtained.

CF₃-O-(CF₂CF₂O-CF₂CF₂CF₂CF₂O)ₚ₈(CF₂CF₂O)-CF₂CF₂CF₂-C(O)OCH₃ ···Formula (8-2)

The average of p8 is 13.

### <Preparation Example 8-3>

Into a reactor, 10.0 g of the aforementioned compound (8-2) and 10 g of 1,3-bistrifluoromethyl benzene were put, and then 450 mg of triethylsilane and 10 mg of trispentafluorophenylborane were added. After the mixture was stirred at room temperature, a low boiling point component was distilled off to obtain 10.3 g of a mixture of the following compound (8-3a) and compound (8-3b).

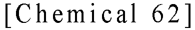

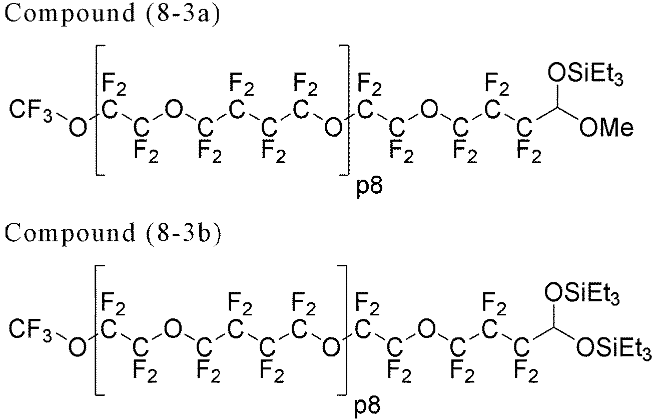

### <Preparation Example 8-4>

Into a reactor, 5.0 g of a mixture of the aforementioned compound (8-3a) and compound (8-3b), and 10 g of 1,3-bistrifluoromethyl benzene were put, followed by adding 5.0 g of methanol and 2.5 g of concentrated sulfuric acid. The mixture was stirred at 60°C, followed by extraction with AC-6000. Then the solvent was distilled off to obtain 4.9 g of a mixture of the following compound (8-4a) and compound (8-4b).

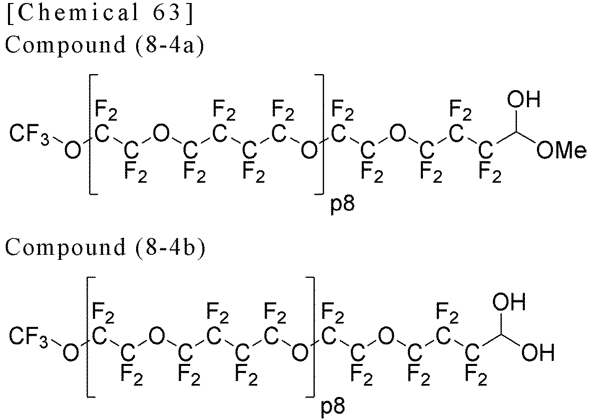

### <Preparation Example 8-5>

4.9 g of the aforementioned mixture of the compound (8-4a) and compound (8-4b) was put into a vacuum drying oven and concentrated in vacuo at 100°C for 16 hours to obtain 4.8 g of the following compound (8-5).

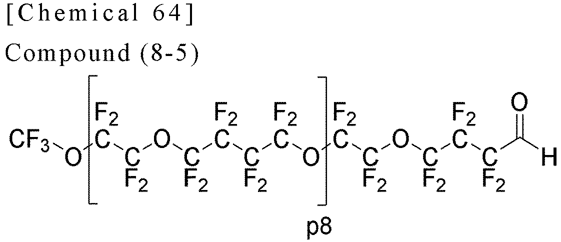

### <Preparation Example 8-6>

Into a reactor, 4.5 g of the compound (8-5), 0.56 g of the compound (8-1), and 10 g of 1,3-bis(trifluoromethyl)benzene were put and stirred at about 80°C under a nitrogen atmosphere. Then, 0.94 g of bis(2-methoxyethyl)aminosulfur=trifluoride was added and stirred further at 80°C. After completion of the reaction, the resulting mixture was concentrated by an evaporator and subjected to silica gel column chromatography to obtain 3.6 g of a compound (8-6).

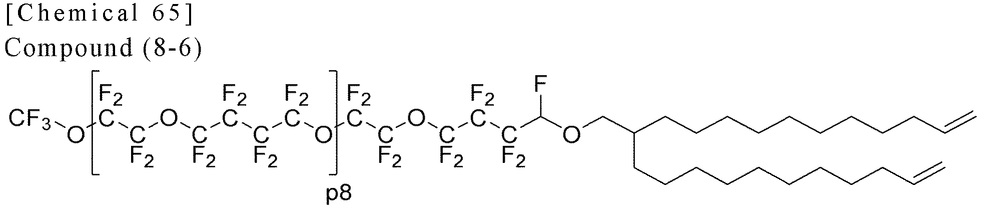

### <Preparation Example 8-7>

In a reactor the interior of which was replaced with nitrogen, 1.5 g of the compound (8-6), 1.5 g of 1,3-bis(trifluoromethyl)benzene, 0.06 g of a xylene solution (platinum content: 2%) of platinum/1,3-divinyl-1,1,3,3-tetramethyldisiloxane complex, 0.15 g of HSi(OCH₃)₃, and 0.01 g of aniline were put, followed by stirring at 40°C. After completion of the reaction, the solvent and the like were distilled off under reduced pressure, and the residue was subjected to filtration through a membrane filter having a pore size of 0.2 µm to obtain 1.6 g of the following compound VIII.

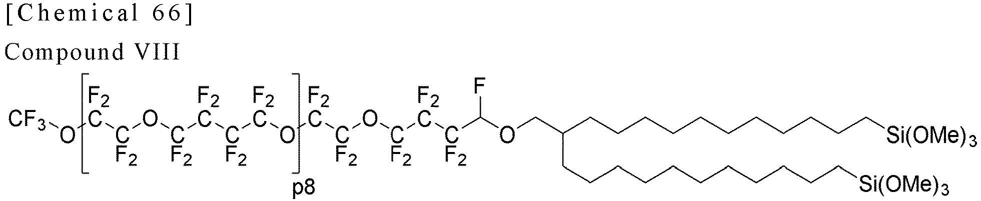

The average of p8 is 13.

### [Example 9] Preparation of compound IX

### <Preparation Example 9-1>

Into a reactor, 0.50 g of methyl cyanoacetate, 4.2 g of 18-bromo-1-octadecene (CH₂=CH(CH₂)₁₆-Br), 2.8 g of potassium carbonate, and 20 g of N,N-dimethylformamide (DMF) were put and stirred at 85°C under a nitrogen atmosphere. After completion of the reaction, hydrochloric acid was added and an organic phase was recovered. Then, the recovered organic phase was concentrated by an evaporator to obtain 3.0 g of a compound (9-1).

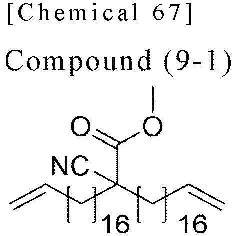

### <Preparation Example 9-2>

Into a reactor, 3.0 g of the compound (9-1), 30.0 g of DMSO, 0.74 g of lithium chloride, and 5.0 g of water were put and stirred at 180°C under a nitrogen atmosphere. After completion of the reaction, hydrochloric acid was added and an organic phase was recovered. Then, the recovered organic phase was concentrated by an evaporator and subjected to silica gel column chromatography to obtain 2.5 g of a compound (9-2).

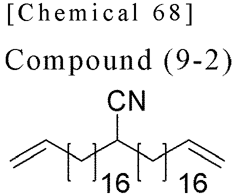

### <Preparation Example 9-3>

Into a reactor, 0.91 g of lithium aluminum hydride and 26.0 g of dehydrated THF were put and stirred at 0°C under a nitrogen atmosphere. Then, 2.6 g of the compound (9-2) was put and stirred at 0°C under a nitrogen atmosphere. After completion of the reaction, water and a 1M aqueous sodium hydroxide solution were added, and an organic phase was recovered. Then, the recovered organic phase was concentrated by an evaporator and subjected to silica gel column chromatography to obtain 2.3 g of a compound (9-3).

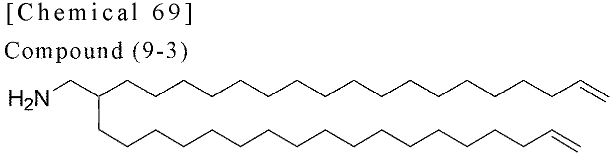

### <Preparation Example 9-4>

Into a reactor, 10.0 g of the compound (3-3), 10 g of 1,3-bis(trifluoromethyl)benzene, and 2.9 g of the compound (9-3) were put and stirred at 60°C under a nitrogen atmosphere. After completion of the reaction, the resulting mixture was washed, concentrated by an evaporator, and subjected to silica gel column chromatography to obtain 6.1 g of a compound (9-4).

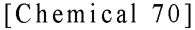

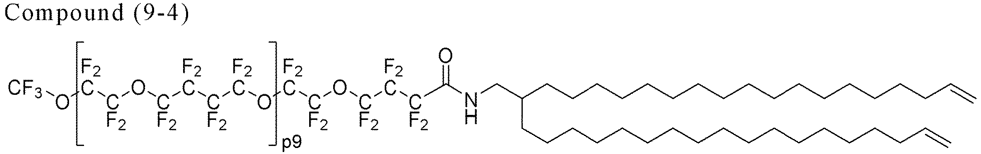

The average of p9 is 13.

### <Preparation Example 9-5>

In a reactor the interior of which was replaced with nitrogen, 2.0 g of the compound (9-4), 2.0 g of 1,3-bis(trifluoromethyl)benzene, 0.09 g of a xylene solution (platinum content: 2%) of platinum/1,3-divinyl-1,1,3,3-tetramethyldisiloxane complex, 0.19 g of HSi(OCH₃)₃, and 0.01 g of DMSO were put, followed by stirring at 40°C. After completion of the reaction, the solvent and the like were distilled off under reduced pressure, and the residue was subjected to filtration through a membrane filter having a pore size of 0.2 µm to obtain 2.1 g of the following compound IX.

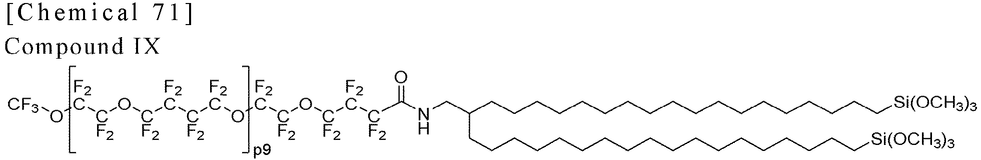

The average of p9 is 13.

### [Example 10] Preparation of compound X

### <Preparation Example 10-1>

Into a reactor, 5.2 g of dehydrated acetonitrile, 52 g of dehydrated THF, 67.9 g of lithium diisopropylamide, and 147.7 g of 11-bromo-1-undecene (CH₂=CH(CH₂)₉-Br) were put and stirred at about -70°C under a nitrogen atmosphere. After completion of the reaction, hydrochloric acid was added and an organic phase was recovered. Then, the recovered organic phase was concentrated by an evaporator and subjected to silica gel column chromatography to obtain 45.3 g of a compound (10-1).

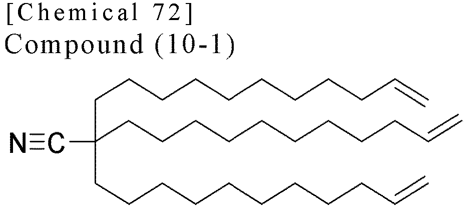

### <Preparation Example 10-2>

Into a reactor, 1.91 g of lithium aluminum hydride and 50 g of dehydrated THF were put and stirred at 0°C under a nitrogen atmosphere. Then, 5.0 g of the compound (10-1) was put and stirred at 0°C under a nitrogen atmosphere. After completion of the reaction, water and a 1M aqueous sodium hydroxide solution were added, and an organic phase was recovered. Then, the recovered organic phase was concentrated by an evaporator and subjected to silica gel column chromatography to obtain 3.1 g of a compound (10-2).

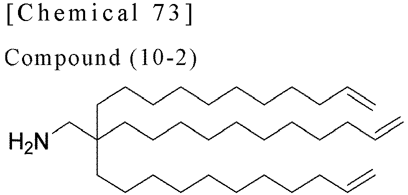

### <Preparation Example 10-3>

Into a reactor, 9.0 g of the compound (3-3), 9.0 g of 1,3-bis(trifluoromethyl)benzene, and 2.4 g of the compound (10-2) were put and stirred at 60°C under a nitrogen atmosphere. After completion of the reaction, the mixture was washed, concentrated by an evaporator, and subjected to silica gel column chromatography to obtain 6.0 g of a compound (10-3).

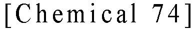

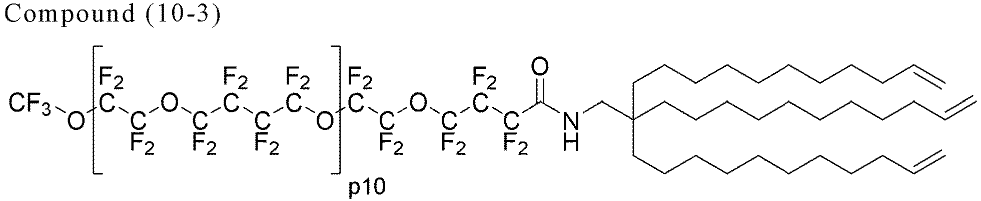

The average of p10 is 13.

### <Preparation Example 10-4>

In a reactor the interior of which was replaced with nitrogen, 3.0 g of the compound (10-3), 3.0 g of 1,3-bis(trifluoromethyl)benzene, 0.15 g of a xylene solution (platinum content: 2%) of platinum/1,3-divinyl-1,1,3,3-tetramethyldisiloxane complex, 0.42 g of HSi(OCH₃)₃, and 0.02 g of DMSO were put, followed by stirring at 40°C. After completion of the reaction, the solvent and the like were distilled off under reduced pressure and were filtered by a membrane filter having a pore size of 0.2 µm to obtain 3.1 g of the following compound X.

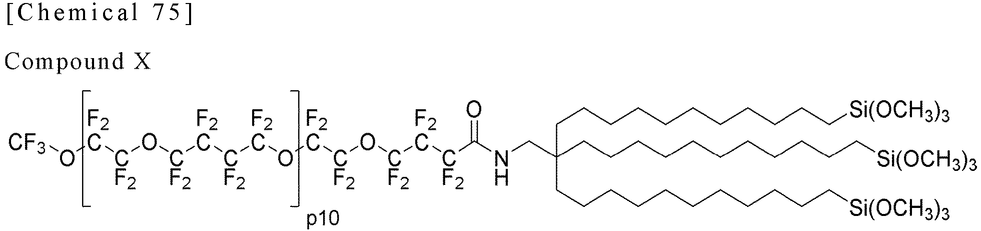

The average of p10 is 13.

### [Example 11] Preparation of compound XI

### <Preparation Example 11-1>

Into a reactor, 4.0 g of the compound (6-3), 40.0 g of dehydrated THF, 3.1 g of lithium diisopropylamide, and 6.8 g of 11-bromo-1-undecene (CH₂=CH(CH₂)₉-Br) were put and stirred at about - 70°C under a nitrogen atmosphere. After completion of the reaction, hydrochloric acid was added and an organic phase was recovered. Then, the recovered organic phase was concentrated by an evaporator and subjected to silica gel column chromatography to obtain 4.1 g of a compound (11-1).

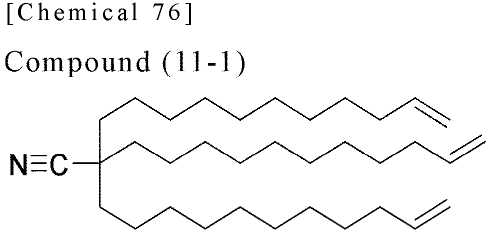

### <Preparation Example 11-2>

Into a reactor, 1.56 g of lithium aluminum hydride and 41.0 g of dehydrated THF were put and stirred at 0°C under a nitrogen atmosphere. Then, 4.1 g of the compound (11-1) was put and stirred at 0°C under a nitrogen atmosphere. After completion of the reaction, water and a 1M aqueous sodium hydroxide solution were added, and an organic phase was recovered. Then, the recovered organic phase was concentrated by an evaporator and subjected to silica gel column chromatography to obtain 3.1 g of a compound (11-2).

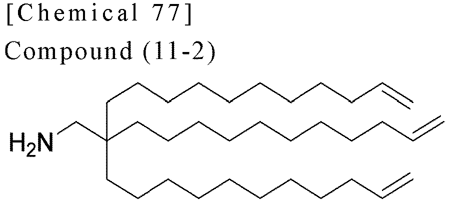

### <Preparation Example 11-3>

Into a reactor, 9.0 g of the compound (1-1), 9.0 g of 1,3-bis(trifluoromethyl)benzene, and 2.7 g of the compound (11-2) were put and stirred at 60°C under a nitrogen atmosphere. After completion of the reaction, the mixture was washed, concentrated by an evaporator, and subjected to silica gel column chromatography to obtain 6.1 g of a compound (11-3).

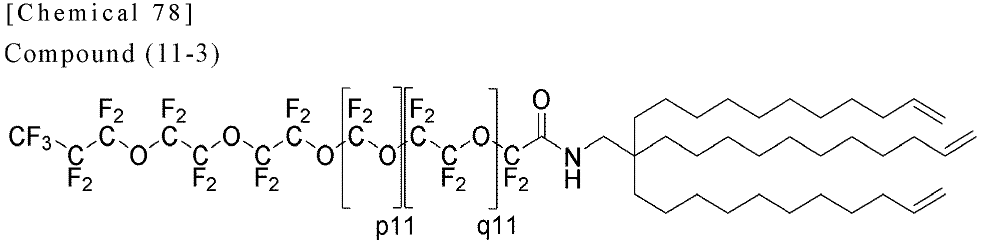

The average of p11 is 21 and the average of q11 is 20.

### <Preparation Example 11-4>

In a reactor the interior of which was replaced with nitrogen, 2.5 g of the compound (11-3), 2.5 g of 1,3-bis(trifluoromethyl)benzene, 0.13 g of a xylene solution (platinum content: 2%) of platinum/1,3-divinyl-1,1,3,3-tetramethyldisiloxane complex, 0.39 g of HSi(OCH₃)₃, and 0.02 g of DMSO were put, followed by stirring at 40°C. After completion of the reaction, the solvent and the like were distilled off under reduced pressure, and filtered by a membrane filter having a pore size of 0.2 µm to obtain 2.6 g of the following compound XI.

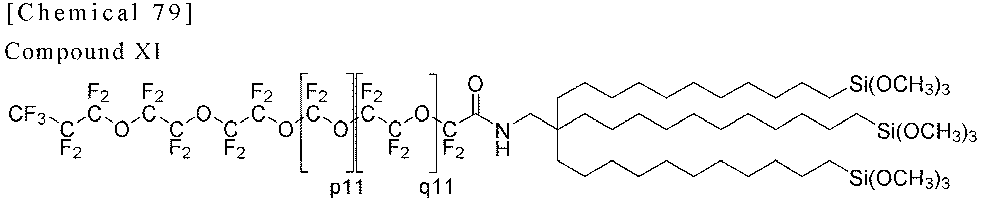

The average of p11 is 21 and the average of q11 is 20.

### [Example 12] Preparation of compound XII

### <Preparation Example 12-1>

Into a reactor, 2.0 g of the compound (7-2), 20.0 g of dehydrated THF, 6.6 mL of 2.0M lithium diisopropylamide (THF solution), and 3.1 g of 11-bromo-1-undecene (CH₂=CH(CH₂)₉-Br) were put and stirred at about -70°C under a nitrogen atmosphere. After completion of the reaction, hydrochloric acid was added and an organic phase was recovered. Then, the recovered organic phase was concentrated by an evaporator and subjected to silica gel column chromatography to obtain 2.1 g of a compound (12-1).

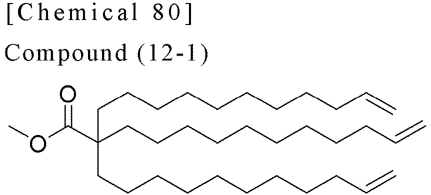

### <Preparation Example 12-2>

Into a reactor, 2.1 g of the compound (12-1), 27.4 g of ethanol, and 4.4 g of potassium hydroxide were put and stirred at about 120°C under a nitrogen atmosphere. After completion of the reaction, hydrochloric acid was added and an organic phase was recovered. Then, the recovered organic phase was concentrated by an evaporator and subjected to silica gel column chromatography to obtain 1.8 g of a compound (12-2).

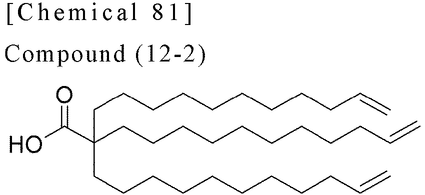

### <Preparation Example 12-3>

Into a reactor, 1.8 g of the compound (12-2), 18 g of dichloromethane, 1.3 g of oxalyl chloride, and 0.01 g of DMF were put and stirred at a room temperature under a nitrogen atmosphere. After completion of the reaction, the mixture was concentrated by an evaporator to obtain 1.8 g of the compound (12-3).

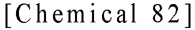

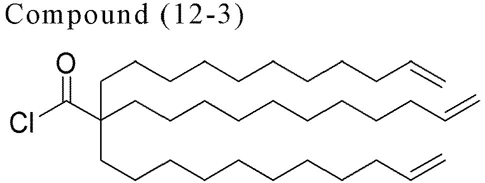

### <Preparation Example 12-4>

Based on the process for producing the compound (D) of International Patent Publication No. WO 2018/143433, the following compound (12-4) was obtained.

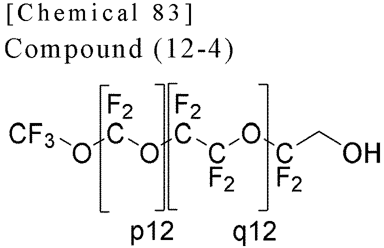

The average of p12 is 28 and the average of q12 is 19.

### <Preparation Example 12-5>

Into a reactor, 7.0 g of the compound (12-4), 7.0 g of AC-6000, 0.4 g of triethylamine, 0.2 g of 4-dimethylaminopyridine, and 1.8 g of the compound (12-3) were put, followed by stirring at 40°C under a nitrogen atmosphere. After completion of the reaction, the mixture was purified by silica gel chromatography to obtain 5.9 g of a compound (12-5).

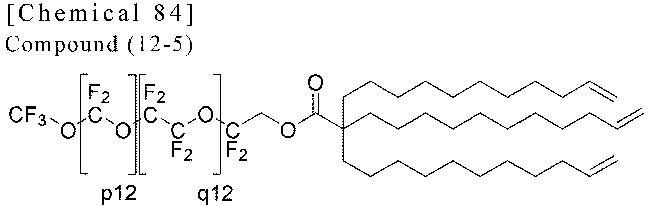

### <Preparation Example 12-6>

In a reactor the interior of which was replaced with nitrogen, 5.0 g of the compound (12-5), 5.0 g of 1,3-bis(trifluoromethyl)benzene, 0.23 g of a xylene solution (platinum content: 3%) of platinum/1,3-divinyl-1,1,3,3-tetramethyldisiloxane complex, 0.78 g of HSi(OCH₃)₃, and 0.1 g of aniline were put, followed by stirring at 40°C. After completion of the reaction, the solvent and the like were distilled off under reduced pressure, and filtered by a membrane filter having a pore size of 0.2 µm to obtain 5.2 g of the following compound XII.

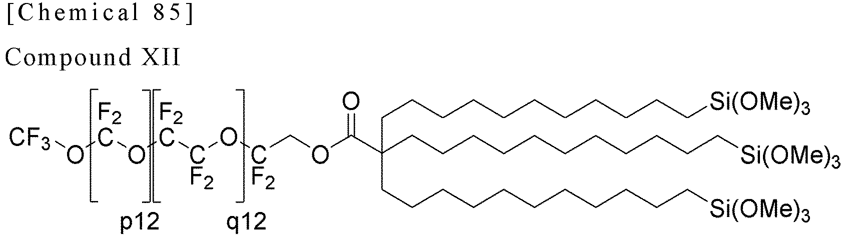

The average of p12 is 28 and the average of q12 is 19.

### [Example 13] Preparation of compound XIII

### <Preparation Example 13-1>

Based on Preparation Example 12 of Japanese Unexamined Patent Application Publication No. 2014-218639, the following compound (13-1) was obtained.

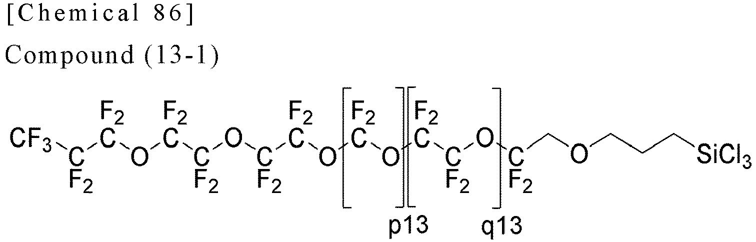

The average of p13 is 21 and the average of q13 is 20.

### <Preparation Example 13-2>

Into a reactor, 5.0 g of the compound (13-1), 5.0 g of 1,3-bis(trifluoromethyl)benzene, and 1.5 g of Undec-10-enylmagnesium bromide (CH₂=CH(CH₂)₉-MgBr) were put and stirred at a room temperature under a nitrogen atmosphere. After completion of the reaction, methanol was added and an organic phase was recovered. Then silica gel was added and the organic phase was recovered by filtering. The recovered organic phase was concentrated by an evaporator and subjected to silica gel column chromatography to obtain 4.4 g of a compound (13-2).

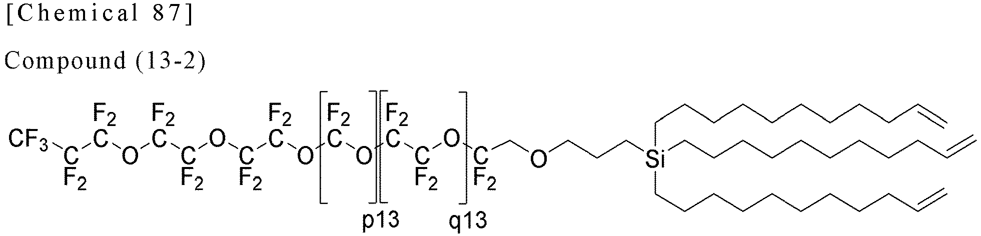

### <Preparation Example 13-3>

In a reactor the interior of which was replaced with nitrogen, 2.0 g of the compound (13-2), 2.0 g of 1,3-bis(trifluoromethyl)benzene, 0.2 g of a xylene solution (platinum content: 2%) of platinum/1,3-divinyl-1,1,3,3-tetramethyldisiloxane complex, 0.33 g of HSi(OCH₃)₃, and 0.02 g of DMSO were put, followed by stirring at 40°C. After completion of the reaction, the solvent and the like were distilled off under reduced pressure, and filtered by a membrane filter having a pore size of 0.2 µm to obtain 2.0 g of the following compound XIII.

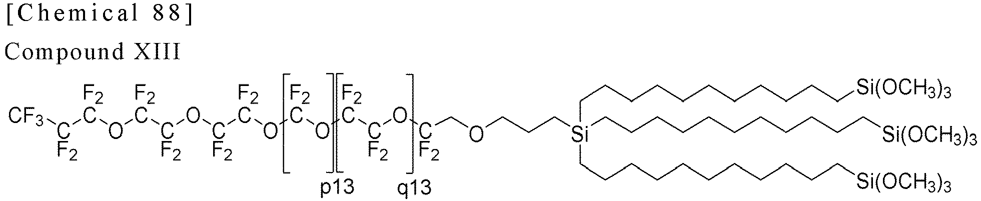

The average of p13 is 21 and the average of q13 is 20.

### [Example 14] Preparation of compound XIV

### <Preparation Example 14-1>

Into a reactor, 0.89 g of lithium aluminum hydride and 25 g of dehydrated THF were put and stirred at 0°C under a nitrogen atmosphere. Then, 2.5 g of the compound (12-1) was put and stirred at 0°C under a nitrogen atmosphere. After completion of the reaction, water and a 1M aqueous sodium hydroxide solution were added, and an organic phase was recovered. Then, the recovered organic phase was concentrated by an evaporator and subjected to silica gel column chromatography to obtain 2.0 g of a compound (14-1).

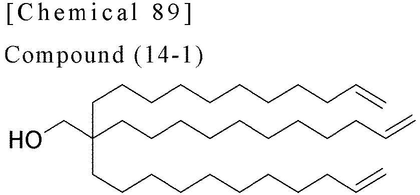

### <Preparation Example 14-2>

By using the aforementioned compound (14-1), based on the method of Examples 1 to 4 of International Patent Publication No. WO 2021/054413, the following compound (14-2) was obtained.

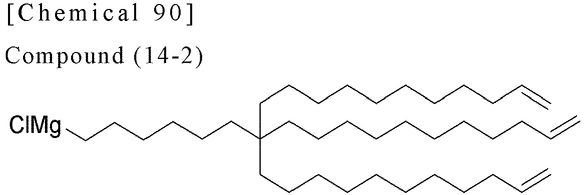

By using the compound (12-4), the following compound (12-4B) was obtained according to the method of Preparation Example 2 of International Patent Publication No. WO 2021/054413.

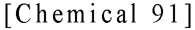

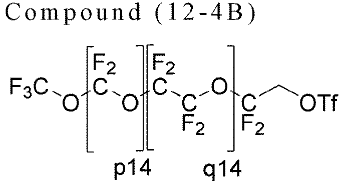

The average of p14 is 28 and the average of q14 is 19.

### <Preparation Example 14-3>

Into a reactor, 5.0 g of the compound (12-4B), 3.0 g of the compound (14-2), 5.0 g of 1,3-bis(trifluoromethyl)benzene, 0.08 g of 1-phenyl-1-propyne, and 0.02 g of CuCl₂ were put and stirred at 60°C under a nitrogen atmosphere. After completion of the reaction, the mixture was concentrated by an evaporator and purified by silica gel chromatography to obtain 4.1 g of a compound (14-3).

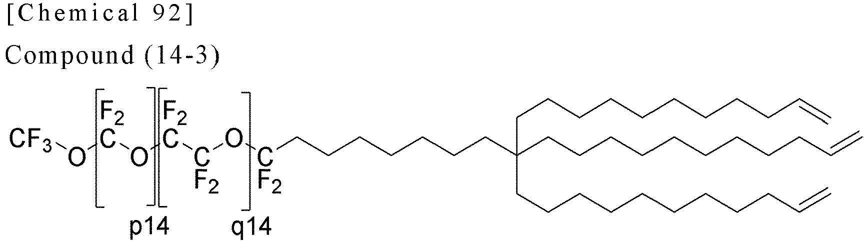

The average of p14 is 28 and the average of q14 is 19.

### <Preparation Example 14-4>

In a reactor the interior of which was replaced with nitrogen, 3.0 g of the compound (12-5), 3.0 g of 1,3-bis(trifluoromethyl)benzene, 0.18 g of a xylene solution (platinum content: 3%) of platinum/1,3-divinyl-1,1,3,3-tetramethyldisiloxane complex, 0.46 g of HSi(OCH₃)₃, and 0.03 g of aniline were put, followed by stirring at 40°C. After completion of the reaction, the solvent and the like were distilled off under reduced pressure, and filtered by a membrane filter having a pore size of 0.2 µm to obtain 3.2 g of the following compound XIV.

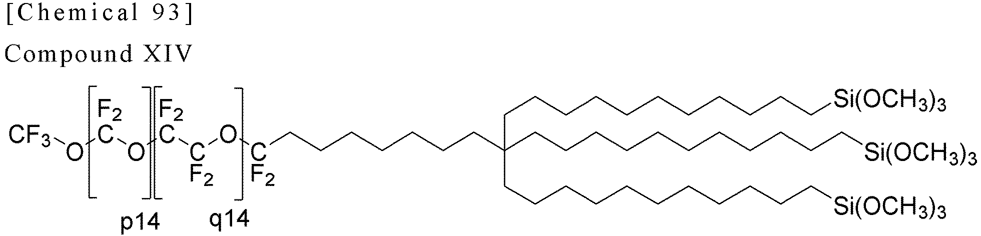

The average of p14 is 28 and the average of q14 is 19.

### [Example 15] Preparation of compound XV

### <Preparation Example 15-1>

The following compound (15-1) was obtained according to the method of Example 7 of International Patent Publication No. WO2013/121984.

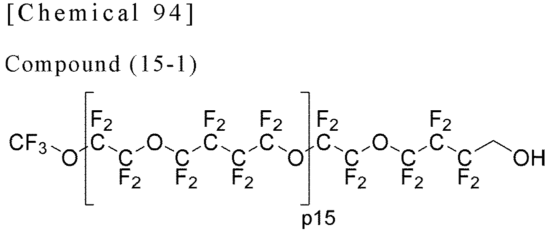

The average of p15 is 13.

Further, by using the compound (15-1), according to the method of Preparation Example 2 of International Patent Publication No. WO 2021/054413, the following compound (15-1B) was obtained.

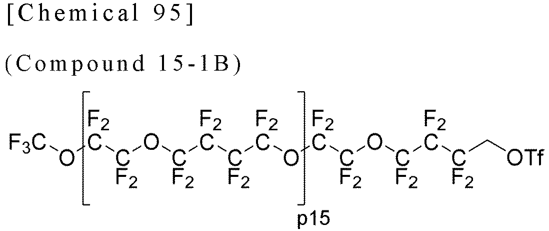

The average of p15 is 13.

Further, based on the method of Examples 1 to 4 of International Patent Publication No. WO 2021/054413, the following compound (14-2B) was obtained.

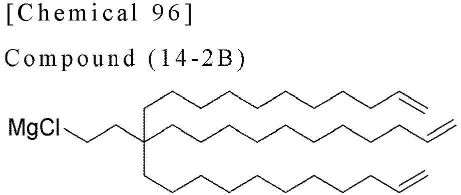

### <Preparation Example 15-2>

Into a reactor, 10 g of the compound (15-1B), 4.6 g of the compound (14-2B), 10.0 g of 1,3-bis(trifluoromethyl)benzene, 0.16 g of 1-phenyl-1-propyne, and 0.05 g of CuCl₂ were put and stirred at 60°C under a nitrogen atmosphere. After completion of the reaction, the mixture was concentrated by an evaporator and purified by silica gel chromatography to obtain 4.1 g of a compound (15-2).

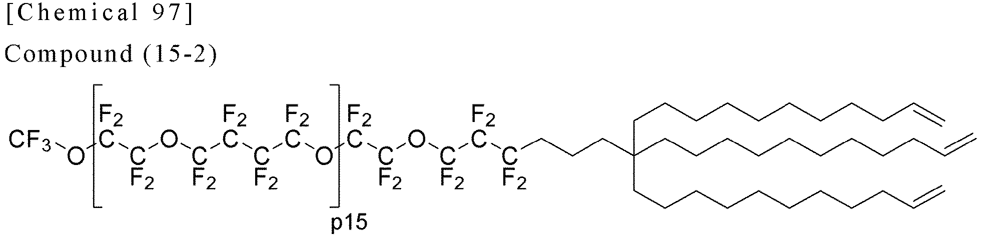

### <Preparation Example 15-3>

In a reactor the interior of which was replaced with nitrogen, 2.0 g of the compound (15-2), 2.0 g of AC-6000, 0.12 g of a xylene solution (platinum content: 3%) of platinum/1,3-divinyl-1,1,3,3-tetramethyldisiloxane complex, 0.28 g of HSi(OCH₃)₃, and 0.02 g of aniline were put, followed by stirring at 40°C. After completion of the reaction, the solvent and the like were distilled off under reduced pressure, and filtered by a membrane filter having a pore size of 0.2 µm to obtain 2.1 g of the following compound XV.

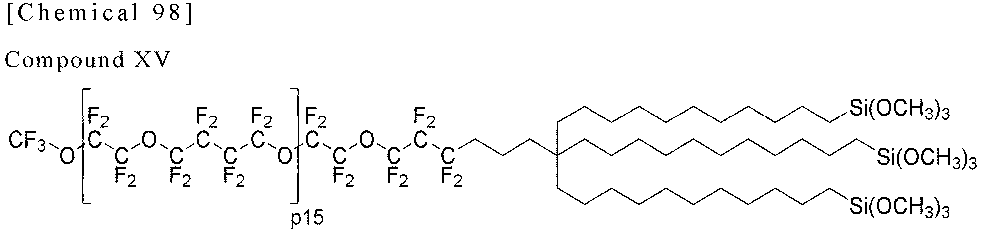

The average of p15 is 13.

### [Example 16] Preparation of compound XVI

### <Preparation Example 16-1>

Based on the method of Preparation Example 9-2 of International Patent Publication No. WO 2020/166488, the following compound (16-1) was obtained.

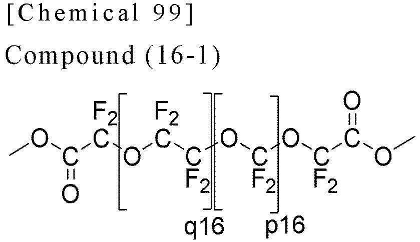

The average of p16 is 21 and the average of q16 is 23.

### <Preparation Example 16-2>

Into a reactor, 20 g of the compound (16-1), 5.9 g of the compound (10-2), and 20.0 g of 1,3-bis(trifluoromethyl)benzene were put and stirred at a room temperature under a nitrogen atmosphere. After completion of the reaction, the mixture was concentrated by an evaporator and purified by silica gel chromatography to obtain 13.9 g of a compound (16-2).

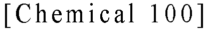

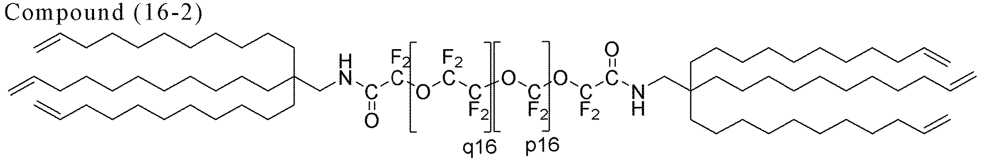

### <Preparation Example 16-3>

In a reactor the interior of which was replaced with nitrogen, 10.0 g of the compound (16-2), 0.9 g of a xylene solution (platinum content: 3%) of platinum/1,3-divinyl-1,1,3,3-tetramethyldisiloxane complex, 2.1 g of HSi(OCH₃)₃, 0.18 g of aniline, and 10.0 g of AC-6000 were put, followed by stirring at 40°C. After completion of the reaction, the solvent and the like were distilled off under reduced pressure and filtered by a membrane filter having a pore size of 0.2 µm to obtain 11.2 g of the following compound XVI.

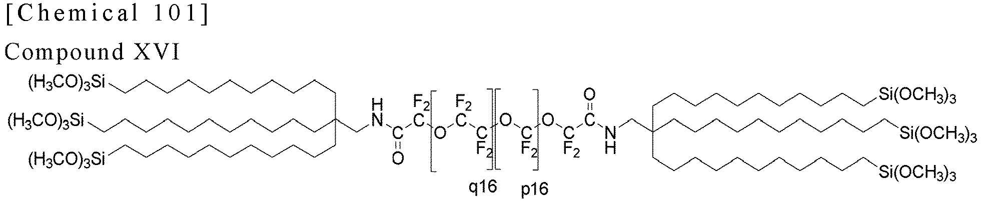

The average of p16 is 21 and the average of q16 is 23.

### [Example 17]

The following compound disclosed in International Patent Publication No. WO 2021/010105 was prepared.

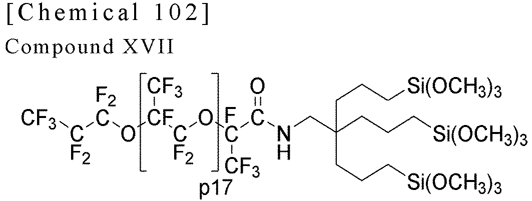

The average of p17 is 22.

### [Example 18]

The following compound disclosed in Japanese Unexamined Patent Application Publication No. 2014-218639 was prepared.

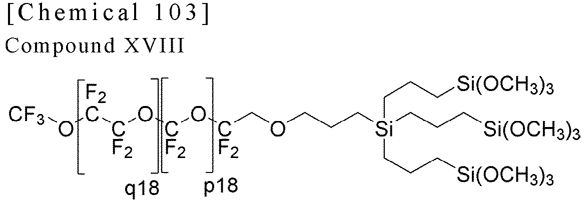

### [Example 19] Preparation of compound XIX

### <Preparation Example 19-1>

Dimethylmalonate (2.0 g), 11-bromo-1-undecene (9.1 g), potassium carbonate (8.4 g), and dimethylformamide (50 g) were added and stirred at 85°C. After the mixture was cooled to room temperature, an aqueous hydrochloric acid solution was added, followed by extraction with dichloromethane. The solvent was distilled off to obtain 8.15 g of the following compound (19-1).

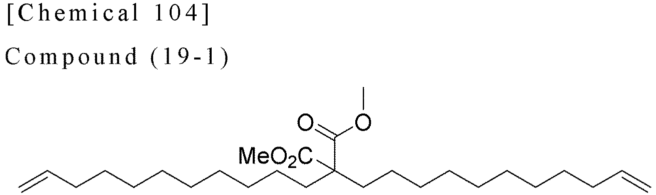

### -NMR Spectrum of compound (19-1)

¹H-NMR (400 MHz, Chloroform-d) δ (ppm): 5.92-5.74 (m, 2H), 5.13-4.90 (m, 4H), 3.7 (s, 6H), 1.95-2.20 (m, 4H), 1.90-1.0 (m, 32H)

### <Preparation Example 19-2>

Dimethyl sulfoxide (30 g) was added to the aforementioned compound (19-1) (8.15 g) and stirred. After that, water (5 g) and lithium chloride (2.9 g) were added. The mixture was raised to 180°C and stirred with heating. The mixture was cooled to room temperature, followed by extraction with dichloromethane. Then the solvent was distilled off and subjected to flash column chromatography using silica gel (developing solvent: ethyl acetate/hexane) to obtain 4.3 g of a compound (19-2).

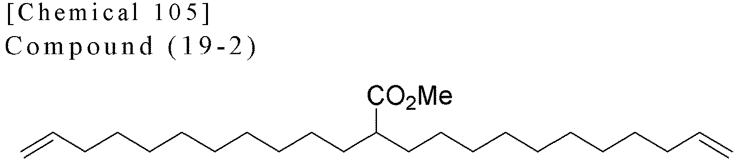

### -NMR Spectrum of compound (19-2)

¹H-NMR (400 MHz, Chloroform-d) δ (ppm): 5.92-5.74 (m, 2H), 5.13-4.90 (m, 4H), 3.7 (s, 3H), 2.21-2.42 (m, 1H), 1.95-2.20 (m, 4H), 1.90-1.0 (m, 32H)

### <Preparation Example 19-3>

The aforementioned compound (19-2) (1.0 g) was dissolved in THF (10 mL), THF solution of lithium diisopropylamide (1.6 mL, 3.17 mmol) was added, and stirred at -70°C for 15 minutes. After that, 11-bromo-1-undecene (0.92 g) was added and stirred at room temperature overnight. After that, hydrochloric acid was added, followed by extraction with dichloromethane. Then the mixture was distilled off to obtain 1.23 g of the following compound (19-3).

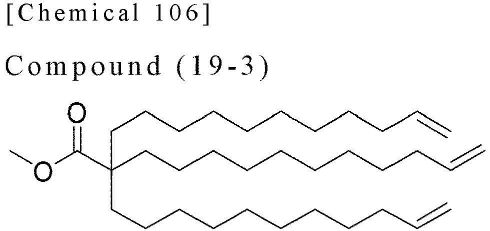

### - NMR Spectrum of compound (19-3)

¹H-NMR (400 MHz, Chloroform-d) δ (ppm): 5.92-5.74 (m, 3H), 5.13-4.90 (m, 6H), 3.55-3.72 (s, 3H), 1.95-2.20 (m, 6H), 1.90-1.0 (m, 48H)

### <Preparation Example 19-4>

The aforementioned compound (19-3) (1.23 g) was dissolved in THF and cooled to 0°C. THF solution (5 mL, 5 mmol) of lithium ammonium hydride was added, followed by stirring. Water and a 15% aqueous sodium hydroxide solution were added and stirred at room temperature, followed by dilution with dichloromethane. After the filtration, the solvent was distilled off and subjected to flash column chromatography that uses silica gel (developing solvent: ethyl acetate/hexane) to obtain 1.0 g of the following compound (19-4).

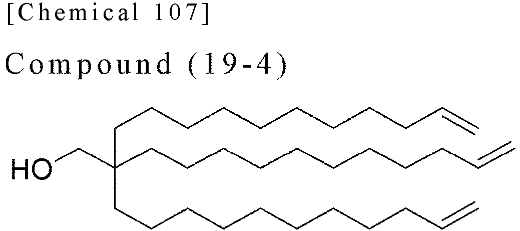

### -NMR Spectrum of compound (19-4)

¹H-NMR (400 MHz, Chloroform-d) δ (ppm): 5.92-5.74 (m, 3H), 5.13-4.90 (m, 6H), 3.28-3.45 (s, 2H), 1.95-2.20 (m, 6H), 1.90-1.0 (m, 48H)

### <Preparation Example 19-5>

The following compound (19-5) was obtained according to the method of Example 6 of International Patent Publication No. WO 2013/121984.

CF₃-O-(CF₂CF₂O-CF₂CF₂CF₂CF₂O)ₓ₁₉(CF₂CF₂O)-CF₂CF₂CF₂-C(O)OCH₃ ··· Formula (19-5)

The average of numbers x19 of units: 14

### <Preparation Example 19-6>

By using the aforementioned compound (19-5), the following compound (19-6) was obtained according to the method of Preparation Examples 8-10 in Examples in International Patent Publication No. WO 2021/251396.

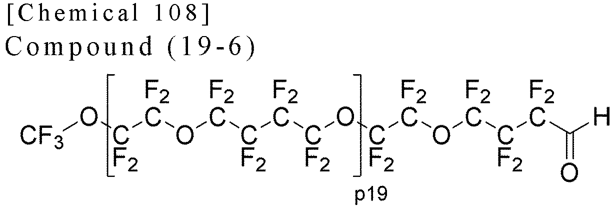

The average of numbers p19 of units: 14

### <Preparation Example 19-7>

1,3-bistrifluoromethyl benzene (10 g) was added to the aforementioned compound (19-6) (5.0 g), followed by adding the aforementioned compound (19-4) (0.74 g). After the mixture was stirred at room temperature for 1 hour, bis(2-methoxyethyl)aminosulfur=trifluoride (0.95 g) was added. After the mixture was heated to 80°C and stirred for 1 hour, methanol was added, followed by extraction with AC6000. The solvent was distilled off and subjected to column chromatography that uses silica gel (developing solvent: AC6000) to obtain 4.8 g of the following compound (19-7).

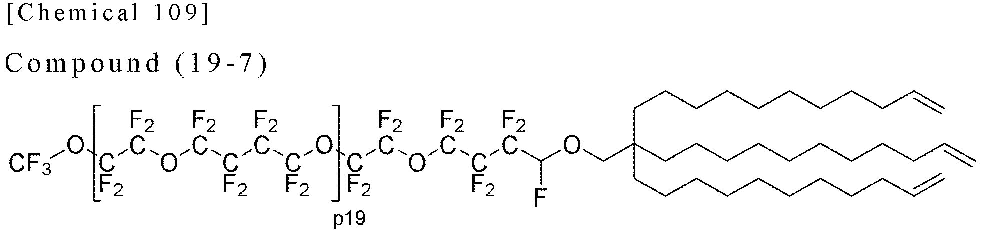

The average of numbers p19 of units: 14

### -NMR Spectrum of compound (19-7)

¹H-NMR (400 MHz, Chloroform-d) δ (ppm): 5.82-5.65 (m, 3H), 5.65-5.35 (1H), 5.0-4.75 (m, 6H), 4.00-3.40 (2H), 2.1-1.85 (m, 6H), 1.60-1.00 (48H)
¹⁹F-NMR (376 MHz, Chloroform-d) δ (ppm): -55.3, -82.8, -88.0, -90.2, -125.2, -141.8

### <Preparation Example 19-8>

AC6000 (1.0 g), the aforementioned compound (19-7) (0.5 g), a toluene solution (platinum content 3%, 8.3 mg) of platinum/1,3-divinyl-1,1,3,3-tetramethyldisiloxane complex, aniline (2.6 mg), and trimethoxysilane (200 mg) were added, followed by stirring at 40°C. After that, the solvent was distilled off under reduced pressure to obtain 0.52 g of the following fluorinated ether compound XIX.

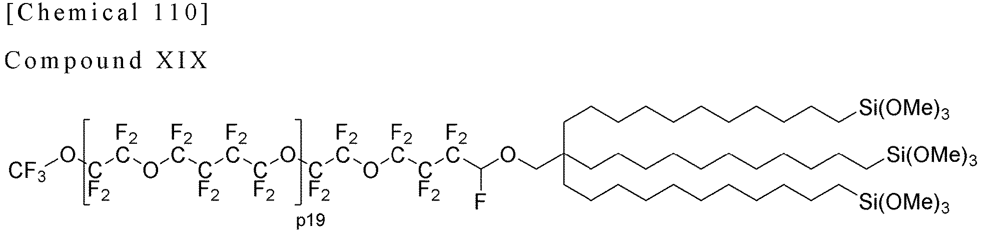

The average of numbers p19 of units: 14

### - NMR Spectrum of compound XIX

¹H-NMR (400 MHz, Chloroform-d) δ (ppm): 5.65-5.35 (1H), 4.01 to 3.38 (29H), 1.81-1.03 (m, 60H), 0.73-0.63 (6H)
¹⁹F-NMR (376 MHz, Chloroform-d) δ (ppm): -55.3, -82.8, -88.0, -90.2, -125.2, -141.8

### [Example 20] Preparation of compound XX

### <Preparation Example 20-1>

The aforementioned compound (19-3) (1.0 g) was dissolved in THF (10 mL), THF solution of lithium diisopropylamide (1.6 mL, 3.17 mmol) was added, and stirred at -70°C for 15 minutes. After that, iodomethane (1.0 g) was added and stirred at room temperature overnight. After that, hydrochloric acid was added, followed by extraction with dichloromethane. Then the mixture was distilled off to obtain 0.95 g of the following compound (20-1).

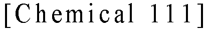

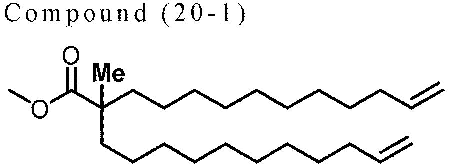

### - NMR Spectrum of compound (20-1)

¹H-NMR (400 MHz, Chloroform-d) δ (ppm): 5.92-5.70 (m, 2H), 5.13-4.90 (m, 4H), 3.55-3.72 (s, 3H), 1.90-2.20 (m, 4H), 1.90-1.20 (m, 32H), 1.00-1.20 (s, 3H)

### <Preparation Example 20-2>

The aforementioned compound (20-1) (0.95 g) was dissolved in THF and the mixture was cooled to 0°C. A THF solution of lithium ammonium hydride (5 mL, 5 mmol) was added, followed by stirring. Water and a 15% aqueous sodium hydroxide solution were added and stirred at room temperature, followed by dilution with dichloromethane. After the filtration, the solvent was distilled off and subjected to flash column chromatography using silica gel (developing solvent: ethyl acetate/hexane) to obtain 0.83 g of the following compound (20-2).

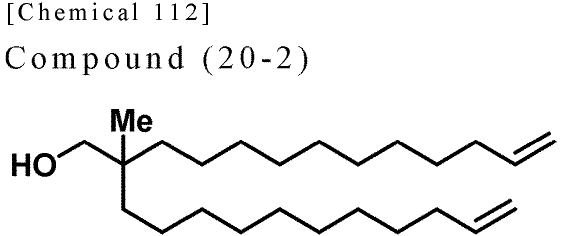

### NMR Spectrum of compound (20-2)

¹H-NMR (400 MHz, Chloroform-d) δ (ppm): 5.92-5.74 (m, 2H), 5.13-4.90 (m, 4H), 3.28-3.48 (s, 2H), 1.95-2.20 (m, 4H), 1.90-1.20 (m, 32H), 1.00-1.20 (s, 3H)

### <Preparation Example 20-3>

The aforementioned compound (20-2) (0.83 g) was dissolved in acetonitrile, and carbon tetrachloride (0.63 g) and triphenylphosphine (1.08 g) were added and stirred at 60°C for 3 hours. After the filtration, the solvent was distilled off and subjected to flash column chromatography using silica gel (developing solvent: ethyl acetate/hexane) to obtain 0.73 g of the following compound (20-3).

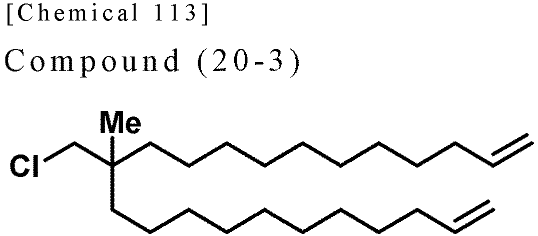

### NMR Spectrum of compound (20-3)

¹H-NMR (400 MHz, Chloroform-d) δ (ppm): 5.92-5.74 (m, 2H), 5.13-4.90 (m, 4H), 3.34-3.52 (s, 2H), 1.95-2.20 (m, 4H), 1.90-1.20 (m, 32H), 1.00-1.20 (s, 3H)

### <Preparation Example 20-4>

The aforementioned compound (20-3) (0.45 g) was dissolved in THF (0.46 g), an isopropylmagnesium chloride THF solution (12wt%, 0.052 g) and magnesium (0.031 g) were added, and stirred at 60°C for 24 hours. After that, 1,3-bistrifluoromethyl benzene (10 mL), copper chloride (0.0047 g), and the following compound (20-4) (1.1 g) were added, and stirred at 60°C for 24 hours. After that, hydrochloric acid was added, followed by extraction with 1,3-bistrifluoromethyl benzene. Then the mixture was distilled off and flash column chromatography that uses silica gel (developing solvent: AE-3000/hexane) was conducted to obtain 0.53 g of the following compound (20-5).

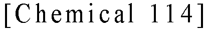

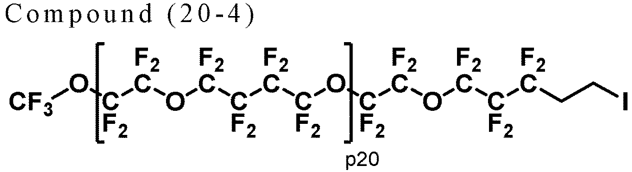

The average of numbers p20 of units: 14

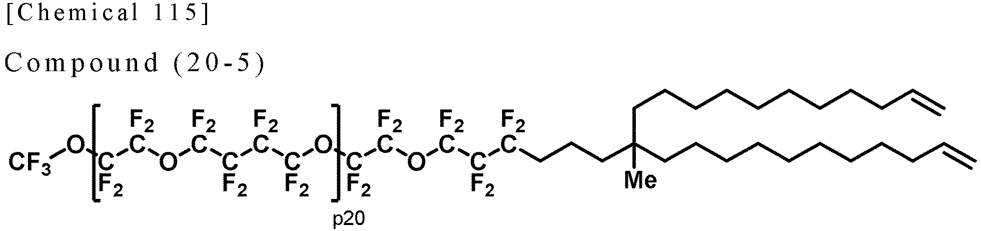

The average of numbers p20 of units: 14

### <Preparation Example 20-5>

AC6000 (1.0 g), the aforementioned compound (20-5) (0.5 g), a toluene solution (platinum content 3%, 8.3 mg) of platinum/1,3-divinyl-1,1,3,3-tetramethyldisiloxane complex, aniline (2.6 mg), and trimethoxysilane (200 mg) were added and stirred at 40°C for 24 hours, and then the solvent was distilled off under reduced pressure to obtain 0.52 g of the following fluorinated ether compound (XX).

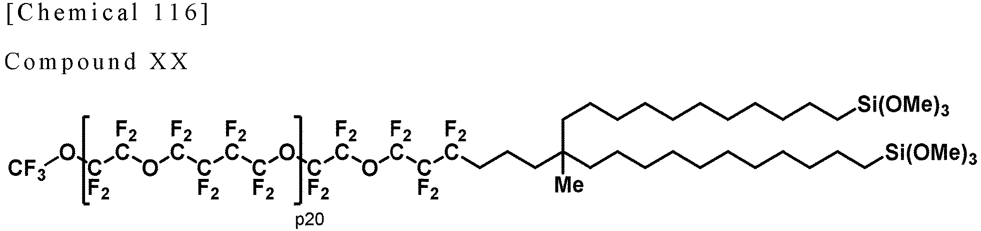

The average of numbers p20 of units: 14
¹H-NMR (400 MHz, Chloroform-d) δ (ppm): 4.01-3.38 (18H), 2.20-2.0 (m, 2H), 1.90-1.10 (m, 44H), 0.98-0.82 (s, 3H), 0.80-0.72 (t,4H)

### [Example 21] Preparation of compound XXI

### <Preparation Example 21-1>

Into a reactor, 3.0 g of malononitrile, 22.3 g of 11-bromo-1-undecene, 25.1 g of potassium carbonate, and 30.1 g of N,N-dimethylformamide were put, stirred at 80°C for 2 hours, followed by recovering the organic layer by filtering. The recovered organic layer was distilled off under reduced pressure, dissolved in dichloromethane, and washed with water. After the organic layer was recovered and distilled off under reduced pressure, the resultant was purified by silica gel chromatography to obtain 15.3 g of a compound (21-1).

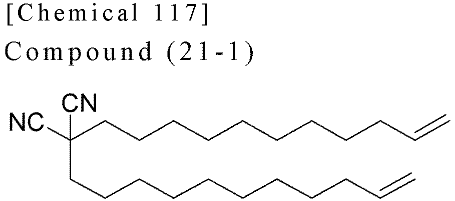

### <Preparation Example 21-2>

Into a reactor, 15.0 g of the compound (21-1), 3.1 g of lithium aluminum hydride, and 75.2 g of tetrahydrofuran were put, stirred at 40°C for 2 hours, followed by adding t-butyl methyl ether, water, and a 12% aqueous sodium hydroxide solution for quenching. After the solution was recovered by filtering and the recovered solution was distilled off under reduced pressure, the resultant was purified by silica gel chromatography to obtain 10.6 g of a compound (21-2).

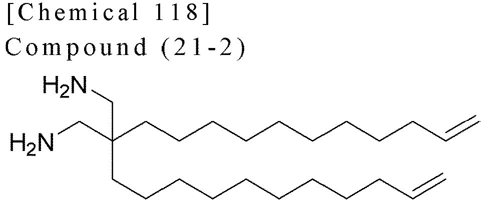

### <Preparation Example 21-3>

Into a reactor, 5.0 g of the compound (3-3) obtained in the aforementioned Preparation Example 3-3 and 0.7 g of the compound (21-2) were put and stirred at 130°C for 90 hours, and then purified by silica gel chromatography to obtain 2.9 g of a compound (21-3).

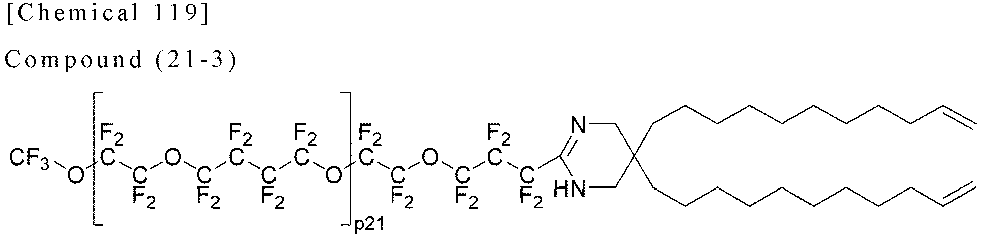

The average of p21 is 13.

### <Preparation Example 21-4>

Into a reactor, 1.0 g of the compound (21-3), 2.0 g of AC-6000, 0.032 g of a xylene solution (platinum content: 3%) of platinum/1,3-divinyl-1,1,3,3-tetramethyldisiloxane complex, 0.11 g of HSi(OCH₃)₃, and 0.010 g of aniline were put and stirred at 40°C for 2 hours, followed by distilling off under reduced pressure to obtain 1.0 g of a compound XXI.

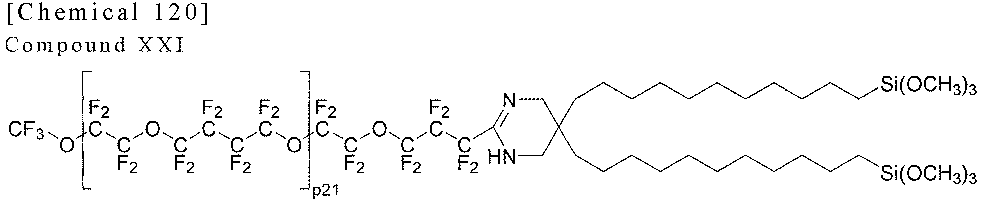

The average of p21 is 13.

### [Example 22] Preparation of compound XXII

### <Preparation Example 22-1>

By using the compound (8-1) obtained in the aforementioned Preparation Example 8-1, based on the method of Examples 1 and 2 of International Patent Publication No. WO 2021/054413, a compound (22-1) was obtained.

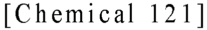

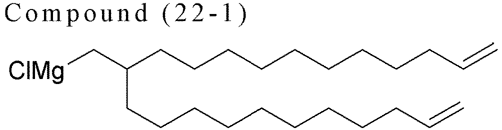

### <Preparation Example 22-2>

In the same manner as in the aforementioned Preparation Example 1-2 except that the compound (3-3) obtained in the aforementioned Preparation Example 3-3 was used instead of the compound (1-1) and the compound (22-1) was used instead of Undec-10-enylmagnesium bromide (CH₂=CH(CH₂)₉-MgBr), a compound (22-2) was obtained.

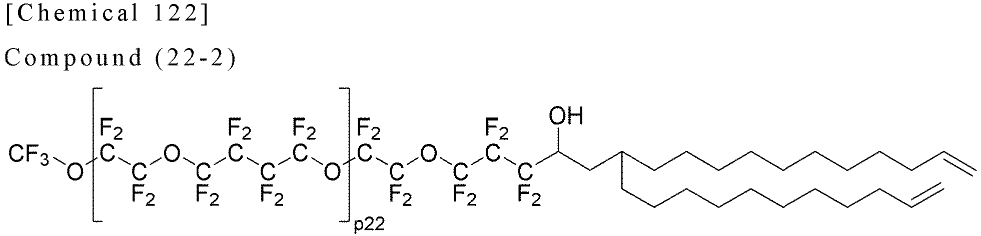

The average of p22 is 13.

### <Preparation Example 22-3>

In the same manner as in the aforementioned Preparation Example 5-1 except that the compound (22-2) was used instead of the compound (1-2), a compound (22-3) was obtained.

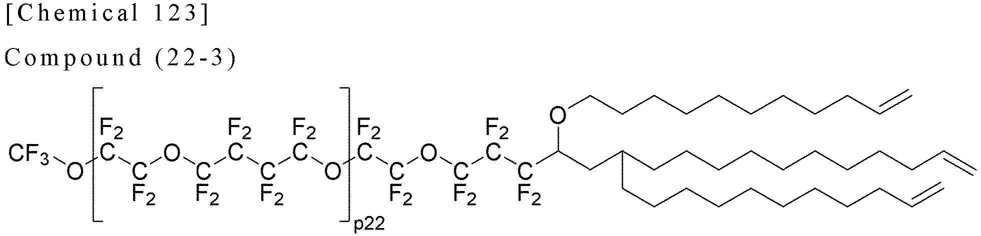

The average of p22 is 13.

### <Preparation Example 22-4>

In the same manner as in Preparation Example 5-2 except that the compound (22-3) was used instead of the compound (5-1), a compound XXII was obtained.

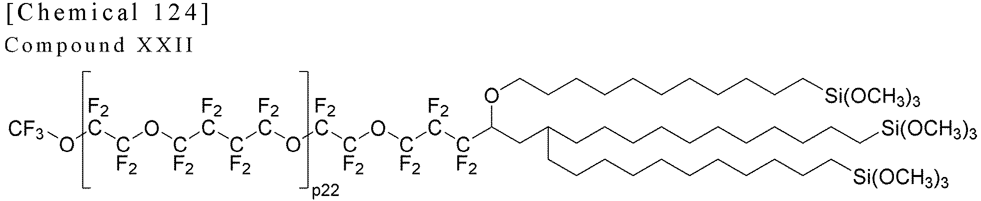

The average of p22 is 13.

### [Example 23] Preparation of compound XXIII

### <Preparation Example 23-1>

Into a reactor, 2.0 g of the compound (6-2) obtained in the aforementioned Preparation Example 6-2 and 7.6 g of tetrahydrofuran were put and cooled to 0°C. 3.4 g of lithium diisopropylamide (2M tetrahydrofuran solution) was added and stirred for 30 minutes, followed by adding 2.7 g of diethylene glycol 2-bromoethyl methyl ether and stirring at room temperature. After completion of the reaction, hydrochloric acid was added. After an organic phase was recovered, the recovered organic phase was distilled off under reduced pressure. Then silica gel column chromatography was conducted to obtain 2.2 g of a compound (23-1).

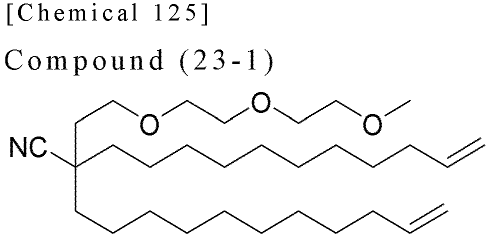

### <Preparation Example 23-2>

Into a reactor, 2.2 g of the compound (23-1), 0.34 g of lithium aluminum hydride, and 11.0 g of tetrahydrofuran were put and stirred at 40°C for 1 hour, followed by adding t-butyl methyl ether, water, and a 12% aqueous sodium hydroxide solution for quenching. After the solution was recovered by filtering, the recovered solution was distilled off under reduced pressure, followed by purification by silica gel chromatography to obtain 1.6 g of a compound (23-2).

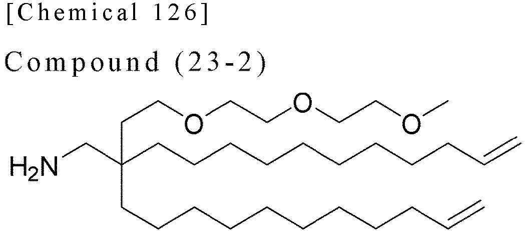

### <Preparation Example 23-3>

Into a reactor, 1.5 g of the compound (3-3) obtained in the aforementioned Preparation Example 3-3, 0.33 g of the compound (23-2), and 0.75 g of AC-2000 were put, stirred at 40°C for 16 hours, followed by purification by silica gel chromatography to obtain 1.2 g of a compound (23-3).

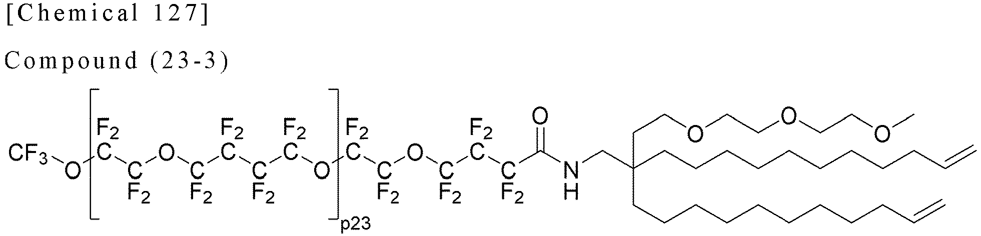

The average of p23 is 13.

### <Preparation Example 23-4>

Into a reactor, 1.0 g of the compound (23-3), 2.0 g of AC-6000, 0.032 g of a xylene solution (platinum content: 3%) of platinum/1,3-divinyl-1,1,3,3-tetramethyldisiloxane complex, 0.12 g of HSi(OCH₃)₃, and 0.011 g of aniline were put and stirred at 40°C for 2 hours, and distilled off under reduced pressure to obtain 1.0 g of a compound XXIII.

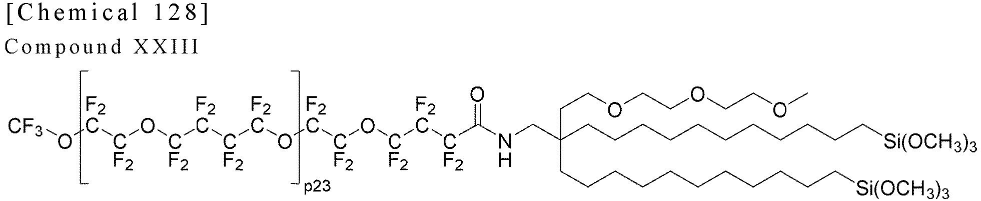

The average of p23 is 13.

### [Example 24] Preparation of compound XXIV

### <Preparation Example 24-1>

In according with the method of Examples 2 to 3 in International Patent Publication No. WO 2022/186266, a compound (24-1) was obtained.

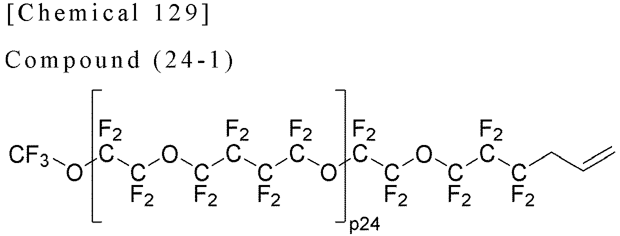

The weight average molecular weight Mw is 4500.

### <Preparation Example 24-2>

7 g of the compound (24-1), 0.23 g of a xylene solution (platinum content 2%) of a platinum/1,3-divinyl-1,1,3,3,-tetramethyldisiloxane complex, 7 g of 1,3-bis(trifluoromethyl)benzene, and 1.05 g of trichlorosilane were added and stirred at room temperature for 2 hours, followed by distilling off under reduced pressure to obtain 7.1 g of the compound (24-2).

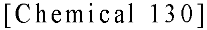

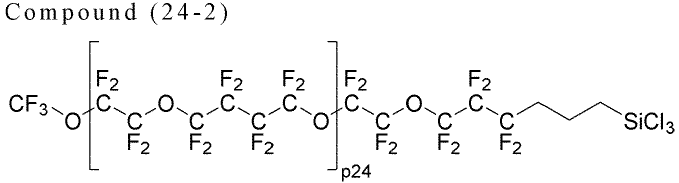

### <Preparation Example 24-3>

7 g of the compound (24-2), 4.4 g of Undec-10-enylmagnesium bromide (CH₂=CH(CH₂)₉-MgBr), and 14 g of 1,3-bis(trifluoromethyl)benzene were put and stirred at 60°C for 12 hours, followed by adding a 1N hydrochloric acid. Then, after the organic layer was recovered, the recovered organic layer was distilled off by filtering under reduced pressure to obtain 5.4 g of a compound (24-3).

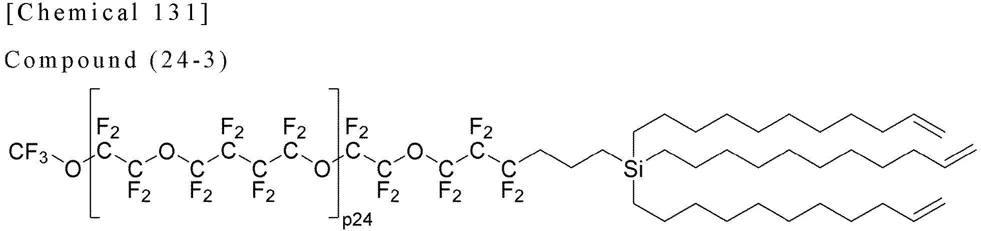

### <Preparation Example 24-4>

1 g of the compound (24-3), 0.05 g of a xylene solution (platinum content 2%) of platinum/1,3-divinyl-1, 1,3,3,-tetramethyldisiloxane complex, 0.02 g of DMSO, 3 g of 1,3-bis(trifluoromethyl)benzene, and 0.14 g of trimethoxysilane were put and stirred at 40°C for 2 hours, followed by distilling off under reduced pressure to obtain 1 g of a compound XXIV.

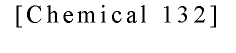

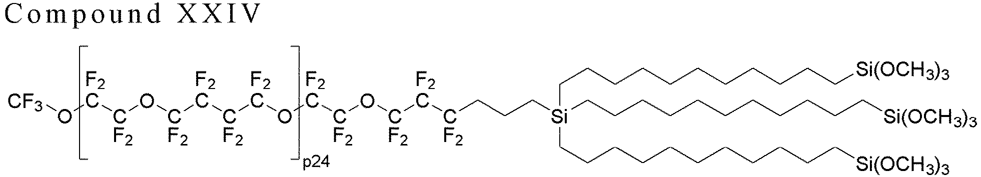

### [Production and Evaluation of Article]

Using the compound obtained in each of Examples 1 to 24, surface treatment of a substrate was conducted to obtain an articled having a surface layer. As the surface treatment method, in each example, the following dry coating method and wet coating method were, respectively, employed. As the substrate, chemically tempered glass was used. With respect to the obtained article, evaluations were carried out by the following methods. The results are shown in Table 1.

### (Dry Coating Method)

The dry coating was conducted by using a vacuum deposition apparatus (manufactured by ULVAC Co., VTR-350M) (vacuum deposition method). 0.5 g of the compound in each of Examples 1 to 24 was filled in a boat made of molybdenum in the vacuum deposition apparatus, and inside of the vacuum deposition apparatus was evacuated of air to a level of at most 1×10⁻³Pa. The boat on which the compound was placed was heated at a temperature raising rate of at most 10°C/min, and at the time when the vapor deposition rate by a quartz oscillator film thickness meter exceeded 1 nm/sec, the shutter was opened to initiate film deposition on the surface of a substrate. When the film thickness became about 50 nm, the shutter was closed to terminate film deposition on the surface of the substrate. The substrate on which the compound was deposited was subjected to heat treatment at 200°C for 30 minutes, followed by washing with AE-3000 to obtain an article having a surface layer on the surface of the substrate.

### (Wet Coating Method)

The compound obtained in each of Examples 1 to 24, and C₄F₉OC₂H₅ (manufactured by 3M, Novec (registered trademark) 7200) as a liquid medium, were mixed to prepare a coating liquid having a solid content of 0.05%. A substrate was dipped in the coating liquid and allowed to stand for 30 minutes, whereupon the substrate was taken out (dip coating method). The coating film was dried at 200°C for 30 minutes and washed with AE-3000 to obtain an article having a surface layer on the surface of the substrate.

### (Evaluation Methods)

### <Method for measuring Contact Angle>

The contact angle of about 2 µL of distilled water or n-hexadecane placed on the surface of the surface layer, was measured by using a contact angle measuring apparatus (manufactured by Kyowa Interface Science Co., Ltd., DMo-701). Measurements were conducted at five different points on the surface of the surface layer, and the average value was calculated. For the calculation of the contact angle, a 2θ method was employed.

### <Initial Contact Angle>

With respect to the surface layer, the initial water contact angle and the initial n-hexadecane contact angle were measured by the above-described measuring method. The evaluation standards are as follows.
Initial Water Contact Angle:
   A (excellent): at least 110 degrees
   B (good): at least 100 degrees and less than 110 degrees
   C (poor): less than 100 degrees
Initial n-Hexadecane Contact Angle:
   A (excellent): at least 66 degrees
   B (good): at least 60 degrees and less than 66 degrees.
   C (poor): less than 60 degrees.

### <Abrasion Resistance>

With respect to the surface layer, in accordance with JIS L0849:2013 (ISO 105-X12: 2001), using a reciprocating traverse testing machine (manufactured by KNT Co.), elastomer was reciprocated under a pressure of 49 kPa at a speed of 320 cm/min, whereupon the water contact angle was measured every 1000 reciprocations. The water contact angle on the surface layer was measured. Table 1 shows the number of times the water contact angle maintains 90% of the initial contact angle. The maximum number of times of measurement was 15000 reciprocations. When the water contact angle after 15000 reciprocations maintains at least 90% of the initial contact angle, the number 15000 is shown in Table 1.

### <Fingerprint Stain Removability>

An artificial fingerprint liquid (liquid consisting of oleic acid and squalene) was deposited on a flat surface of a silicon rubber plug, and then, extra oil was wiped off by a nonwoven fabric (manufactured by Asahi Kasei Corporation, BEMCOT (registered trademark) M-3), to prepare a fingerprint stamp. The fingerprint stamp was placed on the surface layer and pressed under a load of 9.8 N for 10 seconds. The haze at a portion having a fingerprint put, was measured by a haze meter and taken as an initial value. With respect to the portion having a fingerprint put, using a reciprocating traverse testing machine (manufactured by KNT Co.) having tissue paper attached, wiping was carried out under a load of 2.5 N. The value of haze was measured every one reciprocation for wiping, and the number of wiping times until the haze became at most 10% of the initial value was measured. The smaller the number of wiping times, the easier the removal of fingerprint stain, and the better the fingerprint stain removability. The evaluation standards are as follows.
A (excellent): The number of wiping times is at most 3 times.
B (good): The number of wiping times is from 4 to 5 times.
C (acceptable): The number of wiping times is from 6 to 8 times.
D (poor): The number of wiping times is at least 9 times.

### [Table 1]

**Table 1**

| Compound | | | I | II | III | IV | V | VI | VII | VIII | IX |
|---|---|---|---|---|---|---|---|---|---|---|---|
| Dry coating method | Initial contact angle | Water | A | A | A | A | A | A | A | A | A |
| | | n-hexane | A | A | A | A | A | A | A | A | A |
| | Wear resistance | | 6000 | 8000 | 8000 | 12000 | 13000 | 15000 | 15000 | 15000 | 15000 |
| | Fingerprint stain removability | | A | A | A | A | A | A | A | A | A |
| Wet coating method | Initial contact angle | Water | A | A | A | A | A | A | A | A | A |
| | | n-hexane | A | A | A | A | A | A | A | A | A |
| | Wear resistance | | 6000 | 7000 | 8000 | 13000 | 13000 | 15000 | 13000 | 15000 | 15000 |

| Compound | | | X | XI | XII | XIII | XIV | XV | XVI | XVII | XVIII |
|---|---|---|---|---|---|---|---|---|---|---|---|
| Dry coating method | Initial contact angle | Water | A | A | A | A | A | A | B | A | A |
| | | n-hexane | A | A | A | A | A | A | B | A | A |
| | Wear resistance | | 15000 | 15000 | 15000 | 15000 | 15000 | 15000 | 15000 | 5000 | 4000 |
| | Fingerprint stain removability | | A | A | B | B | B | B | C | B | B |
| Wet coating metho | Initial contact angle | Water | A | A | A | A | A | A | B | A | A |
| | | n-hexane | A | A | A | A | A | A | B | A | A |
| | Wear resistance | | 15000 | 15000 | 15000 | 15000 | 15000 | 15000 | 15000 | 5000 | 5000 |

| Compound | | | XIX | XX | XXI | XXII | XXIII | XXIV |
|---|---|---|---|---|---|---|---|---|
| Dry coating method | Initial contact angle | Water | A | A | A | A | A | A |
| | | n-hexane | A | A | A | A | A | A |
| | Wear resistance | | 15000 | 15000 | 15000 | 15000 | 15000 | 15000 |
| | Fingerprint stain removability | | A | A | A | A | A | A |
| Wet coating metho | Initial contact angle | Water | A | A | A | A | A | A |
| | | n-hexane | A | A | A | A | A | A |
| | Wear resistance | | 13000 | 15000 | 15000 | 15000 | 13000 | 15000 |

It is shown that the compounds I-XVI and the compounds XIX-XXIV containing a fluoropolyether chain and the group (g1) are excellent, especially in view of wear resistance, compared to the compounds XVII-XVIII.

### Industrial Applicability

The article including a surface layer containing the present compound is useful, as an example, for an optical article, a touch panel, an antireflection film, antireflection glass, SiO₂-treated glass, tempered glass, sapphire glass, a quartz substrate, mold metal, etc. used as a part of elements of the following products.

Products: car navigation systems, mobile phones, digital cameras, digital video cameras, personal digital assistant (PDA), portable audio players, car audio players, game consoles, eyeglass lenses, camera lenses, lens filters, sunglasses, medical instruments (e.g., gastroscopes), copiers, personal computers (PCs), LC displays, organic EL displays, plasma displays, touch panel displays, protective films, antireflective films, antireflective glasses, nano-imprinting templates, molds, etc.

This application is based upon and claims the benefit of priority from Japanese Patent Application No. 2021-178306, filed on October 29, 2021, the disclosure of which is incorporated herein in its entirety by reference.

### Reference Signs List

- 10: UNDERCOAT LAYER-PROVIDED SUBSTRATE
- 12: SUBSTRATE
- 14: UNDERCOAT LAYER
- 20: ARTICLE
- 22: SURFACE LAYER

## Claims

1. A compound having a fluoropolyether chain and a group represented by the following formula (g1):
*-R^{g1}-T^{g1} ··· (g1)
where
R^{g1} is an alkylene group in which an atom having a connecting bond * may be an etheric oxygen atom and that may contain an etheric oxygen atom between carbon-carbon atoms, R^{g1} containing a carbon chain with at least 9 carbon atoms linked together,
T^{g1} is -SiR^{a1}_{z1}R^{a2}_{3-z1},
R^{a1} is a hydroxyl group or a hydrolyzable group, and when there are a plurality of R^{a1}'s, the plurality of R^{a1}'s may be the same as or different from each other,
R^{a2} is a nonhydrolyzable group, and when there are a plurality of R^{a2}'s, the plurality of R^{a2}'s may be the same as or different from each other,
z1 is an integer from 1 to 3, and
* is a connecting bond bonded to the fluoropolyether chain directly or bonded to it via a linking group.

2. The compound according to claim 1, wherein the R^{g1} is a group represented by the following formula (g2).
*-(O)ₐ₁-R^{g9}-** ··· (g2)
where
R^{g9} is an alkylene group having at least 9 carbon atoms,
a1 is 0 or 1,
* is a connecting bond bonded to the fluoropolyether chain directly or bonded to it via a linking group, and
** is a connecting bond bonded to T^{g1} in the formula (g1).

3. The compound according to claim 2, wherein the R^{g9} is an alkylene group having at least 11 carbon atoms.

4. The compound according to claim 2 or 3, wherein the R^{g9} is an alkylene group having at most 19 carbon atoms.

5. The compound according to any one of claims 2 to 4, wherein the alkylene group in the R^{g9} is a linear alkylene group.

6. The compound according to any one of claims 1 to 5, the compound being represented by the following formula (A1), the following formula (A2), or the following formula (A3).
[R^{f1}-(OR^{f11})_{y1}-O-R¹]ⱼ-L¹-(R¹¹-T¹¹)ₓ₁ ··· (A1)
(T³¹-R³¹)ₓ₃-L³-R³-(OR^{f12})_{y2}-O-R²-L²-(R²¹-T²¹)ₓ₂ ··· (A2)
Q¹[-(OR^{f13})_{y3}-O-R⁴-L⁴-(R⁴¹-T⁴¹)ₓ₄]ᵣ₁ ··· (A3)
where
R^{f1} is a fluoroalkyl group having 1 to 20 carbon atoms, and when there are a plurality of R^{f1}'s, the plurality of R^{f1}'s may be the same as or different from each other,
R^{f11} is a fluoroalkylene group having 1 to 6 carbon atoms, and when there are a plurality of R^{f11}'s, the plurality of R^{f11}'s may be the same as or different from each other,
R¹ is an alkylene group or a fluoroalkylene group, and when there are a plurality of R¹'s, the plurality of R¹'s may be the same as or different from each other,
L¹ is a single bond or a j+x1 valent group that may contain N, O, S, or Si and may contain a branch point, and atoms bonded to R¹ and R¹¹ are each independently an N, O, S, or Si atom, a carbon atom constituting a branch point, or a carbon atom having a hydroxyl group or an oxo group (=O),
R¹¹ is an alkylene group in which an atom bonded to L¹ may be an etheric oxygen atom and that may contain an etheric oxygen atom between carbon-carbon atoms, and when there are a plurality of R¹¹'s, the plurality of R¹¹'s may be the same as or different from each other, where at least one of the plurality of R¹¹'s has a carbon chain with at least 9 carbon atoms linked together,
T¹¹ is -SiR^{a11}_{z11}R^{a12}_{3-z11}, and when there are a plurality of T¹¹'s, the plurality of T¹¹'s may be the same as or different from each other,
R^{a11} is a hydroxyl group or a hydrolyzable group, and when there are a plurality of R^{a11}'s, the plurality of R^{a11}'s may be the same as or different from each other,
R^{a12} is a nonhydrolyzable group, and when there are a plurality of R^{a12}'s, the plurality of R^{a12}'s may be the same as or different from each other,
j is an integer of at least 1,
z11 is an integer from 1 to 3,
x1 is an integer of at least 1,
y1 is an integer of at least 1, and when there are a plurality of y1's, the plurality of y1's may be the same as or different from each other,
R^{f12} is a fluoroalkylene group having 1 to 6 carbon atoms, and when there are a plurality of R^{f12}'s, the plurality of R^{f12}'s may be the same as or different from each other,
R² and R³ are each independently an alkylene group or a fluoroalkylene group,
L² is a single bond or a 1+x2 valent group that may contain N, O, S, or Si and may contain a branch point, and atoms bonded to R² and R²¹ are each independently an N, O, S, or Si atom, a carbon atom constituting a branch point, or a carbon atom having a hydroxyl group or an oxo group (=O),
L³ is a single bond or a 1+x3 valent group that may contain N, O, S, or Si and may contain a branch point, and atoms bonded to R³ and R³¹ are each independently an N, O, S, or Si atom, a carbon atom constituting a branch point, or a carbon atom having a hydroxyl group or an oxo group (=O),
R²¹ is an alkylene group in which an atom adjacent to L² may be an etheric oxygen atom and that may contain an etheric oxygen atom between carbon-carbon atoms, and when there are a plurality of R²¹'s, the plurality of R²¹'s may be the same as or different from each other,
R³¹ is an alkylene group in which an atom adjacent to L³ may be an etheric oxygen atom and that may contain an etheric oxygen atom between carbon-carbon atoms, and when there are a plurality of R³¹'s, the plurality of R³¹'s may be the same as or different from each other, where at least one of the plurality of R²¹'s or R³¹'s has a carbon chain with at least 9 carbon atoms linked together,
T²¹ and T³¹ are each independently -SiR^{a21}_{z21}R^{a22}_{3-z21}, and when there are a plurality of T²¹'s or T³¹'s, the plurality of T²¹'s and T³¹'s may each independently be the same as or different from each other,
R^{a21} is a hydroxyl group or a hydrolyzable group, and when there are a plurality of R^{a21}'s, the plurality of R^{a21}'s may be the same as or different from each other,
R^{a22} is a nonhydrolyzable group, and when there are a plurality of R^{a22}'s, the plurality of R^{a22}'s may be the same as or different from each other,
z21 is an integer from 1 to 3,
x2 and x3 are each independently an integer of at least 1,
y2 is an integer of at least 1,
Q¹ is an r1 valent group having a branch point,
R^{f13} is a fluoroalkylene group having 1 to 6 carbon atoms, and when there are a plurality of R^{f13}'s, the plurality of R^{f13}'s may be the same as or different from each other,
R⁴ are each independently an alkylene group or a fluoroalkylene group, and when there are a plurality of R⁴'s, the plurality of R⁴'s may be the same as or different from each other,
L⁴ is a single bond or a 1+x4 valent group which may contain N, O, S, or Si and may contain a branch point, atoms bonded to R⁴ and R⁴¹ are each independently an N, O, S, or Si atom, a carbon atom constituting a branch point, or a carbon atom having a hydroxyl group or an oxo group (=O), and when there a plurality of L⁴'s, the plurality of L⁴'s may be the same as or different from each other,
R⁴¹ is an alkylene group in which an atom adjacent to L⁴ may be an etheric oxygen atom and that may contain an etheric oxygen atom between carbon-carbon atoms, and when there are a plurality of R⁴¹'s, the plurality of R¹¹'s may may be the same as or different from each other, where at least one of the plurality of R⁴¹'s contains a carbon chain with at least 9 carbon atoms linked together,
T⁴¹ is -SiR^{a41}_{z41}R^{a42}_{3-z41}, and when there are a plurality of T⁴¹'s, the plurality of T⁴¹'s may be the same as or different from each other,
R^{a41} is a hydroxyl group or a hydrolyzable group, and when there are a plurality of R^{a41}'s, the plurality of R^{a41}'s may be the same as or different from each other,
R^{a42} is a nonhydrolyzable group, and when there are a plurality of R^{a42}'s, the plurality of R^{a42}'s may be the same as or different from each other,
z41 is an integer from 1 to 3,
x41 is an integer of at least 1, and when there are a plurality of x41's, the plurality of x41's may be the same as or different from each other,
y3 is an integer of at least 1, and when there are a plurality of y3's, the plurality of y3's may be the same as or different from each other, and
r1 is 3 or 4.

7. A composition containing the compound according to any one of claims 1 to 6 and another fluorinated compound.

8. A surface treatment agent comprising the compound according to any one of claims 1 to 6 or the composition according to claim 7.

9. A coating liquid comprising the compound according to any one of claims 1 to 6 or the composition according to claim 7, and a liquid medium.

10. An article including a surface layer formed of the compound according to any one of claims 1 to 6, the composition according to claim 7, or the surface treatment agent according to claim 8 on a surface of a substrate.

11. A method for producing an article, wherein a surface layer is formed by a dry coating method or a wet coating method using the compound according to any one of claims 1 to 6, the composition according to claim 7, the surface treatment agent according to claim 8, or the coating liquid according to claim 9.

12. A compound including a fluoropolyether chain and a group represented by the following formula (g2):
*-R^{g2}-CH=CH₂ ··· (g2)
where
R^{g2} is an alkylene group in which an atom having a connecting bond * may be an etheric oxygen atom and that may contain an etheric oxygen atom between carbon-carbon atoms, R^{g2} containing, either alone or in combination with -CH=CH₂, a carbon chain with at least 9 carbon atoms linked together, and
* is a connecting bond bonded to the fluoropolyether chain directly or bonded to it via a linking group.
